# EUROPÄISCHE PATENTSCHRIFT

(11) **EP 3 910 430 B1**
(45) Veröffentlichungstag und Bekanntmachung des Hinweises auf die Patenterteilung: **21.12.2022**
(21) Anmeldenummer: 21172992.6
(22) Anmeldetag: 10.05.2021
(51) Int. Cl.: G05B 15/02, E04F 15/00

(54) **VERFAHREN ZUR ZUORDNUNG EINER POSITION EINES BELAGSELEMENTES IN BEZUG ZU EINEM RÄUMLICHEN BEZUGSPUNKT**
METHOD FOR ASSIGNING A POSITION OF A LINING ELEMENT WITH RESPECT TO A SPATIAL REFERENCE POINT
PROCÉDÉ D'AFFECTATION D'UNE POSITION D'UN ÉLÉMENT DE COUVERTURE PAR RAPPORT À UN POINT DE RÉFÉRENCE SPATIAL

(30) Priorität: 11.05.2020 DE 102020002784
(43) Veröffentlichungstag der Anmeldung: 17.11.2021
(73) Patentinhaber: Parador GmbH, 48653 Coesfeld (DE)
(72) Erfinder: Petersen, Frank, 48653 Coesfeld (DE)
(74) Vertreter: Weidener, Jörg Michael

(56) Entgegenhaltungen:
- EP-A1- 3 156 856
- EP-A1- 3 156 858
- EP-A1- 3 457 227
- US-A1- 2019 294 018

## Beschreibung

Die Erfindung betrifft ein Verfahren zur Zuordnung einer Position in Bezug zu einem räumlichen Bezugspunkt von wenigstens einem Belagselement eines Belags zur Einbindung in ein Steuerungssystem, wobei das Belagselement eine eine elektrische Funktionalität aufweisende Funktionseinheit aufweist.

Im Stand der Technik ist es bekannt, Belagselemente eines Belages, insbesondere eines Bodenbelages, in ein Steuerungssystem einzubinden. Das Steuerungssystem kann letztlich zur Steuerung von unterschiedlichen Gebäudefunktionen oder dergleichen vorgesehen sein und insbesondere als sogenanntes "Smart-Home-System" ausgebildet sein. In der Praxis ist es ferner bekannt, dass die Belagselemente eine elektrische Funktionseinheit, wie beispielsweise einen Sensor, aufweisen und eine Datenübertragung ausgehend von dem Belagselement zu dem Steuerungssystem vorgesehen ist. Die vom Belagselement aufgenommenen Messdaten können dann zur Steuerung von weiteren Funktionen bzw. Aktionen eingesetzt werden.

Jedoch ergibt sich im Stand der Technik die Problematik, dass das Steuerungssystem keine räumliche Zuordnung der vom Belagselement empfangenen Belagsinformationen bzw. Belagssignale vornehmen kann. So ist dem Steuerungssystem nicht bekannt, an welcher Stelle bzw. welchen Ort (das heißt an welcher Position) das Belagselement angeordnet bzw. verlegt ist. Die durchgeführten Funktionen des Steuerungssystems können somit den Ort bzw. die Position des Belgaselementes nicht berücksichtigen. Im Stand der Technik wird beispielsweise diese Problematik dadurch gelöst, dass das Steuerungssystem eine Vielzahl von Steuerungsvorrichtungen aufweist, wobei die Steuerungsvorrichtungen einzelnen Räumen zugeordnet sind. Diese Steuerungsvorrichtungen können von einer definierten und vorgebbaren Anzahl von Belagselementen Signale empfangen. Somit "weiß" die Steuereinrichtung, dass das empfangene Belagssignal beispielsweise aus dem "Raum 3" (Küche) stammen muss.

Die US 2019/0294018 A1 betrifft ein Verfahren, ein System und ein Computerprogrammprodukt zur Erzeugung einer graphischen Benutzeroberfläche zur Bereitstellung von Informationen und zur Steuerung optisch schaltbarer Fenster, die über ein Netzwerk verbunden sind.

Die EP 3 457 227 A1 betriff ein System von Haushaltsgeräten zum Bereitstellen von Diensten entsprechend der Benutzeridentität, wobei das System ein erstes Gerät umfasst, was so konfiguriert ist, dass es Sensordaten sammelt, die einer Identität eines Benutzers zugeordnet sind.

Die EP 3 156 858 A1 betrifft die Inbetriebnahme von Sensoren und Aktoren in Gebäuden.

Die EP 3 156 856 A1 betrifft eine Gebäudeautomation für ein Gebäude mit technischen Vorrichtungen in physikalischen Zonen unter Verwendung einer Datenstruktur mit Vorrichtung-Zu-Zone-Zuweisung durch Bildverarbeitung.

Aufgabe der vorliegenden Erfindung ist es daher, die vorgenannten Nachteile des Standes der Technik zu vermeiden oder aber zumindest im Wesentlichen zu reduzieren.

Erfindungsgemäß wird die vorgenannte Aufgabe durch ein Verfahren zur Zuordnung einer Position in Bezug zu einem räumlichen Bezugspunkt von wenigstens einem Belagselement eines Belages zur Einbindung in ein Steuerungssystem gelöst. Das Belagselement kann eine eine elektrische Funktionalität aufweisende Funktionseinheit aufweisen. Erfindungsgemäß ist vorgesehen, dass der Steuerungsvorrichtung, vorzugsweise drahtlos, ein Zuordnungssignal übermittelt wird, das das wenigstens eine Belagselement charakterisiert. Nach Empfangen dieses Zuordnungssignals bestimmt und/oder ermittelt sowie speichert die Steuerungsvorrichtung die Bezugsposition bzw. Position des Belagselementes, insbesondere unter Verwendung und/oder Verarbeitung des Zuordnungssignals.

Erfindungsgemäß ist das Belagselement als Plattenkörper für einen Bodenbelag mit einer Trägerplatte und einer oberseitigen Deckschicht oberhalb von der Trägerplatte ausgebildet.

Erfindungsgemäß ist vorgesehen, dass die die jeweilige Funktionseinheit aufweisenden Belagselemente nacheinander mit Energie, insbesondere Strom, versorgt werden. Dies kann vorzugsweise während der Verlegung der Belagselement und/oder nach der Verlegung der Belagselemente erfolgen. Die Belagselemente können in diesem Zusammenhang elektrisch miteinander kontaktierend verbunden sein, in weiteren Ausführungsformen können sie jedoch auch nicht-elektrisch kontaktierend miteinander verbunden sein. Es ist auch denkbar, dass zwischen den Belagselementen weitere Belagselemente angeordnet sind, die keine elektrische Funktionalität aufweisen.

Während der Verlegung kann die Positionszuordnung derart erfolgen, dass die Belagselemente nacheinander elektrisch miteinander verbunden werden, insbesondere so dass sie sukzessiv mit elektrischer Energie versorgt werden. Dies kann wiederrum zur sukzessiven Aussendung der Zuordnungssignale führen.

Vorzugsweise kann die Funktionseinheit als Funktionsschicht und/oder als Funktionsfolie ausgebildet sein. Darüber hinaus kann die Funktionseinheit elektrische Mittel, wie Messeinrichtungen, Leiterbahnen, Aktoren, Übertragungsmittel zur vorzugsweise drahtlosen Informationsübertragung und/oder Verarbeitungseinrichtungen, aufweisen. Insbesondere kann wenigstens ein elektrisches Mittel der Funktionseinheit und/oder die Funktionseinheit, zumindest abschnittsweise, gedruckt worden sein. Insbesondere kann die Verarbeitungseinrichtung der Funktionseinheit zur Kommunikation mit der Steuerungsvorrichtung ausgebildet sein, vorzugsweise zur Übermittlung von Belagssignalen des Belagselementes an die Steuerungsvorrichtung.

Insbesondere kann das Verfahren als Initialisierungsverfahren angesehen werden, wobei den einzelnen Belagselementen in der Steuerungsvorrichtung räumliche Bezugspunkte bzw. -positionen zugewiesen werden. Als Bezugspunkt ist letztlich ein Zuordnungspunkt vorgesehen, der den Bezug zu einer Fläche oder zu einem dreidimensionalen Raum herstellt und/oder ermöglicht. Demzufolge ist die Steuerungsvorrichtung insbesondere dazu ausgebildet, den genauen Ort bzw. Verlegeort des Belagselementes zu erkennen.

Bei den weiteren Belagselementen des Belages kann vorgesehen sein, dass diese keine elektrische Funktionalität aufweisen müssen. Somit ist in dem Belag wenigstens ein Belagselement mit einer elektrischen Funktionseinheit integriert, wobei weitere Belagselemente des Belages eine Funktionseinheit aufweisen können, jedoch nicht aufweisen müssen.

Die von der Steuerungsvorrichtung bestimmten Positionen der funktionalen Belagselemente bzw. Plattenelemente werden von der Steuerungsvorrichtung derart verarbeitet, dass diese insbesondere graphisch und/oder textbasiert in einen Lageplan aufgenommen - das heißt dort gespeichert - werden können. Sobald das Verfahren zur Zuordnung der Positionen der Belagselemente abgeschlossen ist, kann das Steuerungssystem, insbesondere die Steuerungsvorrichtung, nach Empfangen eines Belagssignals - d.h. insbesondere eines Belagssignals, das nicht das Zuordnungssignal ist - des Belagselementes diesem Belagssignal auch die Position des Belagselementes zuweisen, was bei der Ausführung von Funktionen oder dergleichen berücksichtigt werden kann. Die Zuweisung der Position ist insbesondere derart zu verstehen, dass der Ursprung des Belagssignals anhand der Positionszuordnung ermittelt werden kann. Insbesondere kann bei Verarbeiten des Belagssignals - nach erfolgreich durchgeführter Zuordnung der Positionen der Belagselemente - in unterschiedlichen Verarbeitungsvorgaben jeweils eine Berücksichtigung der Position des Belagselementes erfolgen.

Dabei kann die Position derart berücksichtigt werden, dass beispielsweise bestimmte Funktionen und/oder Aktionen erst von der Steuerungsvorrichtung bzw. dem Steuerungssystem initiiert werden, sofern die Position des Belagselementes mit der vorgegebenen Position übereinstimmt. Beispielsweise kann ein Alarm durch die Steuerungsvorrichtung und/oder eine Alarmeinrichtung ausgesendet werden, wenn der Steuerungsvorrichtung ein Belagssignal - insbesondere ein Belagssignal, dass der Steuerungsvorrichtung anzeigt, dass eine Person das Belagselement betreten hat - übermittelt wird. Dieser Alarm kann jedenfalls dann ausgelöst werden, wenn sich das Belagselement in einem bestimmten Bereich, vorzugsweise einem gesicherten Bereich, befindet. Sollte das Belagselement außerhalb dieses gesicherten Bereichs angeordnet sein, kann insbesondere kein Warnsignal übermittelt werden. Demzufolge wird dem Steuerungssystem erfindungsgemäß ermöglicht, bei der Initiierung von unterschiedlichen Funktionen ebenfalls die Position des Belagselementes, das das Belagssignal übermittelt, zu berücksichtigen.

Der durch das erfindungsgemäße Zuordnungsverfahren erzeugbare Lageplan der Belagselemente erleichtert demnach die Einbindung und/oder Nutzung der die Funktionseinheiten aufweisenden Belagselemente in smarten Systemen, wie Smart-Home-Systeme und/oder Gebäudemanagement-Systeme. Dies wird insbesondere dadurch ermöglicht, dass der Anwender die Zuordnung vornehmen kann. Die Steuerungsvorrichtung kann insbesondere als zentrale Steuerungsvorrichtung fungieren und die Eigenschaften eines sogenannten Gateways bereitstellen.

Insbesondere kann vorgesehen sein, dass die Steuerungsvorrichtung als Bezugspunkt für die Positionen der Belagselemente dient. So kann die Bezugsposition des Belagselementes relativ zu der Steuerungsvorrichtung und/oder dem Bezugspunkt angegeben werden. Vorzugsweise wird somit ermöglicht, dass in Kenntnis der Ortsposition der Steuerungsvorrichtung auch die absolute Position der Belagselemente ermittelbar ist, indem die relative Position des Belagselementes zu der Steuerungsvorrichtung mit der Ortsposition der Steuerungsvorrichtung selbst verknüpft wird.

Vorzugsweise kann das Verfahren zur Zuordnung erfindungsgemäß zumindest teilweise und/oder vollständig in einem Cloud-System durchgeführt werden. Somit kann die Verarbeitung und die Bestimmung sowie Speicherung der Bezugsposition des Belagselementes in dem Cloud-System durchgeführt werden. Demnach wird eine Schnittstelle zu einem Cloud-System ermöglicht, wobei im Cloud-System die Zuordnungssignale zum einen empfangen und zum anderen alternativ oder zusätzlich auch verarbeitet werden können.

Bei einer besonders bevorzugten Ausführungsform ist vorgesehen, dass das Belagselement ein Belagssignal als Zuordnungssignal an die Steuerungsvorrichtung des Steuerungssystems überträgt. Insbesondere kann das Belagselement das Belagssignal drahtlos an die Steuerungsvorrichtung übertragen. Die Steuerungsvorrichtung kann nach Empfangen des Belagssignals die Bezugsposition des Belagselementes bestimmen und speichern. Letztlich kann die Steuerungsvorrichtung mit dem Belagssignal die Position des Belagselementes ermitteln, insbesondere in Abhängigkeit von einem räumlichen Bezugspunkt. Als räumlicher Bezugspunkt können unterschiedliche, insbesondere ortsfeste, Punkte und/oder Standorte vorgesehen sein. Beispielsweise kann ein Belagselement als Bezugspunkt für weitere Belagselemente, deren Positionen relativ zu dem anderen Belagselement bestimmt werden sollen, dienen. Alternativ oder zusätzlich kann auch vorgesehen sein, dass ein ortsfester Bezugspunkt gewählt wird, insbesondere ein ortsfester Bezugspunkt in einem Raum. In diesem Zusammenhang würde sich beispielsweise ein Fenster, eine Tür oder dergleichen eignen. Relativ zu dem, insbesondere ortsfesten, Bezugspunkt kann dann die Bezugsposition bzw. Position des jeweiligen Belagselementes bestimmt werden.

Vorzugsweise kann der Bezugspunkt ein individuell festlegbarer, insbesondere ortsfester, räumlicher Ortspunkt sein. Beispielsweise kann der Mittelpunkt eines Raumes als Bezugspunkt oder auch jeder weiterer beliebiger Ortspunkt in dem Raum als Bezugspunkt dienen.

Sofern das Belagselement das Zuordnungssignal übermittelt, kann vorgesehen sein, dass durch Kommunikation zwischen der Steuerungsvorrichtung und dem Belagselement die Position des Belagselementes festgestellt wird. In diesem Zusammenhang versteht es sich insbesondere, dass das Belagssignal die Position des Belagselementes charakterisierende und/oder spezifizierende Informationen enthält. Diese Informationen können insbesondere relativ zu dem Bezugspunkt und/oder weiteren Orten angegeben werden. Letztlich kann mit dem Zuordnungssignal die Bezugsposition des Belagselementes bestimmt werden.

Darüber hinaus kann das Belagssignal eine das jeweilige Belagselement identifizierende Belagselement-Identifikationsinformation enthalten. Diese Belagselement-Identifikationsinformation kann insbesondere elektronisch in der Funktionseinheit und/oder einem Teil der Funktionseinheit hinterlegt sein, insbesondere wobei die Belagselement-Identifikationsinformation in einem Speicher einer Verarbeitungseinrichtung des Belagselementes hinterlegt sein kann. Alternativ oder zusätzlich kann diese Belagselement-Identifikationsinformation kann in der Steuerungsvorrichtung - gegebenenfalls verknüpft mit bzw. zu der Bezugsposition des jeweiligen Belagselementes - hinterlegt werden. Somit kann die Steuerungsvorrichtung durch die vorgenommene Zuordnung der Position des Belagselementes durch Verarbeitung der Belagselement-Identifikationsinformation diese bestimmte Position dem Belagselement zuzuweisen und bei der Verarbeitung eines weiteren Belagssignals berücksichtigen.

Vorzugsweise speichert die Steuerungsvorrichtung zusätzlich zur und/oder verknüpft mit der Position des jeweiligen Belagselementes eine Steuerungsvorrichtung-Identifikationsinformation. Die Steuerungsvorrichtung-Identifikationsinformation kann dem jeweiligen Belagselement zugewiesen werden. Insbesondere kann die Steuerungsvorrichtung durch Abgleich der Belagselement-Identifikationsinformation und der Steuerungsvorrichtung-Identifikationsinformation eine Ortsbestimmung und/oder Positionsbestimmung des Belagselementes durchführen.

Besonders bevorzugt ist, dass einer Mehrzahl von Belagselementen jeweils eine Position von der Steuerungsvorrichtung zugeordnet und in dieser gespeichert wird. Die Positionen können ferner auch Daten zu der relativen Position zu weiteren Belagselementen enthalten. So kann neben der Angabe zu einem ortsfesten Bezugspunkt auch eine Angabe zu der Entfernung zu weiteren Belagselementen der Steuerungsvorrichtung übermittelt werden und/oder in dieser hinterlegt sein.

Vorzugsweise ist vorgesehen, dass die Zuordnung der Positionen der Belagselemente bzw. der Position des Belagselementes nach der Verlegung der Belagselemente zur Bildung des Belags erfolgt. Somit kann zunächst der Belag mit dem wenigstens einen eine elektrische Funktionalität aufweisenden Belagselement verlegt werden und anschließend eine Zuordnung der Position erfolgen - d.h. eine anschließende Zuordnung der Position über das erfindungsgemäße Verfahren durchgeführt werden. Vorteilhaft ist hierbei, dass insbesondere nicht im Vorfeld bzw. vor Verlegung des Belags entschieden werden muss, an welchen Positionen das Belagselement verlegt werden muss. So kann der Belag - in Abhängigkeit des Kundenwunsches und/oder der räumlichen Ausgestaltung - verlegt werden. Auch kann ein einfacher Austausch des Belagselementes erfolgen, insbesondere falls dieses beschädigt sein sollte bzw. bei der Verlegung beschädigt wird.

Ferner ist vorgesehen, dass die Belagselemente vorzugsweise nicht-elektrisch kontaktierend, insbesondere isolierend, miteinander verbunden sind. Alternativ oder zusätzlich kann vorgesehen sein, dass die Belagselemente miteinander datenübertragungsfrei verbunden sind. Eine datenübertragungsfreie Verbindung kann derart vorgesehen sein, dass kein Informationsaustausch zwischen den Belagselementen erfolgt. Somit sind die Belagselemente insbesondere autark ausgebildet, vorzugsweise energieautark. Dabei wird keine zusätzliche elektrische Verkabelung oder aufwendige elektrische Verbindung der einzelnen Belagselemente benötigt. Dies ermöglicht ebenfalls, dass die Belagselemente mit weiteren Belagselementen, die insbesondere keine elektrische Funktionalität aufweisen, verbunden werden können. Als Verbindungsgeometrien kommen insbesondere sogenannte Nut-Feder-Verbindungsgeometrien der Belagselemente, aber auch Druckknopf- und/oder Bajonett-Verbindungsgeometrien in Frage. Letztlich können die Belagselemente mechanisch miteinander verbunden sein, wobei gleichzeitig sichergestellt werden kann, dass bei der Verbindung kein elektrischer Austausch vorgesehen ist bzw. die Belagselemente nicht-elektrisch miteinander kontaktierend verbunden sind.

Bei einer weiteren bevorzugten Ausführungsform des vorliegenden Erfindungsgedankens ist vorgesehen, dass die Belagselemente untereinander elektrisch miteinander verbunden sind. Beispielsweise kann die Funktionseinheit als Funktionsschicht ausgebildet sein, die vorzugsweise unterhalb einer Trägerplatte des Belagselementes angeordnet ist. Die Funktionsschichten einer Mehrzahl von Belagselementen können im verlegten Zustand elektrisch miteinander verbunden sein.

Die elektrische Kontaktierung kann zur Daten- und/oder Energieübertragung vorgesehen sein.

Bei einer weiteren bevorzugten Ausführungsform ist vorgesehen, dass eine Zuordnungseinrichtung das Zuordnungssignal für das eine Belagselement an die Steuerungsvorrichtung übermittelt und insbesondere bedarfsweise das Zuordnungssignal für das Belagselement erzeugt (beispielsweise durch Auslesen eines QR-Codes an der Oberfläche des Belagselementes). Die Zuordnungseinrichtung kann als mobiles Endgerät, insbesondere als Smartphone, Tablet oder dergleichen, ausgebildet sein. Des Weiteren kann die Zuordnungseinrichtung von einer Bedienperson bedient werden. Die Bedienperson kann demzufolge mittelbar der Steuerungsvorrichtung das Zuordnungssignal zur Bestimmung der Position des Belagselementes übermitteln. Insbesondere kann die Zuordnungseinrichtung die Position des Belagselementes der Steuerungsvorrichtung übermitteln.

Die Belagselement-Identifikationsinformation kann darüber hinaus beispielsweise durch einen QR-Code und/oder einen weiteren Code von der Zuordnungseinrichtung und/oder der Bedienperson ausgelesen werden und vorzugsweise gemeinsam mit dem Zuordnungssignal der Steuerungsvorrichtung übermittelt werden. Der QR-Code und/oder der weitere Code kann an dem Belagselement angebracht sein.

Es kann auch vorgesehen sein, dass die Position des Belagselementes als Zuordnungssignal an die Steuerungsvorrichtung übermittelt wird, bevor diese von diesem Belagselement ein Belagssignal erhält, so dass eine Zuordnung des Belagselementes in Abhängigkeit der empfangenen Information von der Zuordnungseinrichtung durchgeführt werden kann.

Letztlich ist die Zuordnungseinrichtung eine Schnittstelle zwischen der Steuerungsvorrichtung und einem Nutzer bzw. einem Verleger oder einem Nutzer des Smart-Home-Systems, mittels derer der Nutzer mit der Steuerungsvorrichtung zur Festlegung der Positionen des Belagselementes kommunizieren kann. Grundsätzlich könnte die Zuordnungseinrichtung auch Teil der Steuerungsvorrichtung sein, insbesondere als stationäre Eingabe an der Steuerungsvorrichtung angeordnet sein.

Insbesondere kann der Nutzer auch nach erfolgter Zuordnung des Belagselementes und/oder zur Positionszuordnung, insbesondere zur Initiierung der Aussendung eines Zuordnungssignals als Belagssignal, das Belagselement selbst aktivieren, beispielsweise indem er dieses betritt. In diesem Zusammenhang kann vorgesehen sein, dass das Belagselement einen Drucksensor zur Erfassung der Annäherung von Personen aufweist.

Insbesondere kann die Steuerungsvorrichtung die Position des wenigstens einen Belagselement derart speichern bzw. in ihr hinterlegen, dass eine Positionszuweisung des jeweiligen Belagselementes nach Empfangen des jeweiligen Belagssignals mittels der in dem Belagssignal enthaltenen Belagselement-Identifikationsinformation erfolgt. Insbesondere kann dies über einen Abgleich der Belagselement-Identifikationsinformation mit der Steuerungsvorrichtung-Identifikationsinformation erfolgen. Somit wird eine nachträgliche erneute Zuordnung des Belagselementes durch Empfangen des Belagssignals und insbesondere durch Verarbeitung des Belagssignals ermöglicht.

Die Belagselemente können, vorzugsweise unmittelbar, nach der Übermittlung von Energie an die Steuerungsvorrichtung das Belagssignal als Zuordnungssignal übermitteln. Grundsätzlich kann auch vorgesehen sein, dass zwischen der Übermittlung des Belagssignals und dem Empfangen von Energie ein zeitlicher Abstand vorgesehen ist. Das Belagselement kann vorzugsweise die Zuordnung der Positionen der Belagselemente entsprechend des Empfangszeitpunktes des jeweiligen Belagssignals festlegen. In diesem Zusammenhang versteht es sich, dass bei einer zeitlich verzögerten Übertragung des Belagssignals nach Empfangen der Energie ebenfalls eine Zuordnung der Positionen der Belagselemente erfolgt. Letztlich kann insbesondere die Steuerungsvorrichtung die einzelnen Belagselemente voneinander unterscheiden und/oder ihnen ihre jeweiligen Positionen zuordnen. Letztlich ermöglicht das Erfassen der Positionen der Belagselemente in Kombination mit der Energieversorgung der Belagselemente eine einfache Möglichkeit die einzelnen Belagselemente voneinander zu unterscheiden und die jeweiligen Positionen in der Steuerungsvorrichtung festzulegen.

Vorzugsweise wird bei der Zuordnung der Position eines Belagselementes bzw. bei der Zuordnung der Positionen der Belagselemente die bereits bestimmte Position wenigstens eines zugeordneten Belagselementes und/oder das bereits empfangene Zuordnungssignal, insbesondere das Belagssignal, von wenigstens einem zuzuordnenden Belagselement berücksichtigt. Demzufolge kann die Steuerungsvorrichtung, vorzugsweise bei der Bestimmung der Position des Belagselementes, die bereits bestimmte Position eines zugeordneten Belagselementes berücksichtigen und insbesondere die Positionen relativ zu dem Bezugspunkt und/oder relativ zu den Belagselementen zueinander speichern. Alternativ oder zusätzlich kann auch vorgesehen sein, dass bei der Bestimmung der Positionen der Belagselemente eine gleichzeitige Verarbeitung erfolgt, wobei eine Mehrzahl von Zuordnungssignalen verschiedener Belagselemente zur Bestimmung der jeweiligen Position des Belagselementes berücksichtigt werden. Auch in diesem Zusammenhang kann vorgesehen sein, dass die Positionen der Belagselemente relativ zueinander und/oder relativ zu einem Bezugspunkt, insbesondere relativ zu der Steuerungsvorrichtung, bestimmt werden.

Demnach kann ebenfalls wenigstens ein Zuordnungssignal, das beispielsweise als Belagssignal von dem Belagselement ausgesendet wird, eine Angabe zur relativen Entfernung zu einem zugeordneten und/oder zuzuordnenden Belagselement enthalten. Demzufolge kann zur Bestimmung der absoluten Position insbesondere lediglich notwendig sein, dass ein einziges Belagselement die relative Ortsangabe zu dem Bezugspunkt, insbesondere der Steuerungsvorrichtung, und/oder eine absolute Ortsangabe enthält. Die Positionen der anderen Belagselemente können von der Steuerungsvorrichtung durch Verknüpfung aller Daten zu den Ortsangaben ermittelt werden. So können relative Ortsangaben und/oder absolute Ortsangaben miteinander verbunden werden.

Absolute Ortsangaben können beispielsweise geographische Koordinaten, insbesondere bezogen auf ein Referenzellipsoid der Landvermessung und/oder die mittlere Erdkugel, GPS-Koordinaten und/oder Landeskoordinaten in Meter und/oder räumliche Koordinaten in einem kartesischen Koordinatensystem sein. Die relativen Koordinaten ermöglichen eine Bestimmung der Position des Belagselementes und sind insbesondere zur eindeutigen Bestimmung verwendbar. Vorzugsweise kann die Steuerungsvorrichtung die relativen Ortsangaben der Belagselemente in absolute Ortsangaben umrechnen.

Des Weiteren kann in einer weiteren bevorzugten Ausführungsform vorgesehen sein, dass die Steuerungsvorrichtung ein Steuerungssignal an das Belagselement überträgt. Dieses Steuerungssignal kann beispielsweise dazu genutzt werden, dass das Belagselement ein Zuordnungssignal an die Steuerungsvorrichtung überträgt, insbesondere nachdem das Belagselement für eine diesbezügliche Übertragung "aktiviert" worden ist. So kann das Belagselement von der Steuerungsvorrichtung gesteuert werden. Alternativ oder zusätzlich kann vorgesehen sein, dass das Steuerungssignal das Belagselement zur Aussendung eines Belagssignals an die Steuerungsvorrichtung ansteuert, wobei das Belagssignal beispielsweise Angaben zur relativen Position zu zuzuordnenden und/oder zugeordneten Belagselementen enthält und/oder absolute Ortsangaben.

Alternativ oder zusätzlich kann die Ortsangabe des Belagselement durch in der Steuerungsvorrichtung hinterlegte Informationen erfolgen. Insbesondere kann das als Zuordnungssignal fungierende Belagssignal, insbesondere nur, eine Belagselement-Identifikationsinformation, vorzugsweise eine MAC-Adresse, und die von einem Sensor der Funktionseinheit erfassten Sensor-Messwerte, bspw. die Amplitude des Piezo-Sensors, enthalten.

Vorzugsweise werden die Positionskoordinaten und/oder die Steuerungsvorrichtungs-Identifikationsinformation erst durch die Steuerungsvorrichtung festgelegt und insbesondere nur in der Steuerungsvorrichtung gespeichert. Die Steuerungsvorrichtung erhält also insbesondere nach Abschluss der Initiierung immer nur "einfache" weitere Belagssignale - insbesondere enthaltend eine Belagselement-Identifikationsinformation und/oder Sensor-Messwerte. Mittels dieses Belagssignals kann die Steuerungsvorrichtung die für die Belagselement-Identifikationsinformation hinterlegten Informationen der Steuerungsvorrichtung ermitteln, insbesondere wobei die entsprechenden hinterlegten Informationen mit dem Belagssignal gekoppelt werden und/oder insbesondere wobei das Belagssignal verarbeitet wird.

Zudem ist bei einer bevorzugten Ausführungsform des vorliegenden Erfindungsgedankens vorgesehen, dass die Steuerungsvorrichtung aus den Positionen bzw. aus der Position des bzw. der Belagselemente eine räumliche Abbildung, insbesondere eine Flächenabbildung, ermittelt. Diese räumliche Abbildung kann in der Steuerungsvorrichtung gespeichert sein und insbesondere zur Bestimmung der Positionen der Belagselemente und/oder zur Darstellung der Positionen der Belagselemente dienen. In dieser räumlichen Abbildung können demzufolge die Bezugspositionen eindeutig bestimmbar für die einzelnen Belagselemente hinterlegt sein. Die räumliche Abbildung ist vorzugsweise für den Anwender zur graphischen Darstellung der verlegten Belagselemente vorgesehen, vorzugsweise kann dies vom Anwender zur Programmierung der Belagselemente genutzt werden.

Alternativ oder zusätzlich kann vorgesehen sein, dass die Steuerungsvorrichtung den Positionen jeweils Positionen in der Steuerungsvorrichtung hinterlegten räumlichen Abbildung, insbesondere einer Flächenabbildung, zuordnet bzw. diese damit verknüpft.

Besonders bevorzugt ist vorgesehen, dass die Positionen der Belagselemente für eine rasterartige Darstellung in der Steuerungsvorrichtung gespeichert werden. Die rasterartige Darstellung kann die relative Ortsangabe der Belagselemente zueinander und/oder zu dem Bezugspunkt, insbesondere der Steuerungsvorrichtung, berücksichtigen. Die rasterartige Hinterlegung in der Steuerungsvorrichtung ermöglicht eine einfache Zuordnung der einzelnen Belagselemente zu ihren jeweiligen Positionen.

Vorzugsweise ist vorgesehen, dass wenigstens einem Belagselement Geodaten zugewiesen werden, die an die Steuerungsvorrichtung mit dem Zuordnungssignal, vorzugsweise dem Belagssignal, übertragen werden können. Insbesondere kann das Belagselement eine Messeinrichtung aufweisen, die die diesbezüglichen Geodaten bestimmt. Weiter kann vorgesehen sein, dass die Geodaten von einer weiteren Einrichtung bestimmt und der Steuerungsvorrichtung übermittelt werden. Die Geodaten ermöglichen eine absolute Ortsangabe der Position des Belagselementes. Auf Grundlage der Geodaten des wenigstens einen Belagselementes wird insbesondere die Zuordnung der Positionen der zuzuordnenden und/oder zugeordneten Belagselemente durchgeführt. So können die zuzuordnenden und/oder zugeordneten Belagselemente lediglich eine relative Angabe zu dem Belagselement enthalten, das von der Steuerungsvorrichtung mittels der Geodaten identifizierbar ist. Somit wird insbesondere eine Identifikation bzw. eine absolute Ortsangabe aller Belagselemente, die zugeordnet werden sollen, ermöglicht.

Darüber hinaus kann bei einer weiteren bevorzugten Ausführungsform vorgesehen sein, dass die Steuerungsvorrichtung bei der Ermittlung der Position des Belagselementes weitere Parameter, insbesondere die Abmaße des Belagselementes, die Größe des Belages oder dergleichen, berücksichtigt. Somit kann die Steuerungsvorrichtung, insbesondere bei der Verknüpfung der Positionen der Belagselemente zueinander, die Abmaße der Belagselemente und/oder den Abstand der Belagselemente zueinander berücksichtigen. Auch kann die Größe eines Raumes und/oder die Größe der Fläche, auf der der Belag verlegt ist, berücksichtigt werden. Dies kann insbesondere in der Steuerungsvorrichtung zur Ermittlung der Position relativ zum Bezugspunkt, insbesondere relativ zu der Steuerungsvorrichtung, berücksichtigt werden.

Das das Belagselement charakterisierende Zuordnungssignal kann vorzugsweise mittels drahtloser Übertragungstechnologien an die Steuerungsvorrichtung übertragen werden. Besonders bevorzugt ist vorgesehen, dass das Zuordnungssignal an die Steuerungsvorrichtung mittels Bluetooth-, VLC-, WLAN-, ZigBee, NFC, Wibree, WiMAX, Z-Wave-, Ultraschall-, Infrarot- und/oder Laser-Übertragung übermittelt wird. Vorzugsweise kann der Steuerungsvorrichtung von dem Belagselement und/oder von der Zuordnungseinrichtung dieses Zuordnungssignal mittels der vorgenannten Übertragungstechnologien übermittelt werden. Demzufolge kann ermöglicht werden, dass eine Kabelverbindung zwischen dem Belagselement und/oder der Zuordnungseinrichtung sowie der Steuerungsvorrichtung entfallen kann. Grundsätzlich kann in weiteren Ausführungsformen auch eine Kabelverbindung genutzt werden.

Alternativ oder zusätzlich kann vorgesehen sein, dass die Übertragung des Belagssignals und/oder des Zuordnungssignals, insbesondere ausgehend von dem Belagselement und/oder der Zuordnungseinrichtung, mittels optischer und/oder elektromagnetischer Informationsübertragung erfolgt. Beispielsweise kann in diesem Zusammenhang eine RFID-Technologie genutzt werden. Auch kann vorgesehen sein, dass die einzelnen Belagselemente einen optischen Hinweis aufweisen, insbesondere eine Beschriftung. Diese optische Information kann dann genutzt werden, um beispielsweise von der Zuordnungseinrichtung an die Steuerungsvorrichtung mit dem Zuordnungssignal übertragen zu werden. Es kann auch vorgesehen sein, dass das Belagselement einen Barcode und/oder einen QR-Code enthält, der mittels der Zuordnungseinrichtung ausgelesen wird und dessen die Position und/oder das Belagselement charakterisierende Information mit dem Zuordnungssignal von der Zuordnungseinrichtung an die Steuerungsvorrichtung übertragen werden kann.

Bei einer weiteren ganz besonders bevorzugten Ausführungsform ist vorgesehen, dass das Belagselement, insbesondere die Funktionseinheit, wenigstens einen Sensor zur Ermittlung einer physikalischen und/oder chemischen Eigenschaft aufweist. Die vom Sensor erfassten Messdaten können insbesondere mit dem Belagssignal an die Steuerungsvorrichtung übertragen werden. Insbesondere kann vorgesehen sein, dass der Sensor auch zur Ermittlung von absoluten und/oder relativen Ortsangaben, insbesondere in Bezug zu dem Bezugspunkt, vorzugsweise der Steuerungsvorrichtung, und/oder in Bezug zu weiteren zuzuordnenden und/oder zugeordneten Belagselementen, ausgebildet ist.

Darüber hinaus ist weiter bevorzugt vorgesehen, dass dem wenigstens einen Sensor des Belagselementes von der Steuerungsvorrichtung eine Sensor-Bezugsposition zugeordnet wird. Demzufolge kann vorzugsweise vorgesehen sein, dass in der Steuerungsvorrichtung auch die Position des Sensors, der in dem Belagselement integriert ist, eindeutig spezifizierbar ist. Besonders vorteilhaft ist dies, sofern das Belagselement eine Mehrzahl von Sensoren enthält, denen jeweils eine Bezugsposition zugeordnet werden kann. Darüber hinaus kann auch bei größeren Belagselementen durch die Zuordnung der Sensor-Bezugsinformation, die insbesondere in der Steuerungsvorrichtung gespeichert werden kann, eine relative und/oder absolute Ortsangabe des Sensors ermöglicht werden.

Weiter bevorzugt ist, dass die im Belagssignal enthaltenen und an die Steuerungsvorrichtung mit dem Belagssignal übertragenen Messdaten des wenigstens einen Sensors des Belagselementes mit einer Sensor-Identifikationsinformation verknüpft sind, die von der Steuerungsvorrichtung zur Identifikation des Sensors ausgewertet wird. Dies ermöglicht die nachträgliche Zuordnung der Position des Sensors mittels der Steuerungsvorrichtung. Alternativ oder zusätzlich kann den Sensoren auch im Zuge des Initiierungsverfahrens der Belagselemente eine Position zugeordnet werden. Die Sensor-Identifikationsinformation könnte insbesondere mit der Belagselement-Identifikationsinformation und/oder der Position des jeweiligen Sensors in der Steuerungsvorrichtung verknüpft werden.

Des Weiteren betrifft die vorliegende Erfindung vorzugsweise ein Steuerungssystem, das zur Durchführung des erfindungsgemäßen Verfahrens zur Zuordnung ausgebildet ist.

In diesem Zusammenhang versteht es sich, dass im Hinblick auf bevorzugte Ausführungsformen und/oder Vorteile auf das vorherige Vorbringen verwiesen werden darf. Das erfindungsgemäße Steuerungssystem, in das sowohl das Belagselement als auch die Steuerungsvorrichtung eingebunden sind, ermöglicht eine Angabe der Position des Belagselementes nach erfolgter Zuordnung. In dem erfindungsgemäßen Steuerungssystem können demzufolge die absoluten und/oder relativen Ortsangaben einzelnen Belagselementen zugeordnet werden, die eine elektrische Funktionalität aufweisen.

Es kann ein Verfahren zur Zuordnung einer Position in Bezug zu einem räumlichen Bezugspunkt von wenigstens einem Belagselement eines Belages zur Einbindung in ein Steuerungssystem vorgesehen sein, wobei das Belagselement eine eine elektrische Funktionalität aufweisende Funktionseinheit aufweist, wobei das Belagselement entsprechend eines vorgegebenen und in der Steuerungsvorrichtung hinterlegten Verlegeplans und entsprechend der dem Belagselement zugeordneten Position zur Bildung des Belags verlegt wird.

Durch das vorgenannte Verfahren wird ermöglicht, dass anstelle eines Zuordnungssignals die Zuordnung der Position des Belagselementes durch einen zuvor vorgegebenen Verlegeplan des Belages bestimmt wird. Dies ermöglicht eine einfache Bestimmung der Positionen der Belagselemente, da diese letztlich zuvor vorgegeben sein können.

Vorzugsweise kann auch der Verlegeplan von der Steuerungsvorrichtung erstellt werden, insbesondere nachdem dieser entsprechende Informationen übermittelt worden sind, wie beispielsweise die Raumgröße und/oder die Fläche des zu verlegenden Belages und/oder die Anzahl und/oder die Belagselement-Identifikationsinformation der eine elektrische Funktionalität aufweisenden Belagselemente und die Anzahl der weiteren Belagselemente, die insbesondere keine elektrische Funktionalität aufweisen. Zudem kann bei dem Verlegeplan von der Steuerungsvorrichtung berücksichtigt werden, welche Abmaße die Belagselemente und/oder die weiteren Belagselemente haben. Zudem können gewünschte Positionen der Belagselemente ebenfalls berücksichtigt werden, beispielsweise sofern ein Belagselement in der Nähe einer Tür oder dergleichen angeordnet werden soll.

Es versteht sich, dass im Hinblick auf Vorteile und bevorzugte Ausführungsformen auf die vorherigen Ausführungen verwiesen werden darf, die auch für das erfindungsgemäße Zuordnungsverfahren unter Verwendung des Verlegeplans gelten können.

Bei einer bevorzugten Ausführungsform des Verfahrens ist vorgesehen, dass die Steuerungsvorrichtung entsprechend der Fläche des zu verlegenden Belages den Verlegeplan für die Belagselemente und/oder für die weiteren - keine elektrische Funktionalität aufweisenden - Belagselemente erstellt. Demzufolge kann der Steuerungsvorrichtung vorgegeben werden, wieviel "smarte" bzw. eine elektrische Funktionseinheit aufweisende Belagselemente in den Belag integriert werden sollen. Alternativ oder zusätzlich kann auch vorgesehen sein, dass der Verlegeplan außerhalb der Steuerungsvorrichtung erstellt und vor und/oder nach Verlegung der Belagselemente und/oder des Belages der Verlegeplan der Steuerungsvorrichtung übermittelt wird.

Vorzugsweise können die in der Steuerungsvorrichtung hinterlegten Positionszuordnungen der Belagselemente auch teilweise und/oder vollständig verändert und/oder angepasst werden, insbesondere dann, wenn weitere Belagselemente mit Funktionseinheiten in den Belag integriert und/oder die Positionen von Belagselementen mit den jeweiligen Funktionseinheiten verändert werden sollen.

Darüber hinaus darf noch auch folgende Aspekte der vorliegenden Erfindung verwiesen werden, die jeweils mit wenigstens einer der zuvor beschriebenen Ausführungsformen kombinierbar sind und/oder vorzugsweise unabhängige Erfindungsaspekte darstellen, denen bereits für sich eine erfinderische Tätigkeit zukommt:
Bei einer bevorzugten Ausgestaltung des Erfindungsgedankens ist ein Steuerungssystem, insbesondere für Gebäude, mit einer Steuerungsvorrichtung und wenigstens einem Belagselement eines Belages vorgesehen, wobei das Belagselement wenigstens einen, insbesondere mit der Steuerungsvorrichtung gekoppelten, Sensor zur Erfassung einer chemischen und/oder physikalischen Eigenschaft zur Erzeugung eines Belagssignals aufweist. Die Steuerungsvorrichtung weist ferner eine Mehrzahl von unterschiedlichen Systemmodi zur Ausführung von unterschiedlichen Funktionen, insbesondere von externen Funktionen, auf.

Extern ausgeführte Funktionen können auch als Aktionen bezeichnet werden und umfassen insbesondere die Änderung eines Betriebszustandes und/oder die Aktivierung eines Gerätes, das in dem Steuerungssystem (bevorzugt als Smart-Home-Steuerungssystem ausgebildet) integriert ist.

Vorzugsweise ist der Systemmodus, bevorzugt kontinuierlich, konfigurierbar - insbesondere in Abhängigkeit von den Bedürfnissen bzw. Wünschen des Nutzers.

Der Steuerungsvorrichtung ist wenigstens eine Auswahleinrichtung zur Auswahl der einzelnen Systemmodi zugeordnet. Dabei kann die Auswahleinrichtung in der Steuerungsvorrichtung integriert oder als externe Einrichtung vorgesehen sein. Die Steuerungsvorrichtung ist derart ausgebildet, dass das Belagssignal die Ausführung von der dem ausgewählten Systemmodus zugeordneten wenigstens einen Funktion oder Aktion initiiert. Insbesondere ist eine Initiierung von der jeweiligen Funktion so zu verstehen, dass das Belagssignal derart an die Steuerungsvorrichtung übertragen und von dieser analysiert werden kann, dass die Steuerungsvorrichtung nach Empfangen des Belagssignals die Ausführung von der dem ausgewählten Systemmodus zugeordneten wenigstens einen Funktion initiiert, insbesondere durch Aussendung eines diesbezüglichen Steuerungssignals.

Als Systemmodus ist im Sinne der vorliegenden Erfindung insbesondere eine in der Steuerungsvorrichtung hinterlegte Verarbeitungsvorgabe, insbesondere eine Software, zu verstehen, die derart ausgebildet sein kann, dass in Abhängigkeit von dem Belagssignal eine bestimmte Funktion initiiert werden kann, insbesondere nach Empfangen des Belagssignals. Zudem weist die Steuerungsvorrichtung vorzugsweise wenigstens einen ersten Systemmodus und einen zweiten Systemmodus auf.

Ferner kann der erste Systemmodus beispielsweise wenigstens eine erste Funktion initiieren, wobei der zweite Systemmodus eine sich von der ersten Funktion unterscheidende zweite Funktion initiieren kann. Somit können, insbesondere bei einem gleich ausgebildeten Belagssignal, in Abhängigkeit von dem durch die Auswahleinrichtung ausgewählten Systemmodus zwei voneinander unterschiedliche Funktionen initiiert werden.

Die Funktionen können sich insbesondere dahingehend voneinander unterscheiden, dass sie in einer unterschiedlichen Art und Weise und/oder Ausprägung und/oder Intensität durchgeführt werden. So kann beispielsweise das Licht in zwei unterschiedlichen Beleuchtungsstärken im Rahmen von zwei sich unterscheidenden Funktionen ausgesendet werden.

Bevorzugt ist vorgesehen, dass in zwei in unterschiedlichen Systemmodi neben der Initiierung wenigstens zweier sich unterscheidender Funktionen auch wenigstens eine gleiche bzw. gemeinsame Funktion initiiert wird. So kann die Beanspruchung eines Belagselementes in einem ersten Systemmodus zur Initiierung der Funktionen A und B führen, wobei dasselbe Belagselement in einem zweiten Systemmodus zur Initiierung der Funktionen B und C führen kann.

Zudem können sich die Funktionskombinationen, die von der Steuerungsvorrichtung nach Verarbeitung des Belagssignals / der Belagssignale initiiert werden, in unterschiedlichen Systemmodi voneinander unterscheiden. In den sich unterscheidenden Funktionskombinationen können auch einzelne Funktionen übereinstimmen.

Das Belagssignal kann insbesondere Messdaten des wenigstens einen Sensors umfassen. Vorzugsweise ist das das Belagssignal übermittelnde Belagselement über das Belagssignal zuordnenbar, insbesondere im Hinblick auf die Orts- bzw. Positionsbestimmung. So kann das Belagssignal ferner eine Belagselement-Identifikationsinformation (bspw. eine Dielen-ID und/oder Sensor-ID) umfassen, die insbesondere bei der Verarbeitung des Belagssignals in der Steuerungsvorrichtung zur Zuordnung der Position des Belagselementes genutzt werden kann.

Insbesondere ist in der Steuerungsvorrichtung eine Steuerungsvorrichtung-Identifikationsinformation für jedes Belagselement hinterlegt, so dass durch Abgleich der Belagselement-Identifikationsinformation und der Steuerungsvorrichtung-Identifikationsinformation eine Zuordnung und/oder Identifizierung des Belagselementes erfolgen kann.

Des Weiteren können in dem Belagssignal auch weitere Hintergrundinformationen der Steuerungsvorrichtung übermittelt werden. Diese weiteren Hintergrundinformationen können Daten zur Signalfolge des Belagssignals enthalten und/oder angeben, das wievielte Signal des Belagselementes das übermittelte Belgassignal in einem vorgebbaren Zeitraum ist.

Das Belagssignal kann von einem Belagselement stammen, wobei sich die einzelnen Belagssignale eines Belagselementes voneinander unterscheiden können, insbesondere wenn sie von unterschiedlichen Sensoren erfasst werden und/oder von dem gleichen Sensor stammen, aber insbesondere unterschiedliche Beanspruchungen abbilden. So kann ein erstes Belagssignal das kurzzeitige Betreten eines Belagselementes angeben, wohingegen ein zweites Belagssignal ein längerfristiges Verweilen auf dem Belagselement angeben kann. Diese Information kann der Steuerungsvorrichtung durch weitere Hintergrundinformationen übermittelt werden, in denen beispielsweise die Dauer der Beanspruchung übermittelt wird.

Beispielhaft sei dies daran erläutert, dass ein Nutzer über die Auswahleinrichtung den "Sicherheitsmodus" auswählen kann. Das Belagselement kann einen Drucksensor zur Erfassung der Annäherung einer Person bzw. des Druckes, der durch eine Person ausgeübt wird, aufweisen. Im "Sicherheitsmodus" kann bei Empfangen des Belagssignals, das letztlich angeben kann, dass eine Person den Raum betreten hat, ein Alarm (Funktion) ausgelöst werden. Ist das Steuerungssystem allerdings in einem zweiten Systemmodus, beispielsweise dem "Komfortmodus", kann ein gleich ausgebildetes Belagssignal - nämlich das angibt, dass eine Person den Raum betreten hat - dazu führen, dass beispielsweise der Fernseher (externe Funktion) angeschaltet wird. Somit können in Abhängigkeit von dem ausgewählten Modus und in Abhängigkeit von dem Belagssignal unterschiedliche Funktionen initiiert werden, die insbesondere von in dem Steuerungssystem eingeflochtenen bzw. mit dem Steuerungssystem vernetzten Geräten durchgeführt werden können.

Vorzugsweise kann demzufolge das Steuerungssystem derart ausgebildet sein, dass in Abhängigkeit von dem Belagssignal, das von dem Belagselement empfangen wird, entsprechend des ersten in der Steuerungsvorrichtung hinterlegten Systemmodus wenigstens ein erstes Steuerungssignal generiert oder ausgewählt wird. Das Steuerungssignal kann derart ausgebildet sein, dass es eine erste Funktion, insbesondere externe Funktion bzw. Aktion, initiieren und/oder auslösen kann. Über die Auswahleinrichtung kann ein Wechsel von dem ersten Systemmodus in einen weiteren Systemmodus veranlasst werden. Die Auswahleinrichtung ist derart mit der Steuerungsvorrichtung gekoppelt, dass nach erfolgter Auswahl des weiteren Systemmodus die Steuerungsvorrichtung in den weiteren Systemmodus wechselt.

Die Steuerungsvorrichtung kann zudem derart ausgebildet sein, dass sie das erste Steuerungssignal entsprechend einer ersten Vorgabe, die im ersten Systemmodus hinterlegt sein kann, auswählt bzw. dieses in Abhängigkeit von der ersten Vorgabe aussendet. Dabei kann die Steuerungsvorrichtung derart ausgebildet sein, dass sie nach dem Wechsel von dem ersten Systemmodus in den weiteren Systemmodus entsprechend einer sich von der ersten Vorgabe unterscheidenden weiteren Vorgabe des weiteren Systemmodus in Abhängigkeit von dem empfangenen Belagssignal wenigstens ein sich von dem ersten Steuerungssignal unterscheidendes weiteres Steuerungssignal überträgt. Es kann vorgesehen sein, dass sich das erste Steuerungssignal von dem weiteren Steuerungssignal unterscheidet, wobei beispielsweise unterschiedliche Funktionen initiierbar sind oder die Initiierung einer Funktion zu unterschiedlichen Zeitpunkten erfolgen kann. Die Ausführung unterschiedlicher Funktionen kann durch unterschiedliche, in dem jeweiligen Systemmodus hinterlegte Vorgaben erreicht werden.

Darüber hinaus ist bei einer bevorzugten Ausgestaltung des Erfindungsgedankens vorgesehen, dass die Steuerungsvorrichtung wenigstens einen ersten Systemmodus und wenigstens einen weiteren Systemmodus aufweist und dass die Steuerungsvorrichtung derart ausgebildet ist, dass das Belagssignal in dem ersten Systemmodus eine erste Funktion und in dem zweiten Systemmodus eine sich von der ersten Funktion unterscheidende weitere Funktion initiiert. Vorzugsweise ist die Steuerungsvorrichtung derart ausgebildet, dass in dem ersten und in dem weiteren Systemmodus das Belagssignal wenigstens eine gleiche, gemeinsame Funktion initiiert. Demzufolge können in den Systemmodi Funktionskombinationen initiiert werden, die sich voneinander durch wenigstens eine unterschiedlich ausgebildete Funktion unterscheiden können. Letztlich können die wenigstens zwei unterschiedlich ausgebildeten Funktionskombinationen wenigstens eine gemeinsame, gleiche Funktion umfassen, das insbesondere in Abhängigkeit von dem Belagssignal initiierbar ist.

Bei einer besonders bevorzugten Ausführungsform ist vorgesehen, dass die Steuerungsvorrichtung derart ausgebildet ist, dass die in einem Systemmodus hinterlegten Verarbeitungsvorgaben des Belagssignals zur Initiierung der wenigstens einen Funktion über eine Auswahl durch die Auswahleinrichtung, insbesondere bedarfsweise, verändert werden. Demzufolge wird insbesondere eine Adaptierbarkeit des Systemmodus durch die ermöglichte Veränderung der in dem Systemmodus hinterlegten Verarbeitungsvorgaben bzw. Vorgaben gewährleistet.

Diese hinterlegten Vorgaben zur Initiierung der Funktionen können somit kontinuierlich geändert und/oder konfiguriert werden, insbesondere so dass Funktionen, Funktionskombinationen und/oder die konkrete "Ausbildung" bzw. Intensität der Funktion angepasst und/oder hinzugefügt werden können.

Vorzugsweise können die Systemmodi und die unterschiedliche Belegung der Systemmodi kontinuierlich und letztlich insbesondere vergleichsweise einfach bzw. unkompliziert angepasst und/oder neu konfiguriert werden. Die Anpassung und/oder die Erstellung wenigstens eines Systemmodus und insbesondere der in dem Systemmodus hinterlegten Verarbeitungsvorgaben zur Initiierung der Funktionen kann über die Auswahleinrichtung und/oder über eine weitere externe Einrichtung erfolgen. Als weitere externe Einrichtung kann ein mobiles Endgerät, wie ein Smartphone und/oder Tablet, des Nutzers dienen, insbesondere wobei auf dem mobilen Endgerät eine Anwendungssoftware zur einfachen und bedienungsfreundlichen Programmierung, insbesondere Konfiguration und/oder Erstellung, des Systemmodus und/oder der Systemmodi hinterlegt sein kann.

Beispielsweise kann eine in der Auswahleinrichtung und/oder auf dem mobilen Endgerät hinterlegte Anwendungssoftware derart ausgestaltet sein, dass die Vernetzung bereits bestehender Systembestandteile vereinfacht wird. So kann beispielsweise zur Erstellung eines neuen Systemmodus ein bereits erstellter Systemmodus dupliziert und in einzelnen Verarbeitungsvorgaben angepasst werden. Alternativ oder zusätzlich kann vorgesehen sein, dass die Anwendungssoftware bereits einzelne Verarbeitungsvorgaben enthält, die von einem Nutzer zu einem Systemmodus zusammengefügt werden können. So können insbesondere die Verarbeitungsvorgaben der Belagssignale und damit verknüpfte zu initiierende Funktionen in der Anwendungssoftware hinterlegt und nutzbar sein. Grundsätzlich kann in einer weiteren Ausführungsform vorgesehen sein, dass eine umfangreiche und hochgradig individuell anpassbare Programmierung des Systemmodus einem Nutzer ermöglicht wird.

Es ist vorzugsweise vorgesehen, dass wenigstens zwei unterschiedliche Systemmodi, die jeweils zwei unterschiedliche Vorgaben für das Belagssignal enthalten, in der Steuerungsvorrichtung hinterlegt sind. Das Belagssignal kann von der Steuerungsvorrichtung empfangen werden und ebenfalls durch das Belagselement bzw. durch diesbezügliche Einrichtungen des Belagselementes an die Steuerungsvorrichtung übertragen werden. Letztlich kann durch die unterschiedlichen Vorgaben erreicht werden, dass insbesondere bei dem gleichen Signaltyp des Belagssignals unterschiedliche Steuerungssignale zur Initiierung von unterschiedlichen Funktionen von der Steuerungsvorrichtung ausgesendet werden können.

Demzufolge sind insbesondere in dem Steuerungssystem die Steuerungsvorrichtung und die die Steuerungssignale empfangenden Geräte, die die Funktionen ausführen, eingebettet und, vorzugsweise drahtlos, miteinander vernetzt.

Insbesondere kann eine drahtlose Übertragung mittels bekannter Übertragungstechnologien erfolgen, wie beispielsweise WLAN, NFC, Bluetooth, Z-Wave, ZigBee und/oder dergleichen. Diese Übertragungstechnologien sind insbesondere für nachfolgend angegebene drahtlose Verbindungs- bzw. Kopplungsmöglichkeiten vorgesehen.

Die Einsatzvielfalt des Steuerungssystems kann dadurch erhöht werden, dass letztlich in Abhängigkeit von dem ausgewählten Systemmodus eine Funktion auf Grundlage von dem empfangenen Belagssignal initiiert werden kann, wobei entsprechend einer ersten bzw. weiteren Vorgabe das diesbezügliche Steuerungssignal ausgesendet werden kann. Dies kann dazu führen, dass, um unterschiedliche Funktionen zu initiieren, nicht mehr unterschiedliche Belagssignale empfangen werden müssen, sondern dies in Abhängigkeit von dem ausgewählten Systemmodus erfolgen kann. Insbesondere kann im Hinblick auf unterschiedliche Belagssignale durch die stetig konfigurierbaren Systemmodi die Anzahl initiierbarer Funktionen und/oder Funktionskombinationen sinnvoll und anwendbar vervielfacht werden.

Ganz besonders bevorzugt ist vorgesehen, dass das Steuerungssystem für einzelne Räume eines Gebäudes vorgesehen ist. Dabei kann vorgesehen sein, dass ein Gebäude mit einem Steuerungssystem oder mit einer Mehrzahl von Steuerungssystemen ausgestattet ist. Es kann auch vorgesehen sein, dass in dem Steuerungssystem eine Mehrzahl von Steuerungsvorrichtungen eingebettet ist, insbesondere wobei beispielsweise jedem Raum eine Steuerungsvorrichtung zugeordnet werden kann. Im Raum kann beispielsweise durch den Sensor eine Beanspruchung des Belagselementes, beispielsweise durch einen Drucksensor, detektiert und erfasst werden.

Es versteht sich, dass auch der Systemmodus bzw. die in dem Systemmodus hinterlegte Vorgabe derart ausgebildet sein kann, dass das empfangene Belagssignal nicht unmittelbar eine externe Funktion initiiert. So kann beispielsweise auch vorgesehen sein, dass eine zeitverzögerte Aussendung des Steuerungssignals zur Durchführung der externen Funktion erfolgt. Darüber hinaus kann auch die initiierte Funktion derart ausgewählt sein, dass diese nicht von einem externen Gerät "durchgeführt" wird, sondern beispielsweise zur internen Hinterlegung bzw. Verarbeitung in einer weiteren Einrichtung dient. Beispielsweise kann die Steuerungsvorrichtung derart ausgebildet sein, dass die Funktion, die durch das Belagssignal initiiert wird, in der Steuerungsvorrichtung selbst durchgeführt wird. So kann die initiierte Funktion sein, dass eine Zählung bzw. Speicherung erfolgt. Dies kann dazu dienen, dass nach beispielsweise 1000 Beanspruchungen des Belagselementes eine externe Funktion, wie beispielsweise die Aktivierung eines Saugroboters, initiiert wird. Bereits die Speicherung bzw. Hinterlegung des Belagssignals - um dieses "zu zählen" - stellt eine initiierte Funktion im Sinne der vorliegenden Erfindung dar.

Eine Beanspruchung eines Belagselementes kann durch eine Annäherung einer Person hervorgerufen werden, insbesondere muss das Belagselementes zur Detektion der Annäherung einer Person nicht zwingend belastet bzw. direkt berührt werden. Beispielsweise kann auch eine berührungslose Detektion des Belagselementes vorgesehen sein. Diese Art der Detektion der Annäherung einer Person kann beispielsweise bei Belagselementen eines Wand- und/oder Deckenbelages vorgesehen sein.

Demnach können die Funktionen sowohl intern - das heißt insbesondere in der Steuerungsvorrichtung - als auch extern durchgeführt werden.

Die internen Funktionen, die insbesondere in der Steuerungsvorrichtung durchgeführt werden, können insbesondere nicht äußerlich wahrnehmbar sein. Beispielsweise kann sowohl die Änderung von der Funktionalität des Belagselementes als auch eine interne Funktion der Steuerungsvorrichtung für einen Nutzer nicht wahrnehmbar sein.

Erfindungsgemäß kann somit die Diversität der Funktionsbelegung bzw. der Initiierung der Funktionen durch ein Steuerungssystem erhöht werden. Auch eine Kombination von initiierten Funktionen kann durch die Steuerungsvorrichtung ermöglicht werden. Ferner ermöglicht die erfindungsgemäße Steuerungsvorrichtung bzw. das erfindungsgemäße Steuerungssystem einen einfachen Wechsel von Funktionen und/oder Systemmodi - insbesondere in Abhängigkeit von dem Bedarf und/oder von dem Komfort des Nutzers.

Vorteilhafterweise kann eine kontinuierliche und individuelle Gestaltung des Steuerungssystems durch die unterschiedliche Belegung der Systemmodi mit den sich für die Belagssignale unterscheidenden Vorgaben erreicht werden. Insbesondere kann eine komfortable, vorzugsweise automatisierte, Funktionssteuerung über das Steuerungssystem erreicht werden, die eine verbesserte situative Anpassbarkeit durch die Auswahl von dem Systemmodus aufweist.

Bei einer besonders bevorzugten Ausgestaltung des Erfindungsgedankens ist vorgesehen, dass das Belagselement eine mit dem Sensor gekoppelte Sendeeinrichtung zur, vorzugsweise drahtlosen, Übertragung des Belagssignals aufweist. Dabei kann das Belagssignal auf der von dem Sensor erfassten Information beruhen. Grundsätzlich kann auch vorgesehen sein, dass das Belagselement mit der Steuerungsvorrichtung über ein Informationsübertragungskabel verbunden ist. Letztlich ist das Belagselement zur Übertragung des Belagssignals ausgebildet, wobei in Abhängigkeit von dem Belagssignal die Steuerungsvorrichtung die Funktion initiieren kann.

Vorzugsweise weist die Sendeeinrichtung wenigstens eine Antenne zum Senden und/oder Empfangen von Informationen auf.

Darüber hinaus weist die Steuerungsvorrichtung vorzugsweise eine Kommunikationseinrichtung zum, bevorzugt drahtlosen, Empfangen des Belagssignals und/oder zur Übertragung von wenigstens einem Steuerungssignal zur Ausführung von der wenigstens einen Funktion des ausgewählten Systemmodus auf. Das Steuerungssignal kann - wie zuvor erläutert - derart ausgebildet sein, dass die Funktion ausgeführt bzw. initiiert wird. Zudem kann das Steuerungssignal drahtlos an ein externes Gerät übertragen werden, das in dem Steuerungssystem, insbesondere in dem Smart-Home-Steuerungssystem, eingebunden ist.

Besonders bevorzugt weist das Belagselement eine Verarbeitungseinrichtung zur Verarbeitung, insbesondere zur, vorzugsweise digitalen, Konvertierung und/oder zur Codierung und/oder zur Komprimierung, von der durch den wenigstens einen Sensor erfassten Information auf. Die Verarbeitungseinrichtung kann derart ausgebildet sein, dass das an die Steuerungsvorrichtung zu übertragende Belagssignal erzeugt bzw. ausgebildet wird. Die Verarbeitungseinrichtung kann insbesondere zur Übertragung von verarbeitenden Information, vorzugsweise von dem Belagssignal, an die Sendeeinrichtung des Belagselementes ausgebildet sein. Eine Konvertierung und/oder Codierung von der durch den Sensor erfassten Information ist dahingehend vorteilhaft, dass eine verschlüsselte Übertragung und/oder die Übertragung in einem bestimmten Dateiformat erfolgen kann, so dass die Kompatibilität zwischen dem Belagssignal und der Steuerungsvorrichtung sichergestellt wird. Zudem kann auch eine Codierung des Belagssignals dazu führen, dass die Datensicherheit bei der Übertragung von dem Signal erhöht wird. Beispielsweise kann das Belagssignal derart verschlüsselt sein, dass es anderen Vorrichtungen zumindest näherungsweise unmöglich ist, dieses auszulesen bzw. zu entschlüsseln.

Darüber hinaus kann bei einer weiteren bevorzugten Ausführungsform die Steuerungsvorrichtung eine weitere Verarbeitungseinrichtung zur Verarbeitung, insbesondere zur Decodierung, von dem Belagssignal aufweisen. Die weitere Verarbeitungseinrichtung kann insbesondere in Abhängigkeit von der Verarbeitungseinrichtung des Belagssignals ausgebildet sein, so dass diese vorzugsweise miteinander kompatibel sind. So können die von der Verarbeitungseinrichtung codierten, konvertierten und/oder komprimierten Signale von der weiteren Verarbeitungseinrichtung verarbeitet und/oder decodiert werden. Die weitere Verarbeitungseinrichtung kann ebenfalls derart ausgebildet sein, dass das Belagssignal derart "aufbereitet" bzw. verarbeitet wird, dass die Vorgabe in dem ausgewählten Systemmodus entsprechend eines hinterlegten Steuerungsprotokolls in Abhängigkeit von dem verarbeiteten Belagssignal ein Steuerungssignal bzw. eine zu initiierende Funktion auswählen kann. Beispielsweise kann die Verarbeitungseinrichtung derart ausgebildet sein, dass sie überprüft, ob das Belagssignal in einem bestimmten Wertebereich liegt. Vorzugsweise ist die Steuerungsvorrichtung derart ausgebildet, dass die Ausführung der Funktion von dem ausgewählten Systemmodus in Abhängigkeit von dem verarbeiteten Belagssignal initiiert wird.

Bei einer weiteren bevorzugten Ausführungsform kann ein Belagssignal auch von mehreren Belagselementen stammen. Beispielsweise kann ein der Steuerungsvorrichtung übermitteltes gemeinsames Belagssignal sich aus wenigstens zwei Einzelbelagssignalen zusammensetzen, insbesondere wobei die Einzelbelagssignale von wenigstens zwei Sensoren stammen können. Ein solches gemeinsames Belagssignal kann von der Verarbeitungseinrichtung eines Belagselementes und/oder der weiteren Verarbeitungseinrichtung der Steuerungsvorrichtung konfiguriert werden, insbesondere wobei die Verarbeitungseinrichtung des Belagselementes und/oder die weitere Verarbeitungseinrichtung der Steuerungsvorrichtung die Einzelbelagssignale empfangen kann. Die Einzelbelagssignale können in einer weiteren bevorzugten Ausführungsform in der Verarbeitungseinrichtung und/oder der weiteren Verarbeitungseinrichtung mit unterschiedlichen Vorgaben abgeglichen werden und/oder zusammengefügt werden.

Alternativ oder zusätzlich kann in der Verarbeitungseinrichtung und/oder in der weiteren Verarbeitungseinrichtung der Steuerungsvorrichtung eine gemeinsame Verarbeitung der Einzelbelagssignale erfolgen, insbesondere zur Vorgabe einer von der Steuerungsvorrichtung auszulösenden Funktion und/oder Funktionskombination. So kann beispielsweise das Fehlen (d.h. also keine entsprechende Beanspruchung eines Belagselementes) eines für das gemeinsame Belagssignal benötigten Einzelbelagssignals dazu führen, dass der Steuerungsvorrichtung vorgegeben wird, dass keine Funktion zu initiieren ist.

Alternativ oder zusätzlich kann zudem ein gemeinsames Belagssignal auch aus wenigstens zwei Einzelbelagssignalen zusammengesetzt sein, die insbesondere von demselben Belagselement und vorzugsweise von wenigstens zwei verschiedenen Sensoren stammen. Dieses gemeinsame Belagssignal kann beispielsweise von einer Verarbeitungseinrichtung des Belagselementes und/oder der weiteren Verarbeitungseinrichtung der Steuerungsvorrichtung erzeugt werden.

Darüber hinaus können in der Steuerungsvorrichtung auch wenigstens zwei Belagssignale zur gemeinsamen Verarbeitung zusammengefasst werden.

Ferner kann die Steuerungsvorrichtung eine Schnittstelle mit einem Cloud-System zur Weiterleitung von dem Belagssignal und/oder von dem verarbeiteten Belagssignal und/oder von dem wenigstens einen Steuerungssignal aufweisen. Die Übertragung an das Cloud-System kann bereits die von der Steuerungsvorrichtung initiierte Funktion darstellen. In dem Cloud-System kann eine Weiterverarbeitung der empfangenen Information erfolgen, beispielsweise eine Speicherung und/oder Analyse der empfangenen Information. Bevorzugt kann die Rechnerleistung der Steuerungsvorrichtung in das und/oder als Cloud-System ausgelagert werden, insbesondere wobei eine Übertragung von der Schnittstelle zu dem Cloud-System drahtlos erfolgt. Darüber hinaus kann die Schnittstelle die Information an das Cloud-System über WLAN, Bluetooth und/oder dergleichen übertragen. Durch eine Auslagerung der Analyse und/oder Verarbeitung kann erreicht werden, dass das Vorhalten hierfür benötigter Hardware bzw. Komponenten "vor Ort" in dem Gebäude vermieden werden kann. Somit kann eine zumindest nahezu vollständige Auslagerung der Verarbeitung des Belagssignals vorgesehen sein.

Vorzugsweise weist das Belagselement eine Empfangseinrichtung zum, vorzugsweise drahtlosen, Empfangen von wenigstens einem Steuerungssignal der Steuerungsvorrichtung auf. Das Empfangen des Steuerungssignals der Steuerungsvorrichtung kann zur Ausführung von einer Funktion in dem Belagselement vorgesehen sein. Insbesondere kann in Abhängigkeit von dem Steuerungssignal der wenigstens eine Sensor des Belagselementes steuerbar sein. Beispielsweise kann das Belagselement auch einen Aktor, insbesondere einen mechanischen Aktor, aufweisen, der in Abhängigkeit von dem Steuerungssignal gesteuert werden kann. Insbesondere kann dem Sensor über die Steuerungsvorrichtung vorgegeben werden, ob und in welchen Abständen eine Erfassung der chemischen und/oder physikalischen Größe erfolgen soll. Diese Vorgabe kann entsprechend des ausgewählten Systemmodus variieren. So kann beispielsweise in dem "Komfortmodus" der Drucksensor des Belagselementes abgeschaltet werden - das heißt in einen "Schlummermodus" gesetzt werden -, wohingegen im "Sicherheitsmodus" unmittelbar nach Erfassung der chemischen und/oder physikalischen Größe oder auch zeitversetzt eine Übertragung des Belagssignals erfolgen kann.

Bei einer weiteren bevorzugten Ausführungsform des Erfindungsgedankens ist vorgesehen, dass die Steuerungsvorrichtung derart ausgebildet ist, dass sie in Abhängigkeit von dem ausgewählten Systemmodus die Ausführung von wenigstens zwei Funktionen, vorzugsweise gleichzeitig und/oder sukzessiv, initiiert. Dabei versteht es sich, dass auch eine Mehrzahl von Funktionen nach Empfangen des Belagssignals in Abhängigkeit von dem ausgewählten Systemmodus initiiert werden kann. So kann beispielsweise eine Initiierung in dem ersten Systemmodus von einer Funktion nach Empfangen des Belagssignals erfolgen, wobei im zweiten Systemmodus wenigstens zwei Funktionen initiiert werden können. Die Initiierung von den Funktionen kann durch Übertragung von Steuerungssignalen von der Steuerungsvorrichtung erfolgen, insbesondere wobei die Steuerungsvorrichtung wenigstens zwei Steuerungssignale nach Empfangen des Belagssignals - gegebenenfalls nach der Verarbeitung des Belagssignals - übertragen kann. Es kann auch vorgesehen sein, dass mit einem bzw. ausgelöst durch ein Steuerungssignal zwei unterschiedliche Funktionen ausgeführt werden können. Demzufolge können eine oder mehrere gleiche oder unterschiedliche Funktionen und/oder Funktionskombinationen in Abhängigkeit von dem jeweiligen Systemmodus in individuellen Ausführungsvarianten von der Steuerungsvorrichtung nach Empfangen von dem Belagssignal initiiert werden. Bei einer Funktionskombination kann insbesondere auch eine Kombination von wenigstens einer in einem anderem Systemmodus bereits ausgeführten Funktion mit wenigstens einer weiteren Funktion vorgesehen sein.

Bei einer weiteren bevorzugten Ausführungsform kann vorgesehen sein, dass die Ausführung von der Funktion des Systemmodus in Abhängigkeit von einem weiteren Parameter von der Steuerungsvorrichtung initiierbar ist. Insbesondere kann der weitere Parameter von dem Belagssignal und/oder von einer externen Überwachungseinrichtung erfassten Überwachungsinformation abhängen. So kann in dem von dem Belagselement übertragenen Belagssignal noch eine weitere Information vorhanden sein, die als weiterer Parameter dienen kann, so dass der Systemmodus entsprechend der jeweiligen Vorgabe sowohl den weiteren Parameter als auch das Belagssignal als solches berücksichtigen kann. Eine externe Überwachungseinrichtung kann, vorzugsweise drahtlos, die Überwachungsinformation direkt an die Steuerungsvorrichtung übertragen. Die externe Überwachungseinrichtung kann auch innerhalb von der Steuerungsvorrichtung angeordnet sein.

Der weitere Parameter und/oder die Überwachungsinformation kann Daten über die Jahreszeit, das Datum, die Uhrzeit, die Anzahl der anwesenden Personen und/oder die Anwesenheit wenigstens einer spezifischen Person, Daten zu anwesenden Personen, das Wetter, die Temperatur, die Fortbewegungsgeschwindigkeit und/oder eine etwaige Gefahrensituation enthalten. Alternativ oder zusätzlich kann die Annäherung einer, insbesondere spezifischen und/oder zu identifizierenden, Person über Ermittlung bzw. Detektion anderer Parameter, wie Gewicht, Schrittlänge und/oder Gangbild, erfolgen.

Zudem kann als weiterer Parameter die Anwesenheitszeit wenigstens einer Person in einem vorgebbaren Bereich, insbesondere auf wenigstens einem Belagselement, dienen. Dies ermöglicht insbesondere die Ausführung bzw. die Initiierung wenigstens einer Funktion von der Steuerungsvorrichtung erst nach einer bestimmten Verweildauer einer Person in dem vorgebbaren Bereich. So kann beispielsweise die Heizung erst nach 5 Minuten Anwesenheit einer Person eingeschaltet werden (initiierte Funktion). Sollte sich jedoch eine Person aus dem vorgegebenen Bereich (bspw. dem Raum) entfernen, so kann die Funktion "Heizung" auch nicht von der Steuerungsvorrichtung initiiert werden.

Alternativ oder zusätzlich ist es auch denkbar, dass die Steuerungsvorrichtung eine bestimmte ausgeführte Funktion in Abhängigkeit von dem weiteren Parameter unterbricht. Als weiterer Parameter kann beispielsweise die Anwesenheitszeit wenigstens einer Person in einem vorgebbaren Bereich dienen. Beispielsweise kann der Fernseher nach einer vorgegebenen Zeit von 2 Stunden abgeschaltet werden.

Insbesondere kann beispielsweise die externe Überwachungseinrichtung als Rauchmelder ausgebildet sein. Der weitere Parameter kann zusätzlich zu dem Belagssignal in Abhängigkeit von dem ausgewählten Systemmodus Einfluss auf die zu initiierende Funktion bzw. auf das auszusendende Steuerungssignal zur Ausführung der jeweiligen Funktion haben.

Insbesondere kann vorgesehen sein, dass die Ausführungsvariante der Funktion abhängig oder unabhängig von dem wenigstens einen weiteren Parameter von der Steuerungsvorrichtung initiierbar ist. Auch kann ein möglicher Einfluss des wenigstens einen Parameters in Abhängigkeit von dem jeweils ausgewählten Systemmodus vorgegeben sein.

Besonders bevorzugt kann die von der Steuerungsvorrichtung initiierte Funktion isoliert und/oder gemeinsam mit wenigstens einer weiteren Funktion von der Steuerungsvorrichtung auslösbar sein, wobei die weitere Funktion unabhängig von dem erfassten Belagssignal, vorzugsweise aber abhängig von dem ausgewählten Systemmodus, von der Steuerungsvorrichtung vorgegeben wird. Die weitere Funktion kann beispielsweise auch von dem wenigstens einen weiteren Parameter abhängen. Bevorzugt kann die Funktion und/oder die wenigstens eine weitere Funktion entsprechend eines Protokolls ausführbar sein. In dem Protokoll können, vorzugsweise programmierte, Pläne bzw. Abläufe zur simultanen und/oder sukzessiven Ausführung von Funktionen vorgesehen sein. Beispielsweise kann in dem Protokoll ein individuelles Szenario in Abhängigkeit von dem ausgewählten Systemmodus berücksichtigt werden.

Die von der Steuerungsvorrichtung initiierbare Funktion kann des Weiteren in Abhängigkeit von dem wenigstens einen weiteren Parameter und/oder von wenigstens einer externen und von dem Steuerungssystem bestimmbaren Variable ausführbar sein. Bevorzugt wird die Variable als bestimmbarer weiterer Parameter in der Steuerungsvorrichtung berücksichtigt. Im Folgenden werden die externe Variable und der weitere Parameter als Begriffe insbesondere synonym verwendet, insbesondere wobei die externe Variable einen optionalen Einflussfaktor für die Initiierung von Funktionen ermöglicht.

Mit der Variable können längerfristige Situationen (bspw. situationsabhängig, wie eine Jahreszeit, und/oder zeitabhängig), aber auch punktuelle Ereignisse und/oder sich ändernde Umweltparameter, wie die Temperatur und/oder der Sauerstoffgehalt, berücksichtigt werden.

Vorzugsweise kann durch die Steuerungsvorrichtung eine situationsabhängige, ereignisabhängige, parameterabhängige und/oder zeitabhängige Durchführung der Funktion erfolgen.

Eine situationsabhängige Ausführung im Systemmodus kann beispielsweise sein, dass in Abhängigkeit von der jeweiligen Jahreszeit die Funktion initiiert wird. So kann beispielsweise im Winter bereits nach einem Empfangen eines Belagssignals das Licht aktiviert werden, wobei im Sommer - bei einem gleichen erfassten Belagssignal - das Licht erst am späten Abend aktiviert wird. In situationsabhängigen Ausführungen des Steuerungssystems kann auch vorgesehen sein, dass das Wetter berücksichtigt wird. Zum Beispiel kann bei Regen oder sehr starker Bewölkung die Aktivität im Raum dazu führen, dass das Licht aktiviert wird. Sollte die Sonne scheinen, kann eine gleiche Aktivität im Raum nicht zu einer Aktivierung des Lichtes führen. Die situationsabhängige Steuerung kann weiterhin im ausgewählten Systemmodus und in Abhängigkeit von der Variable bzw. des externen Parameters durchgeführt werden.

Ebenfalls kann als situationsabhängige Ausführungsvariante vorgesehen sein, dass die mit dem Belagselement verknüpften elektrischen Funktionalitäten und/oder die Auswahleinrichtung lediglich dann angesteuert bzw. verändert werden kann/können, wenn ein - vorher festgelegter - Systemadministrator im Raum ist bzw. vom Belagselement erfasst wird.

Eine ereignisabhängige Ausführungsvariante des Systemmodus kann dahingehend ausgebildet sein, dass ein bestimmtes - punktuelles - Ereignis zur Initiierung der Funktion führt. Als Beispiel kann hierfür dienen, dass, wenn das Fenster geöffnet ist, die Heizung nicht aktiviert wird bzw. werden kann und selbst dann nicht aktiviert wird bzw. werden kann, wenn die Temperatur im Raum unter einem definierten Schwellenwert liegt und/oder von dem Belagselement eine bestimmte Aktivität im Raum erfasst wird. Ein weiteres Ereignis kann beispielsweise ein Brand sein, so dass der Systemmodus - oder jeder Systemmodus - derart ausgebildet sein kann, dass, wenn von der externen Überwachungseinrichtung (Rauchmelder) die Überwachungsinformation - dass es brennt - an die Steuerungsvorrichtung übertragen wird, von der Steuerungsvorrichtung bevorzugt Sicherheitsfunktionen initiiert werden. Sicherheitsfunktionen können optische Hinweise im Raum, vorzugsweise in der Sockelleiste sein, die einen sicheren, nicht vom Feuer betroffenen Rettungsweg vom jeweiligen Ort aus anzeigen, an dem von dem Belagselement Aktivität erfasst wird.

Als parameterabhängige Ausführungsform kann beispielsweise vorgesehen sein, dass, wenn die Temperatur unter einem Schwellenwert liegt, die Aktivität im Raum bzw. im Gebäude, die von dem Belagselement erfasst wird, zu einer Aktivierung der Heizung (externe Funktion) führt. Auch kann vorgesehen sein, dass, wenn der Sauerstoffgehalt im Raum unter einem Schwellenwert liegt, bei einer Aktivität im Raum bzw. im Gebäude wenigstens ein Fenster geöffnet wird. Des Weiteren kann eine Aktivierung von externen Geräten, wie beispielsweise einem Saugroboter, in Abhängigkeit von der Anzahl an erfassten Aktivitäten vom Belagselement initiiert werden.

Als zeitabhängige Einflussmöglichkeit auf die initiierbare Funktion kann vorgesehen sein, dass in Abhängigkeit von einem bestimmten Zeitpunkt bzw. einem Zeitintervall die externen Funktionen ausgewählt bzw. ausgeführt werden. So kann vorgesehen sein, dass nachts bestimmte Funktionen - trotz Empfangen des Belagssignals und des ausgewählten Systems - nicht ausgeführt werden, die tagsüber jedoch im selben Systemmodus initiiert werden würden. Beispielsweise kann nachts das Fenster geschlossen bleiben oder es werden keine Saugroboter (auch Säuberungsroboter genannt) aktiviert.

Vorzugsweise ist die Steuerungsvorrichtung derart ausgebildet, dass die Vorgabe des Steuerungssignals im jeweiligen Modus entsprechend eines Steuerungsprotokolls nach festlegbaren und/oder festgelegten Regeln in Abhängigkeit von dem Belagssignal erfolgt. Insbesondere kann die Steuerungsvorrichtung derart ausgebildet sein, dass das Steuerungsprotokoll und/oder die Regeln in Abhängigkeit von dem weiteren Parameter die Vorgabe für das Steuerungssignal festlegt. Vorzugsweise kann die Intensität und/oder der Wertebereich des Belagssignals analysiert werden und dementsprechend kann das Steuerungsprotokoll dann eine Funktion initiieren.

Bevorzugt kann das Steuerungsprotokoll unterschiedliche Regeln für unterschiedliche Größenbereiche, Intensitäten und/oder Schwellenwerte des Belagssignals vorsehen. Insbesondere kann erst bei Überschreitung eines Schwellenwertes eine Funktion initiiert werden, die nicht initiiert werden würde, wenn das Belagssignal unterhalb des Schwellenwertes liegt.

Darüber hinaus kann die Steuerungsvorrichtung derart ausgebildet sein, dass die Ausführung der Funktion erst initiiert wird, wenn die weitere Verarbeitungseinrichtung eine vorgebbare Abfolge und/oder Anzahl einer Mehrzahl von Belagssignalen feststellt.

So kann in einem Systemmodus hinterlegt sein, dass eine Funktion - beispielsweise das Einschalten eines Radios - erst initiiert wird, wenn der Steuerungsvorrichtung mehrere Belagssignale von mehreren Belagselementen in einer bestimmten Reihenfolge übermittelt werden. So kann beispielsweise der Tritt auf einem Belagselement zur Initiierung der Funktion "Licht an" und der Tritt auf zwei weitere festgelegte Belagselemente zur Initiierung der Funktion "Heizung an" führen.

Auch das Belagselement kann alternativ oder zusätzlich derart ausgebildet sein, dass das Belagselement erst das Belagssignal an die Steuerungsvorrichtung überträgt, wenn die Verarbeitungseinrichtung des Belagselementes eine vorgebbare Abfolge und/oder Anzahl einer Mehrzahl von durch den Sensor erfassten Information feststellt. So kann beispielsweise durch zweimaliges Tippen auf dem Belagselement das Licht angeschaltet werden und bei einmaligen Tippen das Licht ausgeschaltet werden. Entsprechende Belagssignale können dann an die Steuerungsvorrichtung übertragen werden. Auch eine zeitverzögerte Belastung kann so zur Vorgabe der Ausführung der initiierten Funktion führen.

Die vorgenannte Analyse der Abfolge und/oder Anzahl der Belagssignale kann insbesondere auch von der Steuerungsvorrichtung durchgeführt werden, insbesondere wobei die Belagssignale in der Steuerungsvorrichtung miteinander verknüpft werden können.

Bei einer weiteren bevorzugten Ausführungsform der vorliegenden Erfindung ist vorgesehen, dass der Steuerungsvorrichtung eine, vorzugsweise externe, Speichereinrichtung zugeordnet ist. Die Speichereinrichtung kann zum Empfangen des Belagssignals und zum Speichern des Belagssignals ausgebildet sein. Die externe Speichereinrichtung kann auch in einem Cloud-Laufwerk vorgesehen sein. Mittels der Speichereinrichtung können die Aktivitäten innerhalb des Gebäudes, die von dem Belagselement erfasst werden, gespeichert und gegebenenfalls analysiert werden.

Die Steuerungsvorrichtung kann ferner derart ausgebildet sein, dass sowohl in Abhängigkeit von den von der Speichereinrichtung gespeicherten Informationen als auch in Abhängigkeit von dem Belagssignal die Ausführung der Funktion initiierbar ist. Insbesondere kann die Steuerungsvorrichtung selbstlernend ausgebildet sein. So kann die Steuerungsvorrichtung eine künstliche Intelligenz aufweisen, insbesondere zur Verknüpfung von gespeicherten Daten und erfassten Daten, wobei diese Daten (zueinander) korrigiert werden können. Dabei kann die Steuerungsvorrichtung Fehler, Fehlalarme oder dergleichen erkennen, dokumentieren und insbesondere im Anschluss beheben. Eine derartige künstliche Intelligenz bzw. selbstlernende Funktion der Steuerungsvorrichtung kann auch cloudbasiert implementiert sein, so dass in der Steuerungsvorrichtung selbst diese Eigenschaft - oder zumindest die notwendige Hardware - nicht bereitgestellt werden muss.

Weiterhin ist die Steuerungsvorrichtung bevorzugt zur Positionserkennung des Belagselementes ausgebildet. Durch die Positionserkennung kann eine Zuordnung des Belagselementes zu seinem Standort erfolgen. So können beispielsweise ziel- und zweckgerichtet die Information im Verhältnis zu dem Standort des Belagselementes gesetzt werden. Hierfür kann das Belagselement auch seine Standortinformation an die Steuerungsvorrichtung übertragen und/oder die Steuerungsvorrichtung kann anhand von den jeweiligen Informationen des Belagselementes eine Zuordnung des Belagselementes und damit einhergehend eine Positionserkennung vornehmen. Dabei kann es sinnvoll sein, dass zuvor die Steuerungsvorrichtung im Hinblick auf die Standortkoordinaten der jeweiligen Belagselemente kalibriert worden ist, so dass anschließend die Steuerungsvorrichtung nach dem Empfangen der jeweiligen Information durch das Belagselement eine Zuordnung vornehmen kann. Gerade bei entsprechender Reaktion der Steuerungsvorrichtung auf Information des Belagselementes, beispielsweise zur Steuerung und/oder Regelung weiterer Geräte im Bereich einer Smart-Home-Anwendung oder dergleichen, ist die Kenntnis des Standortes sinnvoll.

Vorzugsweise kann das Belagselement als funktionales Plattenelement im Smart-Home-System bzw. im Gebäudemanagement-System (das heißt im Steuerungssystem) eingebunden werden, wobei sie als ein Gateway zwischen den Systemen fungieren kann.

Die Verarbeitung des Belagssignals in der Verarbeitungseinrichtung und/oder in der weiteren Verarbeitungseinrichtung kann weiter bevorzugt in Echtzeit erfolgen, so dass eine schnelle Reaktion auf vom Sensor erfasste Messdaten möglich sind.

Besonders bevorzugt ist, dass die weitere Verarbeitungseinrichtung zur Decodierung des durch die Verarbeitungseinrichtung codierten Belagssignals ausgebildet ist. Insbesondere kann die Verarbeitungseinrichtung das Belagssignal digital konvertieren - gegebenenfalls im Anschluss auch noch codieren. Die weitere Verarbeitungseinrichtung ist dabei derart ausgebildet, dass sie das digital konvertierte Belagssignal nicht nur empfangen, sondern auch verarbeiten kann. Die weitere Verarbeitungseinrichtung kann insbesondere zur Positionserkennung durch das Belagselement ausgebildet sein. Diese Information kann auch der Steuerungsvorrichtung übertragen werden, wobei die Position des Belagselementes als weiterer Parameter bei der Auswahl der durchzuführenden Funktion berücksichtigt werden kann.

Darüber hinaus kann die weitere Verarbeitungseinrichtung derart ausgebildet sein, dass die empfangenen Belagssignale in eine festgelegte Rangfolge geordnet werden, so dass insbesondere durch die weitere Verarbeitungseinrichtung vorgegeben werden kann, in welcher Abfolge die Belagssignale verarbeitet werden und/oder in welcher Abfolge die aus den verarbeiteten Belagssignalen hervorgerufenen Funktionen initiiert werden. So kann beispielsweise seitens der Steuerungsvorrichtung vorgegeben werden, welches Belagssignal Vorrang hat, insbesondere wenn bei der Verarbeitung der Belagssignale sich überschneidende und/oder sich wiedersprechende Funktionen zumindest im Wesentlichen gleichzeitig initiiert werden sollen. Das Belagssignal, welches durch die weitere Verarbeitungseinrichtung als erstes verarbeitet wird und zur Initiierung einer Funktion führt, kann so nicht durch weitere Belagssignale herabgesetzt bzw. "überdeckt" werden. Führt beispielsweise ein Belagssignal nach der Verarbeitung in der weiteren Verarbeitungseinrichtung eigentlich zur initiierten Funktion "Licht an mit Stärke 3 (bspw. 2000 lux)" und ein weiteres Belagssignal zur Funktion "Licht an mit Stärke 10 (bspw. 5000 lux)" und werden beide Belagssignale der Steuerungsvorrichtung in einem vorgegebenen Zeitintervall übermittelt, so kann die hinterlegte Rangfolge festlegen, dass nur das weitere Belagssignal zur Initiierung der Funktion führt, nämlich "Licht an mit Stärke 10 (bspw. 5000 lux)". Die Funktion "Licht an mit Stärke 3" wird dann beispielsweise nicht initiiert.

Vorzugsweise kann vorgesehen sein, dass die von der Steuerungsvorrichtung verarbeiteten Daten und/oder Information, insbesondere deren Ergebnisse, auf externen Geräten darstellbar und/oder visualisierbar sind. Insbesondere kann vorgesehen sein, dass auf einem Ausgabegerät einem Nutzer die durchgeführten Funktionen angezeigt und/oder die von dem Belagselement erfasste Information dargestellt werden. Insbesondere kann über die Ausgabeeinrichtung auch eine Darstellung der, insbesondere von der weiteren Verarbeitungseinrichtung und/oder der Verarbeitungseinrichtung verarbeiteten, Belagssignale erfolgen. Mit dem Ausgabegerät kann wahlweise auch alternativ oder zusätzlich dargestellt werden, in welchem ausgewählten Systemmodus sich das Steuerungssystem befindet.

Die Auswahleinrichtung kann bei einer weiteren bevorzugten Ausführungsvariante der vorliegenden Erfindung als mobiles Endgerät ausgebildet sein und/oder wenigstens eine stationäre Eingabe aufweisen. Als Auswahleinrichtung kann auch ein technisches Gerät des Nutzers des Steuerungssystems, wie beispielsweise sein Handy oder sein Tablet, dienen, über das letztlich die Auswahl des Systemmodus erfolgen kann.

Weiter bevorzugt kann die Auswahleinrichtung eine Messeinrichtung zur Bestimmung des auszuwählenden Systemmodus aufweisen. Die Messeinrichtung kann derart ausgebildet sein, dass sie die Verarbeitung einer verbalen und/oder nonverbalen Kommunikation eines Nutzers erfasst und diese zur Auswahl des Systemmodus nutzt. So kann die "Kommunikationsinformation" des Nutzers, über die die Messeinrichtung den auszuwählenden Systemmodus bestimmt, in Form von Gestik, Mimik, Körperhaltung und/oder Sprache übermittelt werden. Die Messeinrichtung weist insbesondere geeignete Mittel auf, um die Kommunikation des Nutzers zu erfassen und verarbeiten zu können.

Grundsätzlich könnte auch vorgesehen sein, dass das Belagselement als Auswahleinrichtung ausgebildet ist bzw. eine solche aufweist, wobei eine bestimmte Abfolge von Aktionen und/oder von dem Sensor erfasste Messdaten zur Auswahl des Systemmodus führen kann.

Besonders bevorzugt kann in diesem Zusammenhang vorgesehen sein, dass ein zuvor vorgegebenes Trittmuster und/oder eine bestimmte zeitliche Abfolge einer durchgeführten Aktion, die von dem Belagselement erfasst wird, dazu führt, dass der Systemmodus geändert wird.

Die Auswahleinrichtung kann zudem auch fernsteuerbar ausgebildet sein. Hierbei ist sowohl eine Fernsteuerung mittels vergleichsweise einfacher Funk- und/oder Infrarotsignale als auch mittels komplexerer Methoden, wie beispielsweise mittels Bluetooth-Technologie, WLAN und/oder Mobilfunk, wie z. B. 5G-Technologie, möglich. Die Auswahleinrichtung kann dementsprechend auch zum Datenaustausch ausgebildet sein. Eine Bluetooth-Schnittstelle erlaubt in diesem Zusammenhang insbesondere die Übertragung digitaler Steuerdaten zur Steuerung der Steuerungsvorrichtung auf äußerst energiesparende Art und Weise.

Des Weiteren kann bei einer bevorzugten Ausgestaltung die Auswahleinrichtung zur Eingabe und/oder Ausgabe von Daten vorgesehen sein kann. Die Auswahleinrichtung kann die Funktion einer Benutzerschnittstelle erfüllen. Über die Auswahleinrichtung kann beispielsweise eine neue Programmierung des jeweiligen Systemmodus vorgenommen werden, indem Steuerdaten und/oder Sollwertvorgaben eingegeben werden. Durch eine Datenausgabe, insbesondere durch eine Anzeige mittels einer Anzeigeeinrichtung, kann eine Rückmeldung an den Benutzer erfolgen, etwa zur Bestätigung eingegebener Daten und/oder wenn eine Datenübertragung erfolgreich abgeschlossen wurde. In diesem Zusammenhang darf auf die vorherigen Ausführungen zur Vorgabe bzw. Erstellung eines Systemmodus mit einer externen Einrichtung, wie einem mobilen Endgerät, verwiesen werden.

Vorzugsweise weist die Auswahleinrichtung wenigstens einen Druckschalter und/oder ein kapazitives Element auf. Ein Druckschalter kann dabei einfache Schaltaufgaben übernehmen und insbesondere als Taster dienen. Durch ein kapazitives Element ergeben sich darüber hinaus weitere Möglichkeiten. Bei einem solchen Element lassen sich verschiedene Bereiche einer Eingabefläche zur Ausführung verschiedener Funktionen definieren. Zudem unterstützt ein kapazitives Element auch Bedienungsformen, die über die Funktionen eines reinen Drucktasters hinausgehen. So erlauben beispielsweise Wischgesten die Einstellung von Werten in Anlehnung an die Funktionsweise eines Schiebereglers anstelle der Eingabe eines konkreten Wertes. Dadurch kann etwa eine Dimmersteuerung für eine Beleuchtungseinrichtung oder ähnliches realisiert werden und dem jeweiligen Systemmodus vorgegeben werden.

Alternativ oder zusätzlich kann vorgesehen sein, dass die Auswahleinrichtung erst bedienbar oder benutzbar ist, nachdem eine Authentifizierung erfolgt ist, insbesondere durch Eingabe eines Codes und/oder biometrischer Identifikationsmerkmale wie einen Fingerdruck oder dergleichen.

Bei einer weiteren ganz besonders bevorzugten Ausführungsform der vorliegenden Erfindung ist vorgesehen, dass wenigstens zwei sich voneinander unterscheidende Sensoren des Belagselementes vorhanden sind, insbesondere wobei die wenigstens zwei Sensoren zur Erfassung von unterschiedlichen chemischen und/oder physikalischen Eigenschaften ausgebildet sind. Alternativ oder zusätzlich kann auch vorgesehen sein, dass wenigstens zwei Belagselemente mit jeweils wenigstens einem Sensor ausgestattet sind, insbesondere wobei die wenigstens zwei Sensoren der wenigstens zwei Belagselemente voneinander unterschiedlich ausgebildet sind, insbesondere zur Erfassung von unterschiedlichen chemischen und/oder physikalischen Eigenschaften. Demzufolge können wenigstens zwei unterschiedliche chemische und/oder physikalische Eigenschaften erfasst werden. Es kann auch vorgesehen sein, dass eine Mehrzahl von Belagselementen in dem Belag mit wenigstens einem Sensor zur Erfassung einer chemischen und/oder physikalischen Größe ausgestattet ist, so dass eine diesbezügliche Überwachung des Raumes an mehreren Stellen erfolgen kann.

Es kann beispielsweise vorgesehen sein, dass wenigstens ein Sensor des Belagselementes das Belagssignal an die Steuerungsvorrichtung aussendet, wohingegen wenigstens ein weiterer Sensor ebenfalls ein weiteres Belagssignal an die Steuerungsvorrichtung übertragen kann, das als - zuvor erläuterte - weitere Variable bzw. als weiterer Parameter zur Vorgabe der initiierenden Funktion bzw. Aktion dient. So kann der wenigstens eine weitere Sensor Einfluss auf das von der Steuerungsvorrichtung über die Kommunikationseinrichtung ausgesendete wenigstens eine Steuerungssignal haben. Letztlich kann so die Anpassbarkeit des Steuerungssystems an unterschiedliche Situationen im Gebäude bzw. in einem Raum des Gebäudes erhöht werden, wobei eine individuelle und an den jeweiligen Nutzer angepasste Steuerung des Systems erfolgen kann. Insbesondere passt sich das Smart-Home-System den Bedürfnissen des Nutzers in flexibler Art und Weise an, indem auf unterschiedliche Situationen in vorgebbarer Weise reagiert werden kann. Die Situationen können zudem über die Auswahl des Systemmodus angepasst werden, so dass die Vorgabe der durchzuführenden Aktionen vom Nutzer vorgegeben werden kann.

Vorzugsweise ist der wenigstens eine Sensor zur Ermittlung der Temperatur, der Beleuchtungsstärke, von auf dem Belagselement wirkender Feuchtigkeit und/oder des auf dem Belagselement wirkenden Druckes ausgebildet.

In einer weiteren bevorzugten Ausführungsform kann der Sensor auch zur Detektion von Vibrationen und/oder Schwingungen im Belag, insbesondere im Bodenbelag, ausgebildet sein. Zudem können mit dem Sensor insbesondere ausbleibende Druckänderungen registriert werden. Des Weiteren kann auch vorgesehen sein, dass der Sensor zur Detektion einer kapazitiven Änderung ausgebildet ist.

Alternativ oder zusätzlich kann vorgesehen sein, dass der wenigstens eine Sensor zum Auslesen eines Zugangskontrollmittels ausgebildet ist. Letztlich kann vorgesehen sein, dass nach Auslesen des Zugangskontrollmittels ein diesbezügliches Belagssignal an die Steuerungsvorrichtung übertragen werden kann, die beispielsweise die Aktion, dass eine Tür geöffnet werden soll, im "Freigabe-Systemmodus" initiiert. Sollte die Steuerungsvorrichtung beispielsweise von dem "Freigabe-Systemmodus" in den "Sicherungs-Systemmodus" wechseln, kann nach dem Auslesen des Zugangskontrollmittels weiterhin die Tür geschlossen bleiben. Somit kann sich individuell an unterschiedliche vorgebbare Rahmenzustände angepasst werden.

Über das Zugangskontrollmittel kann ein möglicher Zugriff zu einem Raum gesteuert werden, wobei der Sensor und damit einhergehend das Belagselement das Zugangskontrollmittel auslesen und damit sicherstellen kann, dass nur autorisierte Personen einen bestimmten Bereich bzw. Raum betreten können. Des Weiteren kann zusätzlich oder alternativ von dem Zugangskontrollmittel auch Energie, insbesondere zur Energieversorgung einer Funktionsschicht, insbesondere im bzw. im Bereich des Belagselements, an den Sensor übertragen werden. Das Zugangskontrollmittel kann derart mit dem Sensor gekoppelt sein, dass der Sensor Personenauthentifizierungsdaten von dem Zugangskontrollmittel empfangen kann. Beispielsweise ist als Zugangskontrollmittel eine RFID-Karte und/oder ein RFID-Prinzip vorgesehen. RFID (radio-frequency identification / Identifizierung mit Hilfe elektromagnetischer Wellen) kennzeichnet ein automatisches und berührungsloses Identifizieren sowie Lokalisieren von Objekten sowie Lebewesen mittels Radiowellen und stellt somit eine Technologie für ein Sender-Empfänger-System dar. In diesem Fall wäre der Sender das Zugangskontrollmittel und der Empfänger der Sensor.

Vorteilhafterweise wird ein aktives Handeln von der zu authentifizierenden Person vermieden, so dass die Person nicht mehr, wie bisher üblich, das Zugangskontrollmittel direkt vor einem Lesegerät positionieren muss. Das Zugangskontrollmittel kann ferner auch einem Objekt oder einem Lebewesen implantiert werden, so dass automatisch bei Betreten des Belagselementes eine Authentifizierung erfolgen kann. Insbesondere lässt sich durch die Kopplung des Zugangskontrollmittels mit dem Sensor ein gesicherter sowie beschränkter Zugang zu einem Raum bzw. einem abgeschlossenen Bereich ermöglichen. Neben oder zusätzlich zu einer Zugangsberechtigung kann eine Datenerfassung durch das Zugangskontrollmittel derart erfolgen, dass die Personen durch die von dem Sensor erfasste Information authentifizierbar bzw. zuordnenbar sind.

Vorzugsweise ist als Sensor ein piezoelektrischer Sensor, insbesondere zur Bestimmung des auf dem Belagselement wirkenden Druckes, vorgesehen. Besonders vorteilhaft ist, dass der als piezoelektrischer Sensor ausgebildete wenigstens eine Sensor aufgrund des erfassten Druckes die zur Messung benötigte Energie selbst aufbringt. Die mechanische Verformung eines Piezokristalls infolge einer Krafteinwirkung durch Zug oder Druck generiert nämlich Ladungen, die an den Elektroden des Piezoelementes als elektrische Spannung messbar sind. Mit der Umwandlung verfügbarer Energie aus der Umgebung wird eine autarke Energieversorgung kleiner elektrischer Verbraucher, nämlich der Sensoren und/oder die Sendeeinrichtung, ermöglicht.

Ferner kann der wenigstens eine Sensor alternativ oder zusätzlich als Sensor mit planarer wirksamer Sensorfläche ausgebildet sein. Insbesondere ist vorgesehen, dass der wenigstens eine Sensor eine kapazitive Sensorfläche aufweist. Darüber hinaus kann der wenigstens eine Sensor wenigstens zwei planar zueinander angeordnete Elektroden auf einen, insbesondere an dem Belagselement angeordneten, Substrat die Sensorfläche bilden.

Als kapazitiver Sensor ist insbesondere ein Sensor zu verstehen, der auf Basis der Veränderung der elektrischen Kapazität (zum Beispiel eines einzelnen Kondensators oder eines Kondensatorsystems) arbeitet. Letztlich misst und/oder erfasst der kapazitive Sensor eine Kapazitätsänderung. Eine Kapazitätsänderung kann insbesondere durch eine Veränderung eines Objektes (beispielsweise eine Person) oberseitig bzw. im Bereich des Belagselementes und/oder des Sensors und/oder im Raum (räumliche Veränderung) erfolgen.

Alternativ oder zusätzlich kann vorgesehen sein, dass der wenigstens eine Sensor ein kapazitiver Drucksensor ist. Darüber hinaus kann alternativ oder zusätzlich als kapazitiver Sensor ein Abstandssensor und/oder ein Näherungsschalter verwendet werden. Insbesondere kann der kapazitive Sensor derart ausgebildet sein, dass beispielsweise die aktive Sensorfläche des Sensors die Annäherung von einer Person und/oder eines Objektes detektiert.

Bevorzugt kann der Sensor auch als Beschleunigungssensor zum Messen insbesondere unterschiedlich starker Vibrationen ausgebildet sein, die beispielsweise durch die Bewegungen und/oder Handlungen von Personen auf und/oder in der Nähe des Beschleunigungssensors hervorgerufen werden.

Letztlich ist der Sensor bevorzugt als Drucksensor ausgebildet. Der Drucksensor ist derart ausgebildet, dass er eine Druckdifferenz, einen stationären Druck und/oder Druckschwankungen misst. Erfindungsgemäß sind unterschiedliche Ausbildungen des Drucksensors möglich. Ferner kann der Drucksensor derart ausgebildet sein, dass er das Ausbleiben einer Druckänderung von einem auf den Belagselement wirkenden Druck erfasst.

Eine Erfassung von der auf das Belagselement wirkenden Druckänderung zeigt sich beispielsweise bei der Verwendung des Belagselementes zur Bildung eines Bodenbelages als vorteilhaft. So kann erfindungsgemäß erkannt werden, ob eine Person einen mit dem wenigstens einen Sensor ausgestatten Bereich eines Belages betritt und/oder gefallen und/oder gestürzt ist.

Das gleiche Prinzip (Druckmessung) ist auch beim Betreten von dem Belagselement anwendbar, so dass beispielsweise der mit dem Sensor ausgestattete Bereich des Belages in Kombination mit einer Alarmanlage, die beispielsweise über die von dem Steuerungssystem initiierte Funktion auslösbar ist, genutzt werden kann. Bei "Scharfstellung" bzw. in einem diesbezüglich ausgewählten Systemmodus ("Sicherheitsmodus") kann ein Betreten von dem Bodenbelag, insbesondere durch eine Person, zu einem Auslösen eines Alarms führen, der insbesondere durch die von der Steuerungsvorrichtung initiierte Funktion ausgelöst wird.

Hier ist auch das Registrieren von einer gestürzten Person vorteilhaft, insbesondere im Fall von morbiden und/oder kranken und/oder schwachen Menschen, deren Gesundheitszustand überwacht werden sollte. So können gestürzte Menschen zeitnah Hilfe erhalten, insbesondere ohne einen Alarm "aktiv" auslösen zu müssen. Gesundheitliche Langzeitschäden können insbesondere hierdurch reduziert werden. Die initiierende Funktion kann also beispielsweise darin bestehen, dass Hilfe gerufen wird.

Darüber hinaus kann bei einer weiteren bevorzugten Form vorgesehen sein, dass - sofern der wenigstens eine Sensor als kapazitiver Sensor ausgebildet ist - dieser sich zumindest im Wesentlichen vollflächig über das Belagselement erstreckt. Alternativ oder zusätzlich kann auch vorgesehen sein, dass der wenigstens eine kapazitive Sensor sich teilflächig über das Belagselement erstreckt.

Vorzugsweise ist zwischen der Trägerplatte und der Deckschicht wenigstens eine eine gedruckte Schaltung aufweisende Funktionsschicht vorgesehen. Insbesondere kann der wenigstens eine Sensor der Funktionsschicht zugeordnet und/oder in der Funktionsschicht angeordnet sein.

Alternativ oder zusätzlich kann vorgesehen sein, dass die die Schaltung aufweisende Funktionsschicht unterhalb der Trägerplatte - das heißt der Deckschicht abgewandt - angeordnet ist. Auch der wenigstens eine Sensor, der insbesondere der Funktionsschicht zugeordnet und/oder in dieser angeordnet ist, kann unterhalb der Trägerplatte angeordnet sein.

Demzufolge kann vorgesehen sein, dass der wenigstens eine Sensor und/oder die Funktionsschicht in den oberen Schichtaufbau des Belagselementes, das heißt zumindest im Wesentlichen oberhalb der Trägerplatte integriert wird oder zumindest im Wesentlichen unterhalb der Trägerplatte angeordnet wird.

Bei einer bevorzugten Ausführungsform der vorliegenden Erfindung sind an gegenüberliegenden Seiten der Trägerplatte korrespondierende Nut-Feder-Verbindungsgeometrien vorgesehen. Die Nut-Feder-Verbindungsgeometrien dienen insbesondere zur Ausbildung und zur Verwirklichung einer Klickverbindung. Bei einer Klickverbindung können die miteinander korrespondierenden Seiten ineinander eingeschwenkt bzw. ineinander eingeklickt werden. Die gegenüberliegenden Seiten der Trägerplatte weisen insbesondere eine eine Nut aufweisende Nutseite und eine der Nutseite gegenüberliegende, eine Feder aufweisende Federseite auf. Die Nutseiten und die Federseiten können insbesondere sowohl an den Querseiten als auch an den Längsseiten der Trägerplatte vorgesehen sein. Insbesondere sind an den Seitenrändern der Trägerplatte jeweils zueinander korrespondierende Nut-Feder-Verbindungsgeometrien ausgebildet, insbesondere wobei die gegenüberliegenden Seiten - das heißt die gegenüberliegenden Querseiten und die gegenüberliegenden Längsseiten - korrespondierend zueinander ausgebildet sind. Demzufolge kann die Trägerplatte eine als Nutseite ausgebildete Längs- oder Langseite und eine als Federseite ausgebildete Längs- oder Langseite sowie eine als Nutseite ausgebildete Quer- oder Kurzseite und eine als Federseite ausgebildete Quer- oder Kurzseite aufweisen.

Bei einer weiteren Ausführungsform können neben der Nut-Feder-Verbindung noch andere Verbindungsgeometrien vorgesehen sein. Insbesondere sind an gegenüberliegenden Seiten der Trägerplatte Druckknopf- und/oder Bajonettverbindungsgeometrien vorgesehen.

Demzufolge kann eine den Druckknopf aufweisende Längs- und/oder Querseite und eine zu dem Druckknopf korrespondierende Kupplungsöffnung aufweisende Längs- und/oder Querseite vorgesehen sein. Beim Bajonettverschluss können die Belagselemente untereinander über das Zusammenwirken von wenigstens einem Vorsprung und einer dazu korrespondierenden Öffnung miteinander verbunden werden. Insbesondere kann vorgesehen sein, dass die Belagselemente über "Ineinanderstecken" und relatives Verschieben zueinander lösbar verbindbar sind.

Bei einer weiteren bevorzugten Ausführungsform kann vorgesehen sein, dass die Funktionsschicht wenigstens einen Aktor, insbesondere ausgebildet in Form einer Leuchtschicht und/oder als mechanischer Aktor, und/oder wenigstens eine Leiterbahn zur Energieübertragung von elektrischem Strom aufweist.

Letztlich kann über die Funktionsschicht dem Belagselement eine elektrische Funktionalität zugeordnet werden, die insbesondere über die Funktionsschicht ausgeführt werden kann.

Die in den Schichtaufbau des Belagselementes integrierte Funktionsschicht erlaubt einen flexiblen Einsatz von funktionalen Elementen im Zusammenhang mit dem Belagselement. Die Funktionalität hängt dabei letztlich von der Beschaffenheit bzw. Ausgestaltung der Funktionsschicht ab. Ein Aktor dient dabei zur Umsetzung eines elektrischen Signals in eine gewünschte Wirkung.

Die Integration von einer Funktionalität in Form von einer sogenannten "Printed Intelligence" und/oder "Printed Electronics" in das Belagselement führt zu einem hohen Maß an Modularität. Dadurch ergeben sich Vorteile insbesondere gegenüber der Anordnung funktionaler Elemente hinter einer Wand- oder Bodenverkleidung. Bei der Montage des Belagselementes, d.h. insbesondere bei der Installation eines Bodenbelags, können Plattenkörper mit verschiedenen Funktionalitäten in gewünschter und nahezu in beliebiger Weise miteinander kombiniert werden. Bei einer Veränderung der Anwendungssituation lassen sich funktionale Elemente, die durch in das Belagselemente integrierte Aktoren gebildet werden, leicht anpassen. Dies kann im einfachsten Fall durch einen simplen Austausch des Belagselementes gegen ein neues Belagselement mit einer entsprechend anders gestalteten Funktionsschicht erfolgen. Im Falle einer Bodenverkleidung wird eine Anpassung der funktionalen Elemente dementsprechend erleichtert, da die funktionalen Elemente als Aktoren in der Funktionsschicht des von außen zugänglichen Bodenbelags vorgesehen sind. Ein Austausch dieser Elemente ist demnach mit deutlich geringerem Aufwand verbunden als ein Austausch von Elementen hinter einer solchen Verkleidung.

Durch die Integration funktioneller Einheiten in das Belagselement wird die gewünschte Funktionalität bereitgestellt und gleichzeitig ein dezentes und ansprechendes optisches Erscheinungsbild einer mit den erfindungsgemäßen Belagselementen verkleideten Oberfläche erreicht. Dies gilt insbesondere für den inaktiven Zustand der funktionalen Einheiten. Es ist beispielsweise möglich, dass eine Leuchtschicht im Belagselement zu Beleuchtungszwecken eingesetzt wird, jedoch kein Leuchtmittel sichtbar ist, wenn auf eine künstliche Beleuchtung verzichtet werden kann oder soll.

Neben einer gedruckten Funktionsschicht sind auch Funktionsschichten möglich, bei denen die elektronischen Bestandteile bzw. Bauteile auf einen Träger, insbesondere eine Folie, montiert und/oder angebracht sind. Insbesondere kann die Funktionsschicht über die sogenannte Chip-on-Board-Technologie aufgebracht sein, bei der ungehäuste Halbleiter-Chips in Direktmontage elektrisch kontaktierend mit der Leiterplatte verbunden sind.

Bevorzugt wird eine Leiterplatte mit verarbeitenden, sendenden und/oder empfangenden Bestandteilen ausgestattet und in einer Funktionsschicht eingesetzt, wobei von dieser Leiterplatte, insbesondere gedruckte, Leiterbahnen zu, insbesondere gedruckten, Sensoren führen und diese Bestandteile miteinander verbinden. Die Leiterbahnen können die Sensoren mit Energie versorgen und/oder die von dem Sensor erfassten Daten an die Leiterplatte zur Übermittlung des Belagssignals übertragen.

Weist die Funktionsschicht wenigstens eine Leiterbahn auf, so kann elektrischer Strom in unauffälliger Weise, das heißt ohne sichtbare Leitungen, zu einer Nutzungsstelle, beispielsweise einem weiteren Belagselement mit einem funktionalem Element, übertragen werden. Die Leiterbahn dient hierbei zur Energieübertragung zu einem externen elektrischen Verbraucher. Extern bedeutet in diesem Zusammenhang, dass der Verbraucher nicht Teil des betreffenden Belagselementes ist, also mit diesem nur elektrisch koppelbar ist. Zur Energieübertragung weist die Leiterbahn daher einen größeren Leitungsquerschnitt auf als die leitenden Verbindungen einer beispielsweise als integrierter Schaltkreis ausgebildeten gedruckten Schaltung.

Der Leitungsquerschnitt der Leiterbahn zur Energieübertragung beträgt vorzugsweise wenigstens 0,005 mm², bevorzugt wenigstens 0,01 mm², weiter bevorzugt wenigstens 0,05 mm² und besonders bevorzugt wenigstens 0,1 mm². Dadurch wird die Erwärmung der Leiterbahn bei der Stromleitung auf ein vertretbares Maß beschränkt, selbst wenn höhere Stromstärken zur Energieversorgung eines leistungsstärkeren Verbrauchers oder einer Mehrzahl von Verbrauchern übertragen werden.

Im Gegensatz zu Stromleitungen, die hinter einem Belagselement vorgesehen sind, ist es bei einer bevorzugten Lösung in einfacher Weise möglich, die über die Leiterbahn im Inneren des Belagselementes bereitgestellte elektrische Energie zu nutzen. Dazu kann wenigstens ein vorderseitig und/oder rückseitig und/oder stirnseitig des Plattenkörpers angeordnetes Anschlusselement und/oder randseitig angeordnete Anschlussflächen zur Kontaktierung der Leiterbahn dienen.

Wird die gedruckte Schaltung alternativ oder zusätzlich als separate Schicht ausgebildet, insbesondere durch Aufbringung der Schaltung auf einen Schichtträger, ist es dagegen möglich, mit geringem Aufwand aus einer Vielzahl von vorbereiteten Funktionsschichten bedarfsweise eine geeignete auszuwählen und in den Schichtenverbund des Belagselementes vor dessen letztlicher Herstellung einzubringen.

Insbesondere ist unter einer Funktionsschicht im Sinne der vorliegenden Erfindung eine elektrisch leitende Funktionsschicht zu verstehen. Dabei versteht es sich letztlich, dass die Funktionsschicht und/oder die Funktionsschichten auf einer Trägerschicht aufgebracht und/oder an einer Trägerschicht angeordnet sein können. Demgemäß kann sich die Funktionsschicht bereichsweise auf dem Belagselement erstrecken, wobei die die Funktionsschicht und/oder die Funktionsschichten aufweisende Trägerschicht sich über die gesamte Breite und/oder Länge des Belagselementes erstrecken kann. Die Leiterplatte bzw. die Funktionsschicht kann auf die Trägerschicht aufgedruckt sein, wobei unterschiedliche Druckmethoden denkbar sind: Siebdruck, Tampondruck, Digitaldruck und/oder Bedampfung. Des Weiteren ist auch eine getrennte Herstellung der Funktionsschicht bzw. der Leiterplatte möglich, wobei die Funktionsschicht vor Anordnung auf dem Belagselement mit der Trägerschicht verbunden werden kann.

Der Schichtaufbau wird zur Herstellung des Belagselementes vorzugsweise verpresst und die Schichten dadurch fest miteinander verbunden. Im Fall von Paneelen für einen Bodenbelag ist beispielsweise das Kurztakt-Pressverfahren (KT-Verfahren) ein üblicher Herstellungsprozess. Ferner können die Schichten auch aufkaschiert werden. Auch andere Fügeverfahren sind möglich, beispielsweise Laminieren, Kalandrieren, Bondieren und/oder Extrudieren. Zudem ist es auch möglich, nur mit einer Lackoberfläche zu arbeiten und/oder Wachs und/oder Öl aufzutragen. Ebenso sind Pulverbeschichtungen, Folienbeschichtungen und/oder andere Verfahren zum Oberflächenschutz möglich.

Die Herstellung des Belagselementes wird außerdem vereinfacht bzw. beschleunigt, wenn zur Herstellung der Funktionsschicht, das heißt zum Aufbringen der gedruckten Schaltung, ein Standarddruckverfahren eingesetzt werden kann. Dazu weist die gedruckte Schaltung zweckmäßigerweise ein mittels Digitaldruck und/oder Siebdruck und/oder Rollenoffsetdruck aufbringbares, leitfähiges Material auf. Hierbei lässt sich insbesondere eine Tinte gut bei einem Digitaldruckverfahren verarbeiten, während bei anderen Druckverfahren eine entsprechende Druckfarbe eingesetzt wird. Die Tinte bzw. Druckfarbe erhält ihre für die Schaltung erforderliche Leitfähigkeit vorzugsweise durch enthaltene leitfähige Partikel, insbesondere Silberpigmente, Kupferpigmente und/oder Carbon bzw. Kohlenstofffasern.

Der Sensor kann dabei in der Funktionsschicht und/oder einer separaten zusätzlichen Sensorschicht vorgesehen sein. Hierbei ergeben sich unterschiedliche Vorteile in Abhängigkeit von der Beschaffenheit des Sensors. Durch die Anordnung des Sensors in der Funktionsschicht erhöht sich der Integrationsgrad, so dass eine insgesamt platzsparende Konstruktion der Funktionsschicht bzw. des Belagselementes als solchen möglich ist. In anderen Fällen kann es erforderlich sein, den Sensor von der Funktionsschicht zu entkoppeln, beispielsweise um ihn im Schichtaufbau näher zur Oberfläche des Belagselementes anzuordnen.

Bei einer bevorzugten Ausführungsform des Belagselementes ist unterhalb von der Deckschicht eine Dekorschicht vorgesehen. Dadurch lässt sich das optische Erscheinungsbild des Belagselementes beeinflussen. Diesem kann auf diese Weise insbesondere das Aussehen eines natürlichen Werkstoffs verliehen werden. In diesem Zusammenhang sind insbesondere eine Holz- und/oder eine Steinoptik zu nennen. Es versteht sich, dass dem Belagselement mittels der Dekorschicht grundsätzlich ein beliebiges Erscheinungsbild verliehen werden kann. Ebenso ist möglich, auf die Dekorschicht ganz oder teilweise zu verzichten, um bewusst Teile der Funktionsschicht nach außen hin sichtbar werden zu lassen. In diesem Falle kann die Dekorschicht auch die Funktion einer, insbesondere relief-ausgleichenden, Negativmaskenschicht übernehmen.

Als Träger der Dekorschicht eignet sich insbesondere ein Dekorpapier oder auch eine Folie. Die Dekorschicht und die Folie sind vorzugsweise transluzent bzw. transparent ausgebildet. Es ist dadurch möglich, die Dekorschicht mittels der Funktionsschicht zu hinterleuchten, um einen optischen Effekt, beispielsweise zur Signalisierung und/oder zur Raumgestaltung, zu erzielen. Der transluzente bzw. transparente Bereich des Dekorpapiers bzw. der Folie kann auch nur bereichsweise vorgesehen sein. Möglich ist darüber hinaus auch, dass ein Dekorpapier oder eine Folie sowohl transluzente als auch transparente Bereiche aufweist. Die letztliche Ausgestaltung von der Dekorschicht sowie von dem Träger der Dekorschicht hängt von der Anwendungssituation ab.

Die Funktionsschicht ist vorzugsweise zwischen der Trägerplatte und der Dekorschicht, d.h. ggf. auch auf dem Dekorpapier und/oder auf der Folie, angeordnet. Die Funktionsschicht ist dadurch von der Unterseite her gegen mechanische Beschädigungen geschützt, während sie von der Oberseite her durch die Dekorschicht verdeckt werden kann, falls dies gewünscht ist. Dadurch ist die Funktionsschicht sicher und unauffällig in das Belagselement integriert.

Bei einer weiteren bevorzugten Ausführungsform ist vorgesehen, dass die Funktionsschicht unterhalb der Trägerplatte - d.h. der Dekorschicht und/oder der Oberseite abgewandt - angeordnet ist. Vorzugsweise weist die Trägerplatte Aussparungen, insbesondere in Form einer Negativmaskenschicht, zur Aufnahme der Funktionsschicht auf.

Alternativ oder zusätzlich zu einem Dekorpapier und/oder einer Folie als Träger der Dekorschicht kann die Dekorschicht auch unmittelbar auf die Funktionsschicht aufgedruckt sein. Dies vereinfacht den Schichtaufbau des erfindungsgemäßen Belagselementes und trägt zu einer Verringerung der Bauhöhe des Belagselementes bei.

Wenigstens eine Gegenzugschicht unterhalb der Trägerschicht kann einer mechanischen Deformation des Belagselementes entgegenwirken, wenn diese eine ausreichende mechanische Festigkeit aufweist.

Der durch wenigstens ein Belagselement gebildete Belag kann beispielsweise als Vinyl-Belag, als modularer Boden, Laminat und/oder Parkett ausgebildet sein.

Der wenigstens eine Sensor kann insbesondere rasterförmig und/oder als Raster ausgebildet in der Funktionsschicht integriert ist. Darüber hinaus kann ebenfalls wenigstens ein Rasterpunkt des Drucksensors die Schwingung der gesamten Trägerplatte aufnehmen und, vorzugsweise, dadurch einen Impuls auslösen. Der Drucksensor beruht darauf, dass die Druckbelastung auf dem Belagselement einen Impuls erzeugt.

Zudem kann bei einer weiteren bevorzugten Ausgestaltung der Erfindung der Funktionsschicht und/oder dem Sensor und/oder der Sendeeinrichtung wenigstens ein Energieversorgungsmittel zugeordnet und/oder in der Funktionsschicht und/oder in dem Sensor integriert sein. Das Energieversorgungsmittel kann einen, vorzugsweise gedruckten, Energiespeicher, insbesondere eine Dünnschichtbatterie, aufweisen. Alternativ oder zusätzlich kann das Energieversorgungsmittel zum, vorzugsweise kabellosen, Empfangen von Energie durch den Sensor ausgebildet sein. Folglich lässt sich eine energieautarke Versorgung des Belagselementes gewährleisten. Beispielsweise weist den Sensor wenigstens ein Piezo-Element auf, bei dem aufgrund der Druckbelastung eine elektrische Spannung erzeugt werden kann, die letztlich zur Energieversorgung der Funktionsschicht über das Energieversorgungsmittel dienen kann. Des Weiteren kann das Energieversorgungsmittel auch ein photovoltaisches Element aufweisen, wobei Lichtenergie in elektrische Energie mittels Solarzellen umgewandelt werden kann. Außerdem ist es auch denkbar, das Energieversorgungsmittel über Induktion zu laden oder eine Energieversorgung von Belagselement zu benachbarten Belagselement über entsprechende Leiterbahnen und/oder Kontaktflächen zu ermöglichen. In diesem Zusammenhang versteht es sich, dass die für die Funktionsschicht und/oder Sendeeinrichtung benötigte Energie in Form von Strom bzw. in Form von elektrischer Energie zur Verfügung gestellt werden kann.

Vorzugsweise ist das Belagselement, insbesondere oberseitig und/oder unterseitig, wasserfest, wasserdicht und/oder wasserabweisend ausgebildet. Die Wasserfestigkeit kann anhand vom Einsatzzweck ausgewählt werden. Insbesondere hält das Belagselement oberseitig und/oder unterseitig einer Wassersäule von größer 1000 mm, bevorzugt zwischen 1000 bis 50000 mm, weiter bevorzugt zwischen 5000 bis 10000 mm, stand. Die zuvor genannte Wassersäule ist nach der DIN EN 2081 bestimmt und gibt die hydrostatische Druckhöhe an, der ein Flächengebilde Stand hält.

Sie ist dabei ein Maß für die Höhe des Widerstands, dem das Flächengebilde dem Durchdringen von Wasser entgegensetzt.

Verwendung kann das erfindungsgemäße Steuerungssystem neben einer Anwendung im Bereich eines Smart-Homes auch in der Gesundheits- und der Sicherheitsbranche finden. Beispielsweise kann das erfindungsgemäße Steuerungssystem erkennen, ob eine hilfsbedürftige Person auf dem Belagselement liegt und sich bewegt oder nicht, so dass von einem Sturz ausgegangen werden kann. Ebenfalls können Raumparameter bzw. eine physikalische Größe durch das erfindungsgemäße Belagselement überwacht werden und die Verarbeitungseinrichtung kann entsprechend der durch den Sensor des Belagselementes erfassten Information reagieren. So kann beispielsweise die Raumfeuchte, die Temperatur und/oder die Beleuchtungsstärke geregelt und/oder gesteuert werden. Zudem kann im Bereich eines Smart-Homes entsprechend der durch das Belagselement erfassten Information - durch Vorgabe der Verarbeitungseinrichtung - die Heizung und/oder die Jalousien geregelt und/oder gesteuert werden.

Des Weiteren ist bei einer weiteren bevorzugten Ausgestaltung ein Verfahren unter Verwendung eines Steuerungssystem nach wenigstens einer der zuvor beschriebenen Ausführungsformen vorgesehen, wobei eine kontinuierliche Auswahl des Systemmodus über die Auswahleinrichtung erfolgen kann.

Bevorzugt ist vorgesehen, dass die Steuerungsvorrichtung nach Empfangen des Belagssignals wenigstens eine dem ausgewählten Systemmodus zugeordnete Funktion initiieren kann.

Insbesondere kann die Auswahleinrichtung als stationäre Eingabe und/oder als mobiles Endgerät ausgebildet sein und/oder eine berührungssensitive Benutzeroberfläche als Eingabemöglichkeit aufweisen. Die Auswahleinrichtung ermöglicht es einem Nutzer, Zugang zu einer Schnittstelle zu der Steuerungsvorrichtung zu erhalten und insbesondere die Auswahl des Systemmodus vorzugeben. Demzufolge kann über die Auswahleinrichtung eine flexible Anpassung der Funktionsweise des Steuerungssystems erfolgen.

Darüber hinaus kann über die Auswahleinrichtung eine Konfiguration des ausgewählten und/oder auszuwählenden Systemmodus, insbesondere eine Anpassung verschiedener Verarbeitungsvorgaben des Belagssignals zur Initiierung der wenigstens einen Funktion, erfolgen. Somit kann das Steuerungssystem individuell auf die Bedürfnisse des Nutzers abgestimmt werden und einen hohen Grad der Individualisierbarkeit bereitstellen.

Es versteht sich, dass in dem ausgewählten Systemmodus nach Empfangen und Verarbeiten des Belagssignal auch eine Mehrzahl von Funktionen initiiert werden kann - d.h. insbesondere eine Funktionskombination. Die Funktionen können gleichzeitig und/oder sukzessiv initiiert werden.

Im Hinblick auf bevorzugte Ausführungsformen und/oder erfindungsgemäße Vorteile darf auf das bisherige Vorbringen verwiesen werden, das in gleicher Weise erfindungsgemäß auch für das Verfahren gilt.

Des Weiteren sei noch auch folgende Aspekte der vorliegenden Erfindung verwiesen, die jeweils mit wenigstens einer der zuvor beschriebenen Ausführungsformen kombinierbar sind und/oder vorzugsweise unabhängige Erfindungsaspekte darstellen, denen bereits für sich eine erfinderische Tätigkeit zukommt:
Gemäß einer ersten bevorzugten Alternative ist insbesondere ein Steuerungssystem, insbesondere für Gebäude, mit einer Steuerungsvorrichtung und wenigstens zwei Belagselementen eines Belages vorgesehen, wobei das Belagselement wenigstens einen, insbesondere mit der Steuerungsvorrichtung gekoppelten, Sensor zur Erfassung wenigstens einer chemischen und/oder physikalischen Eigenschaft zur Erzeugung eines Belagssignals aufweist, wobei die Belagselemente zur Übermittlung von Belagssignalen an die Steuerungsvorrichtung ausgebildet sind. Weiter ist erfindungsgemäß vorgesehen, dass die Steuervorrichtung in einer Mehrzahl unterschiedlicher Betriebszustände betreibbar ist und in den Betriebszuständen zur Verarbeitung der Belagssignale und zur Initiierung von Funktionen ausgebildet ist. In der Steuerungsvorrichtung sind zudem für einen Betriebszustand wenigstens ein jeweils wenigstens ein Belagselement oder wenigstens zwei Belagselemente zur gemeinsamen und/oder gebündelten Verarbeitung der Belagssignale umfassendes Cluster hinterlegt. Wenigstens zwei Betriebszustände unterscheiden sich voneinander durch wenigstens zwei sich voneinander unterscheidende Cluster.

Gemäß einer weiteren Alternative ist vorzugsweise ein Steuerungssystem, insbesondere für Gebäude, mit einer Steuerungsvorrichtung und wenigstens zwei Belagselementen eines Belages vorgesehen, wobei das Belagselement wenigstens einen mit der Steuerungsvorrichtung gekoppelten Sensor zur Erfassung wenigstens einer chemischen und/oder physikalischen Eigenschaft zur Erzeugung eines Sensorsignals aufweist. Die Sensoren sind zur Übermittlung von Sensorsignalen an die Steuerungsvorrichtung ausgebildet. Die Steuerungsvorrichtung wiederum ist in einer Mehrzahl unterschiedlicher Betriebszustände betreibbar, wobei die Steuerungsvorrichtung in den Betriebszuständen zur Verarbeitung der Sensorsignale und zur Initiierung von Funktionen ausgebildet ist. In der Steuerungsvorrichtung ist für einen Betriebszustand wenigstens ein jeweils ein Sensor oder wenigstens zwei Sensoren zur gemeinsamen und/oder gebündelten Verarbeitung der Sensorsignale umfassendes Cluster hinterlegt, wobei sich wenigstens zwei Betriebszustände voneinander durch wenigstens zwei sich voneinander unterscheidende Cluster unterscheiden.

Ein Betriebszustand kann bevorzugt als Moment bzw. Zustand angesehen werden, der im Hinblick auf seine in ihm hinterlegten Cluster kontinuierlich verändert werden kann. So kann es als ein Zustand angesehen werden, dass beispielsweise das Wohnzimmer eingerichtet ist und dem Bereich vor der Couch ein erstes Cluster und einem weiteren Bereich vor dem Fernseher ein weiteres Cluster zugeordnet wird. Sollte sich die Möblierung des Raumes ändern, kann auch der Betriebszustand geändert werden, indem die Zuordnung zu den Clustern von den Sensoren und/oder den Belagselementen geändert wird. Demnach können die alten Cluster verändert oder "aufgegeben" und neue Cluster in dem neuen Betriebszustand hinterlegt werden. So kann beispielsweise dem Bereich vor der verschobenen Couch ein neues Cluster zugewiesen werden. Dies ermöglicht die Anpassung des Belags an unterschiedliche Einsatzvorgaben, die sich insbesondere auch verändern können, wobei durch die Clusterung eine solche Veränderung berücksichtigt werden kann.

Erfindungsgemäß versteht es sich, dass die beiden bevorzugten Ausführungsformen auch miteinander kombiniert werden können. Letztlich kann das Belagselement eine Mehrzahl von Sensoren aufweisen, die gemäß der zweiten Alternative individuell in Clustern zusammengefasst werden können.

Die Betriebszustände können sich voneinander durch unterschiedlich ausgeführte Funktionen, die nach Verarbeitung des Belagssignals und/oder des Sensorsignals initiiert werden können, und/oder durch die unterschiedlichen Cluster unterscheiden.

Unter einem Cluster ist erfindungsgemäß die ermöglichte gemeinsame und gebündelte Verarbeitung von Signalen zu verstehen. Der Steuerungsvorrichtung kann ein Signal - das heißt ein Sensorsignal und/oder ein Belagssignal - aus einem Cluster übermittelt werden, das entsprechend der Verarbeitungsvorgaben, die in der Steuerungsvorrichtung hinterlegt sind, verarbeitet werden kann. Dabei können die aus demselben Cluster stammenden Signale gebündelt und/oder gemeinsam verarbeitet werden. Diese Form der Signalverarbeitung kann insbesondere mit der jeweils initiierten Funktion verknüpft sein.

Insbesondere wird der Begriff "Cluster" als Bezeichnung für eine in der Steuerungsvorrichtung hinterlegte Verarbeitungsvorgabe (beispielsweise eine Software) genutzt, mit der die Sensorsignale und/oder Belagssignale verarbeitbar sind. Wie zuvor erläutert, kann beispielsweise das Belagssignal und/oder das Sensorsignal eines jeweiligen Clusters mit der Initiierung einer jeweiligen Funktion verknüpft sein, insbesondere wobei sich die mit den verschiedenen Clustern verknüpften Funktionen voneinander unterscheiden.

Insbesondere versteht es sich, dass die von der Steuerungsvorrichtung initiierten Funktionen externe Funktionen bzw. Aktionen sein können, beispielsweise von in dem Gebäude und in dem Steuerungssystem angeordneten und/oder dem Steuerungssystem zugeordneten Einrichtungen. So kann beispielsweise eine durchgeführte Funktion darin bestehen, dass ein Alarm mittels einer Alarmeinrichtung ausgelöst oder dass eine Jalousie geschlossen wird. Letztlich ist die Steuerungsvorrichtung zur Steuerung von weiteren Einrichtungen und/oder als Schnittstelle (sogenannte Gateway-Funktion) zu weiteren Systemen ausgebildet, die insbesondere wiederum zur Durchführung bzw. Ausführung der Funktionen ausgebildet sein können.

Insbesondere können die Cluster mit von der Steuerungsvorrichtung initiierbaren Funktionen verknüpft sein, insbesondere derart, dass in Abhängigkeit eines einem Cluster zugehörigen Belagssignals und/oder Sensorsignals eine bestimmte und vorgebbare Funktion initiiert wird. So kann vorgesehen sein, dass das Belagssignal und/oder das Sensorsignal eines ersten Clusters zur Initiierung einer ersten Funktion (beispielsweise in einem Ausführungsbeispiel das Anschalten von Licht in einem Raum) führt. Ein, insbesondere gleich ausgebildetes, Sensorsignal und/oder Belagssignal aus einem weiteren Cluster kann dann zu einer sich von der ersten Funktion unterscheidenden weiteren Funktion führen (beispielsweise in einem Ausführungsbeispiel zum Schließen einer Tür).

Vorzugsweise kann alternativ oder zusätzlich auch vorgesehen sein, dass die dem Cluster zugeordnete und/oder die mit dem Cluster verknüpfte wenigstens eine Funktion in Abhängigkeit von dem Belagssignal und/oder dem Sensorsignal, beispielsweise von der Größe und/oder Intensität und/oder der Anzahl, durchgeführt wird.

Die Möglichkeit unterschiedliche Cluster zu bilden, eröffnet eine hohe Flexibilität des Steuerungssystems, insbesondere für verschiedene Betriebszustände.

Darüber hinaus ist bevorzugt wenigstens ein erstes Cluster und wenigstens ein weiteres Cluster vorgesehen. In dem ersten Cluster kann beispielsweise ein Sensor und/oder ein Belagselement angeordnet sein. Es kann auch vorgesehen sein, dass in dem ersten Cluster eine Mehrzahl von weiteren Belagselementen und/oder Sensoren angeordnet ist. In dem weiteren Cluster können darüber hinaus auch wenigstens ein Belagselement und/oder Sensor angeordnet sein. Letztlich ist es insbesondere erfindungswesentlich, wenn in Abhängigkeit von unterschiedlichen Betriebszuständen, die zur Initiierung von unterschiedlichen Funktionen ausgebildet sein können, unterschiedliche Cluster genutzt werden können. So kann in einem ersten Betriebszustand das erste Cluster und in einem zweiten, sich von dem ersten Betriebszustand unterscheidenden weiteren Betriebszustand ein sich von dem ersten Cluster unterscheidendes weiteres Cluster verwendet werden. Ein Belagssignal und/oder ein Sensorsignal des ersten Clusters kann in dem ersten Betriebszustand zur Initiierung einer ersten Funktion führen. Sollte sich das Steuerungssystem jedoch in einem weiteren Betriebszustand befinden - was durch interne und/oder externe Vorgaben ermöglicht wird - kann ein Sensorsignal und/oder ein Belagssignal eines weiteren Clusters in dem weiteren Betriebszustand zur Initiierung einer weiteren Funktion führen. Die weitere Funktion kann sich insbesondere von der ersten Funktion unterscheiden. Es kann alternativ oder zusätzlich auch vorgesehen sein, dass sich die Sensorsignale und/oder die Belagssignale unterscheiden, jedoch zu einer gleichen zu initiierenden Funktion führen. Vorzugsweise kann vorgesehen sein, dass das Sensorsignal und/oder Belagssignal des ersten Clusters in dem ersten Betriebszustand zur Initiierung einer ersten Funktion führt, wobei das Belagssignal und/oder Sensorsignal, das gleich oder zumindest im Wesentlichen gleich zu dem Belagssignal und/oder Sensorsignal des ersten Clusters ist, zur Initiierung einer sich von der ersten Funktion unterscheidenden weiteren Funktion führen kann.

Beispielhaft sei dies daran erläutert, dass ein Gebäude in jedem Raum wenigstens ein Belagselement und/oder wenigstens einen Sensor des Belagselementes aufweisen kann. In einem ersten Betriebszustand kann beispielsweise eine Mehrzahl von Clustern vorgesehen sein, wobei sich ein Cluster aus den Belagselementen bzw. dem Belagselement eines Raumes zusammensetzt. So kann beispielsweise das Betreten der Küche zum Anschalten der Kaffeemaschine, das Betreten des Wohnzimmers zum Anschalten des Fernsehers usw. führen. Dieser Betriebszustand kann beispielsweise als "Betriebszustand 1" bezeichnet werden. Wechselt das Steuerungssystem von dem "Betriebszustand 1" in den "Betriebszustand 2" so kann vorgesehen sein, dass wenigstens zwei Räume, bevorzugt alle Räume, zu einem gemeinsamen Cluster zusammengefasst werden. In diesem "Betriebszustand 2" kann vorgesehen sein, dass die zu initiierenden Funktionen nach Verarbeitung der Belagssignale und/oder Sensorsignale sich von den zu initiierenden Funktionen des "Betriebszustands 1" unterscheiden. So kann ein Cluster beispielsweise aus den Räumen bzw. Bereichen in der Nähe des Eingangsbereiches gebildet werden. Ein Belagssignal und/oder Sensorsignal aus diesem Cluster kann dann beispielsweise zur Initiierung bzw. zur Aktivierung eines Alarms führen. Die weiteren Cluster der weiteren Räume können - in Abhängigkeit von den in dem "Betriebszustand 2" vorgegebenen Verarbeitungsvorgaben - andere Funktionen initiieren. Wird beispielsweise ein Sensorsignal und/oder ein Belagssignal in dem Schlafzimmer erfasst, wird kein Alarm ausgelöst, sondern das Fenster wird geöffnet.

Erfindungsgemäß wird eine, insbesondere dauerhafte, Anpassung von unterschiedlichen Bereichen des Belages zur Bildung von unterschiedlichen Clustern, insbesondere verknüpft mit unterschiedlichen zu initiierenden Funktionen, ermöglicht. Dies gewährleistet insbesondere, dass eine Neuinitialisierung oder dergleichen zur Veränderung der Funktionalität des Belages vermieden werden kann. Letztlich kann eine beliebige Clusterbildung von verschiedenen Sensoren und/oder gleichen Sensoren und/oder von verschiedenen und/oder gleich ausgebildeten Belagselementen ermöglicht werden, die in Abhängigkeit von unterschiedlichen Betriebszuständen verändert werden kann.

Vorzugsweise können die in einem Cluster zusammengefassten und/oder gebündelten Belagselemente und/oder Sensoren ein Raster bilden, so dass letztlich eine Verbindung dieser Sensoren und/oder Belagselemente in der Steuerungsvorrichtung erfolgt. Es versteht sich, dass nicht jedes Belagssignal und/oder Sensorsignal eines Clusters zwingend zur Initiierung einer Funktion führen muss, jedoch führen kann. So kann auch vorgesehen sein, dass wenigstens ein Cluster wenigstens eines Betriebszustandes so ausgebildet ist, dass durch die Steuerungsvorrichtung nach Empfangen eines Sensorsignals und/oder Belagssignals dieses Clusters keine externe Funktion initiiert wird.

Es versteht sich, dass auch in Abhängigkeit von einem Signal eines Clusters in einem Betriebszustand eine Mehrzahl von Funktionen initiiert werden kann, insbesondere in Abhängigkeit der Verarbeitung des Signals in der Steuerungsvorrichtung.

Bei einer besonders bevorzugten Ausführungsform des Erfindungsgedankens ist vorgesehen, dass die Steuerungsvorrichtung derart ausgebildet ist, dass ein erstes Belagssignal A und/oder ein erstes Sensorsignal A' eines ersten Clusters B zur Initiierung einer ersten Funktion C führt und dass ein, insbesondere zu dem ersten Belagssignal A zumindest im Wesentlichen gleiches, zweites Belagssignal D und/oder ein, insbesondere zu dem ersten Sensorsignal A' zumindest im Wesentlichen gleiches, zweites Sensorsignal D' eines sich von dem ersten Cluster B unterscheidendes zweites Cluster E ebenfalls zur Initiierung der ersten Funktion C führt. Somit kann vorgesehen sein, dass die Signale A und/oder A' des Clusters B zur selben initiierten Funktion wie die Signale D und/oder D' des Clusters E führen können.

Letztlich ist ein zumindest im Wesentlichen gleiches Signal - das heißt ein gleiches Belagssignal und/oder ein gleiches Sensorsignal - derart zu verstehen, dass dieses zumindest im Wesentlichen in denjenigen Informationen, wie beispielsweise die Zugehörigkeit zu einem bestimmten Cluster, übereinstimmt, die zur Initiierung der Funktionen verarbeitet werden. Dabei kann vorgesehen sein, dass die Signale A und A' bzw. D und D' zu unterschiedlichen Zeitpunkten ausgesendet werden. Auch können die Signale von unterschiedlichen Sensoren und/oder unterschiedlichen Belagselementen stammen oder die Messwerte der Signale können unterschiedlich sein. Demzufolge kann vorgesehen sein, dass bei den verschiedenen Clustern B und E letztlich nach Verarbeitung der Signale zumindest im Wesentlichen die gleiche Funktion initiiert wird.

In diesem Zusammenhang versteht es sich, dass auch eine Mehrzahl von Funktionen initiiert werden können, wobei wenigstens eine Funktion C übereinstimmt bzw. gleich ist. Vorzugsweise ist vorgesehen, dass der erste Cluster B in einem ersten Betriebszustand Z' und der zweite Cluster E in einem zweiten Betriebszustand Z" hinterlegt sind. Alternativ oder zusätzlich kann ebenfalls vorgesehen sein, dass der erste Cluster B und der zweite Cluster E im gleichen Betriebszustand Z hinterlegt sind.

Bei einer weiteren, ganz besonders bevorzugten Ausführungsform ist vorgesehen, dass die Steuerungsvorrichtung derart ausgebildet ist, dass ein erstes Belagssignal F und/oder ein erstes Sensorsignal F' eines ersten Clusters G zur Initiierung einer ersten Funktion H führt und dass ein, insbesondere zu dem ersten Belagssignal F zumindest im Wesentlichen gleiches, zweites Belagssignal I und/oder ein, insbesondere zu dem ersten Sensorsignal F' zumindest im Wesentlichen gleiches, zweites Sensorsignal I' eines zweiten Clusters J zur Initiierung einer sich von der ersten Funktion H unterscheidenden zweiten Funktion K führt. Insbesondere ist vorgesehen, dass die Cluster G und J sich jeweils zu den zuvor diskutierten Clustern B und E unterscheiden oder aber mit diesen übereinstimmen. Vorzugsweise ist vorgesehen, dass der erste Cluster G in einem ersten Betriebszustand L und der zweite Cluster J in einem zweiten Betriebszustand M hinterlegt ist. Alternativ oder zusätzlich kann bevorzugt der erste Cluster G und der zweite Cluster J im selben Betriebszustand hinterlegt sein.

Demzufolge kann bevorzugt vorgesehen sein, dass eine Funktion einem Cluster zugeordnet werden kann - und zwar insbesondere derart, dass nach Verarbeitung des dem Cluster angehörenden Belagssignals und/oder Sensorsignals von der Steuerungsvorrichtung eine Funktion initiiert wird. Bei einer Mehrzahl von Clustern kann dabei vorgesehen sein, dass für zwei Cluster - die im gleichen oder in unterschiedlichen Betriebszuständen hinterlegt sein können - die gleichen oder unterschiedliche Funktionen initiiert werden können. Somit wird eine hohe Variabilität an zu initiierenden Funktionen ermöglicht.

Darüber hinaus ist bei einer weiteren bevorzugten Ausführungsform vorgesehen, dass sich wenigstens zwei unterschiedliche Cluster eines gleichen Betriebszustands oder in unterschiedlichen Betriebszuständen voneinander durch unterschiedliche zu initiierende Funktionen unterscheiden, insbesondere wobei in den wenigstens zwei unterschiedlichen Clustern die gleichen Sensoren und/oder Belagselemente angeordnet sind. Beispielsweise kann ein erstes Belagssignal und/oder ein erstes Sensorsignal des ersten Clusters zur Initiierung einer ersten Funktion führen, während das erste Belagssignal und/oder das erste Sensorsignal, insbesondere vom gleichen Sensor bzw. Belagselement stammend, des zweiten Clusters zur Initiierung einer sich von der ersten Funktion unterscheidenden zweiten Funktion führen kann.

Es versteht sich insbesondere, dass die vorgenannten Ausführungen jedenfalls auch dann gelten, wenn nach Verarbeitung wenigstens eines Belagssignals und/oder Sensorsignals eines jeweiligen Clusters eine Mehrzahl von Funktionen initiiert wird. Letztlich kann die Initiierung einer Funktion in Abhängigkeit der Verarbeitung des Signals - das heißt des Belagssignals und/oder des Sensorsignals - erfolgen. So wird die Möglichkeit geschaffen, in Abhängigkeit der gewünschten zu initiierenden Funktionen die Cluster - und somit die Bereiche des Belags - einzuteilen. Somit kann sich individuell in unterschiedlichen Betriebszuständen auf die zu initiierenden, gewünschten Funktionen eingestellt werden, was zu einem hohen Grad der Individualität des Steuerungssystems führt.

Besonders bevorzugt kann so ermöglicht werden, dass die Sensoren und/oder Belagselemente gemeinsam eine Sensorfläche bilden können. Diese Sensorfläche kann durchgehend oder unterbrochen ausgebildet sein. Letztlich kann die Sensorfläche individuell an die für den Nutzer vorhandenen Bedürfnisse angepasst werden. Auch kann durch den als Sensorfläche ausgebildeten Cluster erreicht werden, dass bestimmten Sensorflächen - das heißt also den Clustern - bestimmte Funktionen, die insbesondere in Abhängigkeit des Betriebszustandes und/oder des Systemmodus variieren können, zugewiesen werden können. In weiteren Ausführungsformen kann auch vorgesehen sein, dass die Verarbeitung der Signale seitens der Steuerungsvorrichtung zumindest teilweise cloudbasiert durchgeführt wird.

Erfindungsgemäß können insbesondere Gebäudemanagementsysteme gezielter genutzt werden, wobei eine Anpassung der Sensorflächen erfolgen kann. Insbesondere wird die Steuerung der durchgeführten bzw. initiierten Funktionen flexibler gestaltet.

Vorzugsweise ist vorgesehen, dass die Steuerungsvorrichtung derart ausgebildet ist, dass die gemeinsame Verarbeitung der Belagssignale und/oder der Sensorsignale der in einem Cluster angeordneten Belagselemente und/oder Sensoren derart erfolgt, dass die Belagssignale und/oder Sensorsignale gleichwertig verarbeitet werden. In diesem Zusammenhang kann unter einer gleichwertigen Verarbeitung verstanden werden, dass bei der Verarbeitung der Belagssignale und/oder der Sensorsignale aus dem gleichen Cluster keine Berücksichtigung der weiteren Position der Belagssignale und/oder der Sensorsignale erfolgt. Letztlich können insbesondere die Belagssignale und/oder die Sensorsignale aus dem gleichen Cluster so verarbeitet werden, als ob sie von demselben Sensor und/oder Belagselement stammen würden. Demzufolge kann durch den Cluster eine Sensorfläche gebildet werden, die zur Initiierung der jeweiligen Funktion führen kann.

Bei einer weiteren ganz besonders bevorzugten Ausführungsform ist vorgesehen, dass eine Mehrzahl unterschiedlicher Systemmodi als Betriebszustände zur Verarbeitung der Belagssignale und/oder der Sensorsignale und zur Initiierung von Funktionen vorgesehen sind. Der Systemmodus kann sich von weiteren Betriebszuständen dahingehend unterscheiden, dass er durch den Nutzer bzw. durch entsprechende Vorgaben in der Steuerungsvorrichtung explizit und unmittelbar vorgegeben werden kann, wohingegen weitere Betriebszustände auch durch eine Veränderung der Cluster hervorgerufen werden können. Bei einem Wechsel eines Systemmodus ist insbesondere vorgesehen, dass auch die Verarbeitungsvorgaben der Belagssignale und/oder der Sensorsignale wenigstens eines Clusters geändert werden, wohingegen bei einem Wechsel der Betriebszustände vorgesehen sein kann, dass insbesondere lediglich die Clusterung verändert wird, wobei die Verarbeitungsvorgaben - das heißt die Verarbeitung der Belagssignale und/oder der Sensorsignale - nicht verändert werden.

Besonders bevorzugt kann in der Steuerungsvorrichtung für jeden Systemmodus wenigstens ein jeweils wenigstens ein Belagselement oder wenigstens zwei Belagselemente zur gemeinsamen und/oder gebündelten Verarbeitung der Belagssignale umfassendes Cluster hinterlegt sein. Alternativ oder zusätzlich kann vorgesehen sein, dass in der Steuerungsvorrichtung für jeden Systemmodus wenigstens ein jeweils wenigstens ein Sensor oder wenigstens zwei Sensoren zur gemeinsamen und/oder gebündelten Verarbeitung der Sensorsignale umfassendes Cluster hinterlegt ist.

Zwei Systemmodi können sich voneinander durch wenigstens zwei sich voneinander unterscheidende Cluster unterscheiden. Die Cluster wiederum können sich dahingehend voneinander unterscheiden, dass sie eine unterschiedliche Zusammensetzung der Sensoren und/oder der Belagselemente aufweisen.

Vorzugsweise kann im selben Betriebszustand und insbesondere im selben Systemmodus ein Sensor und/oder ein Belagselement in wenigstens zwei unterschiedlichen Clustern angeordnet werden. Dies ist insbesondere dann vorteilhaft, wenn den Signalen des Sensors und/oder des Belagselementes beispielsweise verschiedene zu initiierende Funktionen in dem jeweiligen Betriebszustand, insbesondere Systemmodus, zugeordnet werden sollen. So kann ein Cluster eine erste Funktion initiieren und ein weiteres Cluster weitere Funktionen, wobei durch die "Doppelbelegung" des Sensors und/oder des Belagselementes erreicht werden kann, dass wenigstens zwei unterschiedliche Verarbeitungsvorgaben für das Belagssignal und/oder Sensorsignal in der Steuerungsvorrichtung hinterlegt sein können.

Besonders bevorzugt ist vorgesehen, dass der Steuerungsvorrichtung wenigstens eine Auswahleinrichtung zur Auswahl von den einzelnen Systemmodi zugeordnet ist. Dabei kann die Auswahleinrichtung in der Steuerungsvorrichtung integriert oder als externe Einrichtung vorgesehen sein. Weiter bevorzugt kann die Auswahleinrichtung als stationäre Eingabe ausgebildet sein. Alternativ oder zusätzlich kann auch vorgesehen sein, dass die Auswahleinrichtung als mobiles Endgerät ausgebildet ist. Als Auswahleinrichtung kann auch ein technisches Gerät des Nutzers des Steuerungssystems, wie beispielsweise sein Handy oder sein Tablet, dienen, über das letztlich die Auswahl des Systemmodus erfolgen kann.

In diesem Zusammenhang versteht es sich, dass der Betriebszustand des Steuerungssystems dadurch geändert werden kann, dass der Steuerungsvorrichtung eine erste oder veränderte Clusterung der Belagselemente und/oder der Sensoren vorgegeben werden kann. Diese Vorgabe kann beispielsweise auch mittels der Auswahleinrichtung und/oder einer weiteren externen Einrichtung durchgeführt werden. So kann der Betriebszustand zumindest dadurch geändert werden, dass Belagselemente und/oder Sensoren zu unterschiedlichen Clustern zusammengesetzt werden. Ein derartiges Zusammensetzen kann beispielsweise nach einer Renovierung erforderlich sein. Auch zeigt sich eine solche Veränderung des Betriebszustandes durch eine Veränderung der Clusterung dahingehend als sinnvoll, dass eine kontinuierliche Anpassung der Funktionalität des Belages, insbesondere des Bodenbelages, erfolgen kann, indem letztlich durch die verschiedenen Cluster unterschiedliche zu initiierende Funktionen bei Beanspruchung des Belagselementes und/oder des Sensors vorgegeben werden.

Weiter bevorzugt ist vorgesehen, dass die Steuerungsvorrichtung derart ausgebildet ist, dass die Auswahl des Systemmodus und/oder des Betriebszustandes - und somit insbesondere die Festlegung der Clusterung der Sensoren und/oder der Belagselemente - in Abhängigkeit von einem weiteren Parameter von der Steuerungsvorrichtung erfolgt. Dieser weitere Parameter kann von dem Belagselement und/oder von dem Sensorsignal und/oder von einer externen Überwachungseinrichtung erfassten Überwachungsinformation abhängen. Über den weiteren Parameter kann somit eine situationsangepasste, ereignisangepasste, zeitangepasste und/oder parameterabhängige Vorgabe des Betriebszustandes und/oder des Systemmodus und letztlich somit der Clusterung erreicht werden.

Beispielsweise kann so die Clusterung bzw. die Clusterbildung in einem Raum in Abhängigkeit der Zeit geändert werden. Auch kann eine situationsangepasste Veränderung dahingehend vorgesehen sein, dass beispielsweise in Abhängigkeit des Wetters die Vorgabe der Sensoren und/oder Belagselemente innerhalb der einzelnen Cluster geändert werden kann. Demzufolge müssen die Sensoren und/oder Belagselemente nicht kontinuierlich und/oder dauerhaft den gleichen Sensorflächen bzw. Clustern zugehören, sondern können auch unterschiedlichen Clustern bzw. unterschiedlichen Sensorflächen in Abhängigkeit eines weiteren Parameters zugeordnet werden. So kann die Clusterung der Sensorflächen bzw. der Belagselemente individuell und kontinuierlich an die Bedürfnisse des Nutzers angepasst werden.

Vorzugsweise sind die unterschiedlichen Systemmodi zur Ausführung von unterschiedlichen Funktionen ausgebildet. Eine unterschiedliche Funktion kann auch umfassen, dass letztlich dieselbe "Hauptfunktion" (beispielsweise das Licht anschalten) in einer unterschiedlichen Ausprägung und/oder in einer unterschiedlichen Intensität bzw. auf eine sich verändernde Art und Weise durchgeführt wird. So kann beispielsweise die erste Funktion "das Licht anschalten in einer ersten Bestrahlungsstärke" und die zweite Funktion "das Licht in einer anderen Bestrahlungsstärke anschalten" sein. Letztlich ermöglicht die Ausführung von unterschiedlichen Funktionen, dass ein erstes Belagssignal und/oder ein erstes Sensorsignal eines ersten Clusters in einem ersten Systemmodus zur Initiierung einer ersten Funktion führt und das erste Belagssignal und/oder das erste Sensorsignal des ersten Clusters in dem zweiten Systemmodus zur Initiierung wenigstens einer sich von der ersten Funktion unterscheidenden zweiten Funktion führt. In diesem Zusammenhang versteht es sich, dass auch in dem ersten und dem zweiten Systemmodus nach Empfangen des jeweiligen Belagssignals auch wenigstens eine gemeinsame Funktion ausgeführt werden kann. Dabei können sich zwei Systemmodi durch die Ausführung wenigstens einer sich unterscheidenden Funktion voneinander unterscheiden. Es kann auch vorgesehen sein, dass nicht zwingenderweise eine Funktion von einer externen Einrichtung ausgeführt wird. In diesem Zusammenhang versteht es sich, dass wenigstens ein Signal (das heißt eine Beanspruchung eines Sensors und/oder Belagselementes) zur Ausführung wenigstens einer Funktion führen kann.

Darüber hinaus kann bei einer weiteren bevorzugten Ausführungsform vorgesehen sein, dass wenigstens zwei in unterschiedlichen Systemmodi und/oder in unterschiedlichen Betriebszuständen ausgewählte Cluster dasselbe Belagselement und/oder denselben Sensor umfassen. Dabei kann weiter vorgesehen sein, dass sich die vorgenannten Cluster jedoch durch wenigstens ein weiteres Belagselement und/oder wenigstens einen weiteren Sensor voneinander unterscheiden. Letztlich können die durch die Cluster gebildeten Sensorflächen in den unterschiedlichen Betriebszuständen und/oder Systemmodi vergrößert oder verkleinert werden - insbesondere in Abhängigkeit der benötigten Funktionalität des Steuerungssystems, weiter bevorzugt in Abhängigkeit von den zu initiierenden Funktionen.

Bei einer weiteren bevorzugten Ausführungsform ist vorgesehen, dass die unterschiedlichen Systemmodi zur Ausführung von unterschiedlichen Funktionen ausgebildet sind, so dass ein erstes Belagssignal N und/oder ein erstes Sensorsignal O eines ersten Clusters P in einem ersten Systemmodus Q zur Initiierung einer ersten Funktion H führt und dass das erste Belagssignal N und/oder das erste Sensorsignal O des ersten Clusters P in dem zweiten Systemmodus S zur Initiierung wenigstens einer sich von der ersten Funktion H unterscheidenden zweiten Funktion T führt. Demzufolge kann die Einsatzvielfalt des Steuerungssystems erhöht werden, indem individuell vom Nutzer der Systemmodus und somit indirekt auch die zu initiierenden Funktionen in Abhängigkeit von den Belagssignalen und/oder Sensorsignalen vorgegeben werden können.

Darüber hinaus kann die Auswahl der Cluster für den jeweiligen Systemmodus und/oder für den jeweiligen Betriebszustand entsprechend durch ein in der Steuerungsvorrichtung hinterlegtes Steuerungsprotokoll erfolgen. Somit kann jedem Systemmodus und/oder jedem Betriebszustand eine Clusterung bzw. eine Clusterbildung von verschiedenen Clustern zugeordnet werden. So kann beispielsweise vorgesehen sein, dass im "Sicherheitsmodus" der Bereich vor der Eingangstür ein Cluster bilden kann. Dies kann letztlich in dem Steuerungsprotokoll hinterlegt sein. Es versteht sich, dass diese Auswahl der Cluster auch von dem Nutzer, vorzugsweise kontinuierlich, adaptierbar und/oder konfigurierbar ist. Somit kann der Nutzer auch die Clusterung für einen Systemmodus und/oder einen Betriebszustand anpassen. Eine Auswahl der Cluster für den Betriebszustand kann somit zusätzlich oder alternativ durch das Steuerungsprotokoll erfolgen.

Vorzugsweise ist die Vorgabe des Steuerungsprotokolls für die Auswahl der Cluster für den jeweiligen Systemmodus und/oder den Betriebszustand entsprechend einer über die Auswahleinrichtung durchgeführten Auswahl veränderbar. Die Auswahl über die Auswahleinrichtung kann von einem Nutzer des Steuerungssystems durchgeführt werden. In diesem Zusammenhang versteht es sich, dass die Auswahleinrichtung zur Veränderung eines Betriebszustandes auch unabhängig von einem Systemmodus genutzt werden kann. So kann vorgesehen sein, dass von dem Nutzer die Clusterbildung verändert werden kann, indem er eine Adaption bzw. Konfiguration über die Auswahleinrichtung vornimmt. Wie zuvor erläutert kann die Auswahleinrichtung als mobiles Endgerät, wie ein Smartphone oder dergleichen, ausgebildet sein. Auf dem mobilen Endgerät kann ferner eine Anwendungssoftware (App) installiert sein, die eine bedienfreundliche Benutzungsoberfläche zur Veränderung der Cluster sicherstellen kann. Darüber hinaus kann auch der Betriebszustand über die Auswahleinrichtung konfiguriert werden.

Ferner ist besonders bevorzugt vorgesehen, dass auch ein Wechsel des Betriebszustandes über die Auswahleinrichtung durchgeführt werden kann.

Darüber hinaus ist bei einer weiteren bevorzugten Ausführungsform des Erfindungsgedankens vorgesehen, dass in einem Cluster zwischen 1 bis 1000, bevorzugt zwischen 2 bis 800, weiter bevorzugt zwischen 2 bis 100, Belagselemente und/oder Sensoren zusammengefasst sind. Die Belagselemente und/oder Sensoren können in einem Raum eines Gebäudes oder in verschiedenen Räumen eines Gebäudes angeordnet sein. So kann vorgesehen sein, dass auch unterschiedliche Räume eines Gebäudes miteinander über wenigstens ein Cluster vernetzt sind. Die Cluster ermöglichen somit eine gebündelte, gemeinsame Verarbeitung der Signale in der Steuerungsvorrichtung, wobei die gebildeten Sensorflächen so individuell an die Bedürfnisse des Nutzers angepasst werden können.

Besonders bevorzugt sind die in einem Cluster zusammengefassten Belagselemente und/oder Sensoren räumlich voneinander beabstandet. Eine räumliche Beabstandung kann derart vorgesehen sein, dass zwischen den Belagselementen weitere Belagselemente eines anderen Clusters oder ohne eine elektrische Funktionalität angeordnet sind. Selbiges gilt auch für die in dem Belagselement integrierten Sensoren. Eine räumliche Beabstandung der Sensoren ist insbesondere derart zu verstehen, dass die Belagselemente, auf denen die Sensoren angeordnet sind, räumlich zueinander beabstandet sind. Alternativ oder zusätzlich kann auch vorgesehen sein, dass die Belagselemente und/oder Sensoren unmittelbar aneinander angrenzen. Demzufolge kann der Cluster durch einen zusammengehörigen Belagsabschnitt gebildet werden.

Die räumliche Anordnung der Belagselemente und/oder der Sensoren in dem Belag kann insbesondere unabhängig von der Zusammenfassung in dem jeweiligen Cluster vorgesehen sein. Demnach müssen nicht zwingenderweise zwei nebeneinander angeordnete Belagselemente und/oder Sensoren in demselben Cluster angeordnet sein. Der Cluster kann letztlich grundsätzlich unabhängig von der Position des Sensors und/oder des Belagselementes gebildet werden.

Alternativ oder zusätzlich sind insbesondere wenigstens zwei, vorzugsweise alle, in einem ununterbrochenen Bereich des Belags angeordneten Belagselemente und/oder Sensoren zu einem Cluster zusammengefasst. Somit kann das Cluster auch abhängig von der räumlichen Anordnung der Belagselemente und/oder der Sensoren gebildet werden, so dass beispielsweise einem vorzugebenden Bereich des Belages ein Cluster zugewiesen werden kann.

Insbesondere ist vorgesehen, dass bei der Verarbeitung des Belagssignals und/oder des Sensorsignals in der Steuerungsvorrichtung die Position des Belagselementes und/oder des Sensors berücksichtigt wird. Dabei kann vorgesehen sein, dass in der Steuerungsvorrichtung die Positionen der einzelnen Belagselemente und/oder der Sensoren hinterlegt sind. Demzufolge kann die örtliche Position des Belagselementes und/oder des Sensors berücksichtigt werden, was Einfluss auf die zu initiierenden Funktionen haben kann. Somit wird neben dem Cluster eine zusätzliche Möglichkeit geschaffen einen Einfluss auf die zu initiierende Funktion zu haben.

Bei einer weiteren bevorzugten Ausführungsform ist vorgesehen, dass die in der Steuerungsvorrichtung hinterlegten Position(en) der/des Belagselement(e) und/oder Sensor(en) bei der Bildung der Cluster berücksichtigt wird/werden. Die Positionszuordnung ist insbesondere dahingehend vorteilhaft, da alle Belagselemente eines vorzugebenden Bereiches - beispielsweise alle Belagselemente im Fensterbereich - in einem Cluster zusammengefasst werden können. Dieser so gebildete Cluster kann anschließend zur Initiierung einer externen Funktion genutzt werden - beispielsweise die Aussendung eines Alarmsignals bei Betreten des Clusters im Fensterbereich.

Besonders bevorzugt ist bei einer weiteren Ausführungsform der Erfindung vorgesehen, dass das Belagselement eine mit dem Sensor gekoppelte Sendeeinrichtung zur, vorzugsweise drahtlosen, Übertragung des Belagssignals aufweist. Alternativ oder zusätzlich kann vorgesehen sein, dass dem Sensor des Belagselementes eine Sensor-Sendeeinrichtung zur, vorzugsweise drahtlosen, Übertragung des Sensorsignals zugeordnet ist. Demzufolge kann das Signal durch die jeweilige Sendeeinrichtung an die Steuerungsvorrichtung übertragen werden, die dieses Signal anschließend verarbeiten kann.

Vorzugsweise weist die Steuerungsvorrichtung eine Kommunikationseinrichtung zum, vorzugsweise drahtlosen, Empfangen des Belagssignals und/oder des Sensorsignals und/oder zur Übertragung wenigstens eines Steuerungssignals zur Initiierung der Ausführung der wenigstens einen Funktion des ausgewählten Systemmodus auf. Demzufolge kann die Steuerungsvorrichtung über die Kommunikationseinrichtung die Belagssignale und/oder Sensorsignale empfangen und in Abhängigkeit des jeweiligen Clusters anschließend verarbeiten.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung eines Steuerungssystems,
- Fig. 2: eine schematische Darstellung einer Steuerungsvorrichtung in einem ersten Systemmodus,
- Fig. 3: eine schematische Darstellung der in Fig. 2 dargestellten Steuerungsvorrichtung in einem weiteren Systemmodus,
- Fig. 4a: eine schematische Darstellung einer weiteren Ausführungsform des Steuerungssystems in einem ersten Systemmodus,
- Fig. 4b: eine schematische Darstellung des in Fig. 4a gezeigten Steuerungssystems in einem weiteren Systemmodus,
- Fig. 5: eine schematische Darstellung einer weiteren Ausführungsform des Steuerungssystems,
- Fig. 6: eine schematische Darstellung einer weiteren Ausführungsform der Steuerungsvorrichtung,
- Fig. 7: eine schematische Darstellung einer weiteren Ausführungsform des Steuerungssystems,
- Fig. 8: eine schematische Darstellung einer weiteren Ausführungsform des Steuerungssystems,
- Fig. 9: eine schematische Darstellung von Teilen des Steuerungssystems,
- Fig. 10: eine schematische Darstellung von Teilen des Steuerungssystems,
- Fig. 11: eine schematische Darstellung einer weiteren Ausführungsform des Steuerungssystems,
- Fig. 12: eine schematische Darstellung einer weiteren Ausführungsform des Steuerungssystems,
- Fig. 13: eine schematische Darstellung einer weiteren Ausführungsform der Steuerungsvorrichtung,
- Fig. 14: eine schematische Darstellung einer weiteren Ausführungsform der Steuerungsvorrichtung,
- Fig. 15: eine schematische Darstellung einer weiteren Ausführungsform der Steuerungsvorrichtung,
- Fig. 16: eine schematische Darstellung eines ersten Systemmodus,
- Fig. 17: eine schematische Darstellung einer weiteren Ausführungsform des ersten Systemmodus,
- Fig. 18: eine schematische Darstellung einer Auswahleinrichtung,
- Fig. 19: eine schematische Darstellung einer weiteren Ausführungsform der Auswahleinrichtung,
- Fig. 20: eine schematische Darstellung einer weiteren Ausführungsform des Steuerungssystems,
- Fig. 21: eine schematische Darstellung einer weiteren Ausführungsform des Steuerungssystems,
- Fig. 22: eine schematische Darstellung einer weiteren Ausführungsform des Steuerungssystems,
- Fig. 23: eine schematische perspektivische Darstellung einer weiteren Ausführungsform des Steuerungssystems,
- Fig. 24: eine schematische Querschnittsdarstellung eines Belagselementes,
- Fig. 25: eine schematische Querschnittsdarstellung einer weiteren Ausführungsform des Belagselementes,
- Fig. 26: eine schematische perspektivische Darstellung einer weiteren Ausführungsform des Belagselementes,
- Fig. 27: eine schematische Darstellung einer Speichereinrichtung,
- Fig. 28: eine schematische Darstellung eines erfindungsgemäßen Verfahrens zur Zuordnung einer Position eines Belagselementes,
- Fig. 29: eine schematische perspektivische Darstellung einer weiteren Ausführungsform des erfindungsgemäßen Zuordnungsverfahrens,
- Fig. 30: eine schematische perspektivische Darstellung einer weiteren Ausführungsform des erfindungsgemäßen Zuordnungsverfahrens,
- Fig. 31: eine schematische Darstellung einer erfindungsgemäßen rasterartigen Darstellung,
- Fig. 32: eine schematische perspektivische Darstellung eines erfindungsgemäßen Belagselementes,
- Fig. 33: eine schematische perspektivische weitere Ausführungsform des erfindungsgemäßen Belagselementes,
- Fig. 34: eine schematische perspektivische Darstellung eines weiteren Zuordnungsverfahrens unter Verwendung eines Verlegeplans,
- Fig. 35: eine schematische Darstellung des Ausschnitts A der Fig. 34,
- Fig. 36: eine schematische Darstellung eines Steuerungssystems in einem ersten Betriebszustand,
- Fig. 37: eine schematische Darstellung des in Fig. 36 gezeigten Steuerungssystems in einem weiteren Betriebszustand,
- Fig. 38: eine schematische Darstellung einer weiteren Ausführungsform des Steuerungssystems in einem ersten Betriebszustand,
- Fig. 39: eine schematische Darstellung des in Fig. 38 gezeigten Steuerungssystems in einem weiteren Betriebszustand,
- Fig. 40: eine schematische perspektivische Darstellung von Teilen einer weiteren Ausführungsform des Steuerungssystems in einem ersten Betriebszustand,
- Fig. 41: eine schematische perspektivische Darstellung des in Fig. 40 dargestellten Steuerungssystems in einem weiteren Betriebszustand,
- Fig. 42: eine schematische perspektivische Darstellung einer weiteren Ausführungsform des Steuerungssystems und
- Fig. 43: eine schematische perspektivische Darstellung einer weiteren Ausführungsform des Steuerungssystems.

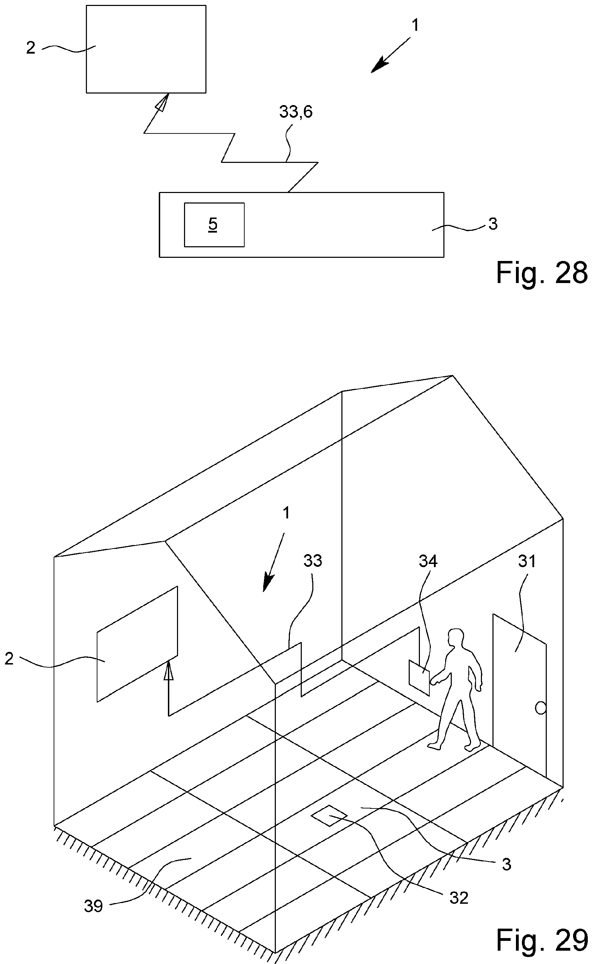

Fig. 28 zeigt ein Verfahren zur Zuordnung einer Position in Bezug zu einem räumlichen Bezugspunkt 31 von wenigstens einem Belagselement 3 eines Belages 4 zur Einbindung in ein Steuerungssystem 1. Der räumliche Bezugspunkt 31, zu dem - insbesondere relativ - die Position des Belagselementes 3 angegeben werden kann, ist insbesondere ein ortsfester Bezugspunkt. In Fig. 29 ist dargestellt, dass beispielsweise eine Eingangstür in einem Raum den räumlichen Bezugspunkt 31 bilden kann.

Fig. 28 zeigt weiter, dass das Belagselement 3 eine eine elektrische Funktionalität aufweisende Funktionseinheit 32 aufweist. Das Steuerungssystem 1 umfasst eine Steuerungsvorrichtung 2, die nach Empfangen eines das wenigstens eine Belagselement 3 charakterisierende Zuordnungssignals 33 die Position des Belagselementes 3 bestimmt und speichert. Ferner ist in Fig. 28 dargestellt, dass das Zuordnungssignal 33 drahtlos der Steuerungsvorrichtung 2 übermittelt werden kann.

In weiteren Ausführungsformen kann vorgesehen sein, dass die Steuerungsvorrichtung 2 als Bezugspunkt 31 vorgesehen ist, relativ zu dem die Positionen der Belagselemente 3 angegeben werden können.

Bei dem zu verlegenden Belag 4, der beispielsweise in Fig. 29 dargestellt ist, kann vorgesehen sein, dass neben Belagselementen 3, die eine elektrische Funktionalität aufweisen, weitere Belagselemente 39 vorgesehen sind, die insbesondere keine elektrische Funktionalität aufweisen. Fig. 29 zeigt, dass die weiteren Belagselemente 39 mit den Belagselementen 3 verbunden sein können.

Die Positionen der Belagselemente 3 können in der Steuerungsvorrichtung 2 nach entsprechender Bestimmung graphisch und/oder textbasiert in einen Lageplan aufgenommen und insbesondere in diesem gespeichert werden. Ein solcher Lageplan ermöglicht insbesondere die Einbindung und Nutzung der funktionalen Belagselemente 3 (auch Plattenelemente 3 genannt) in smarten Systemen, wie beispielsweise Smart-Home-Systeme und/oder Gebäudemanagement-Systeme, die letztlich als Steuerungssysteme 1 fungieren können. Die Steuerungsvorrichtung 2 kann dabei als Gateway zwischen dem Belagselement 3 und dem Steuerungssystem 1 dienen.

Nicht dargestellt ist, dass die Bestimmung und/oder Speicherung bzw. die Verarbeitung des Zuordnungssignals 33 von der Steuerungsvorrichtung 2 teilweise und/oder gänzlich cloudbasiert bzw. in einem Cloud-System 16 durchgeführt wird.

Zudem zeigt Fig. 28, dass das Belagselement 3 ein Belagssignal 6 als Zuordnungssignal 33 an die Steuerungsvorrichtung 2 des Steuerungssystems 1 drahtlos überträgt. Die Steuerungsvorrichtung 2 bestimmt und speichert nach Empfangen des Belagssignals die Position des Belagselementes 3, insbesondere relativ zu dem Bezugspunkt 31. Das Belagssignal 6 kann in diesem Zusammenhang relative oder absolute Ortsangaben des Belagselementes 3 enthalten, die in der Steuerungsvorrichtung 2 gespeichert werden können.

Weiter kann vorgesehen sein, dass das Belagssignal 6 eine das jeweilige Belagselement 3 identifizierende Belagselement-Identifikationsinformation enthält. Diese Belagselement-Identifikationsinformation kann beispielsweise eine Identifikationsnummer oder dergleichen sein. Mit dieser Belagselement-Identifikationsinformation kann insbesondere auch nach erfolgter Zuordnung des Belagselementes 3 eine Positionsbestimmung durchgeführt werden. So kann die Steuerungsvorrichtung 2 nach Verarbeitung der Belagselement-Identifikationsinformation die bereits zugeordnete und gespeicherte Position des Belagselementes 3, insbesondere relativ zum Bezugspunkt 31, dem Belagselement 3 zuweisen.

Dabei ist es vorteilhaft, wenn die Steuerungsvorrichtung 2 zusätzlich zur bzw. verknüpft mit der Bezugsposition des jeweiligen Belagselementes 3 eine Steuerungsvorrichtung-Identifikationsinformation speichert, insbesondere nach Zuordnung der Position des Belagselementes 3. Die Steuerungsvorrichtung-Identifikationsinformation kann dem jeweiligen Belagselement 3 zugewiesen werden. Nach erfolgter Zuordnung des Belagselementes 3 zu der jeweiligen Position kann vorgesehen sein, dass die Steuerungsvorrichtung 2 die Position des Belagselementes 3 erneut durch Abgleich der Belagselement-Identifikationsinformation, die mit dem Belagssignal 6 übertragen werden kann, und der gespeicherten Steuerungsvorrichtung-Identifikationsinformation für das jeweilige Belagselement 3 bestimmt bzw. diese Position erneut dem Belagselement 3 zuordnet. Beispielsweise kann die Belagselement-Identifikationsinformation die Information "Nummer 1" beinhalten. Sobald der Steuerungsvorrichtung 2 mit dem Belagssignal 6 die Belagselement-Identifikationsinformation "Nummer 1" übermittelt wird, kann die Steuerungsvorrichtung 2 durch Abgleich dieser Belagselement-Identifikationsinformation mit der Steuerungsvorrichtung-Identifikationsinformation ("Nummer 1 hat Position neben der Tür") dem Belagselement 3 die Position: "neben der Tür" zuordnen. Die Position ist dabei zuvor bestimmt und zugeordnet worden.

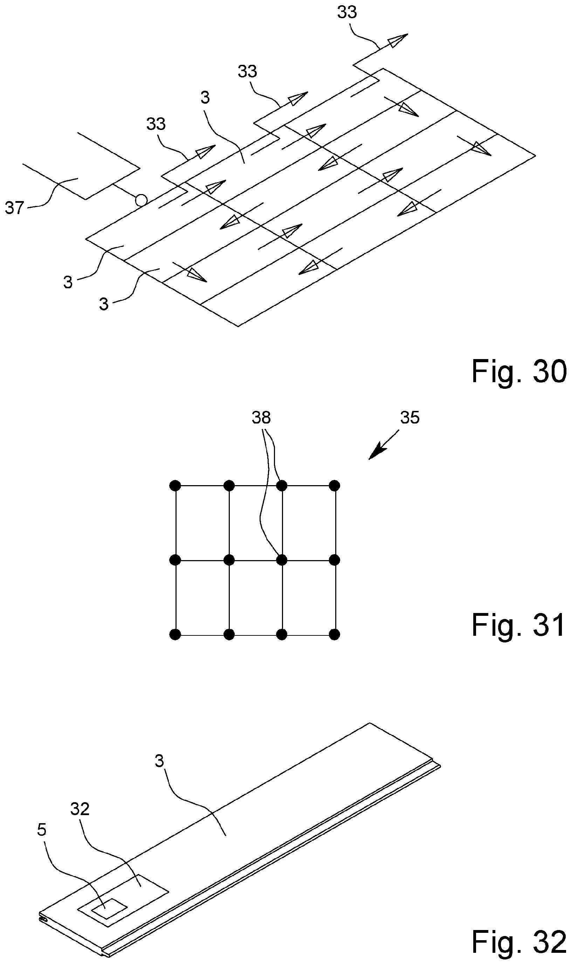

Fig. 30 zeigt, dass eine Mehrzahl von Belagselementen 3 jeweils eine Position zugeordnet wird, nämlich von der Steuerungsvorrichtung 2.

Fig. 29 zeigt, dass die Zuordnung der Position des Belagselementes 3 nach der Verlegung der Belagselemente 3 zur Bildung des Belags 4 erfolgt. Dabei kann vorgesehen sein, dass der Belag 4 auch weitere Belagselemente 39 enthält, die insbesondere keine elektrische Funktionalität aufweisen.

Bei dem in Fig. 29 dargestellten Ausführungsbeispiel ist vorgesehen, dass die Belagselemente 3 nicht-elektrisch kontaktierend miteinander verbunden sind bzw. nicht-elektrisch kontaktierend zu weiteren Belagselementen 39 verbunden sind. Zudem sind die Belagselemente 3 miteinander datenübertragungsfrei verbunden. Zwischen den Belagselementen 3, 39 erfolgt weder ein elektrischer Kontakt noch eine Datenübertragung. Die einzelnen Belagselemente 3 sind somit als autarke Belagselemente 3 anzusehen, die sich insbesondere selbständig mit benötigter Energie für die Funktionseinheit 32 versorgen können.

Des Weiteren zeigt Fig. 29, dass eine Zuordnungseinrichtung 34, im dargestellten Ausführungsbeispiel ein mobiles Endgerät, wie ein Smartphone, das Zuordnungssignal 33 für das wenigstens eine Belagselement 3 an die Steuerungsvorrichtung 2 übermittelt. In dem dargestellten Ausführungsbeispiel ist vorgesehen, dass die Zuordnungseinrichtung 34 von einem Nutzer bedient wird, der die einzelnen Positionen den Belagselementen 3 zuordnet. Dabei kann der Nutzer beispielsweise vorgeben, dass bzw. wie die einzelnen Belagselemente 3 relativ zu dem Bezugspunkt 31 angeordnet sind und diese relative Ortsangabe der Steuerungsvorrichtung 2 als Zuordnungssignal 33 übermitteln.

Fig. 30 zeigt schematisch, dass die Belagselemente 3 nacheinander mit Energie, insbesondere Strom, versorgt werden. Schematisch ist dargestellt, dass ein Belagselement 3 mit einer Energieversorgungseinrichtung 37 verbunden ist. Im dargestellten Ausführungsbeispiel sind die Belagselemente 3 elektrisch kontaktierend miteinander verbunden. Dabei kann vorgesehen sein, dass die Belagselemente 3 nacheinander mit Energie versorgt werden, insbesondere durch Weiterleitung der elektrischen Energie.

Zudem kann vorgesehen sein, dass lediglich eine Kontaktseite der Belagselemente 3 zur Energieübertragung ausgebildet ist, so dass eine definierte Reihenfolge der elektrischen Energieversorgung der Belagselemente 3 erfolgen kann.

In weiteren Ausführungsformen kann auch vorgesehen sein, dass bei einer nichtelektrischen Verbindung der Belagselemente 3 diese nacheinander - beispielsweise durch zeitlich verzögerte Aktivierung von jeweils den einzelnen Belagselementen 3 zugeordneten Energieversorgungseinrichtungen 37 - mit Energie versorgt werden. In Fig. 30 ist schematisch dargestellt, dass im Anschluss an die Versorgung mit Energie die Belagselemente 3 ein Belagssignal 6 als Zuordnungssignal 33 an die Steuerungsvorrichtung 2 übermitteln. Im dargestellten Ausführungsbeispiel ist vorgesehen, dass vorzugsweise unmittelbar nach der Übermittlung von Energie das Belagssignal 6 ausgesendet wird. In weiteren Ausführungsbeispielen kann auch vorgesehen sein, dass eine zeitliche Differenz zwischen der Aussendung des Belagssignals 6 nach Empfangen der Energie vorgesehen ist. Letztlich ist das Verfahren in diesem Zusammenhang derart ausgebildet, dass von der Steuerungsvorrichtung 2 entsprechend des Empfangszeitpunktes des jeweiligen Belagssignals 6 die Positionen der Belagselemente 3 festgelegt werden können. In diesem Zusammenhang kann beispielsweise der Steuerungsvorrichtung 2 die relative und/oder absolute Ortsangabe der Energieversorgungseinrichtung 37 und/oder des wenigstens eines Belagselementes 3 übermittelt werden.

Nicht dargestellt ist, dass bei der Zuordnung der Position eines Belagselementes 3 die bereits bestimmte Position wenigstens eines zugeordneten und/oder eines zuzuordnenden Belagselementes 3 berücksichtigt wird. In diesem Zusammenhang kann insbesondere das Zuordnungssignal des zuzuordnenden und/oder zugeordneten Belagselementes 3 berücksichtigt werden. Beispielsweise kann das Zuordnungssignal des Belagselementes 3 eine relative Ortsangabe zu den zugeordneten und/oder zuzuordnenden weiteren Belagselementen 3 enthalten.

Des Weiteren ist nicht dargestellt, dass die Steuerungsvorrichtung 2 ein Steuerungssignal an das Belagselement 3 überträgt. Dieses Steuerungssignal kann beispielsweise das Belagselement 3 zur Aussendung des Belagssignals 6 als Zuordnungssignal 33 aktivieren bzw. ansteuern.

Darüber hinaus ist nicht dargestellt, dass die Steuerungsvorrichtung 2 aus den Positionen der Belagselemente 3 eine räumliche Abbildung, insbesondere eine Flächenabbildung, ermittelt und/oder die Positionen in einer räumlichen, in ihr hinterlegten Flächenabbildung speichert.

In Fig. 31 ist schematisch eine rasterartige Darstellung 35 dargestellt, die in der Steuerungsvorrichtung 2 gespeichert werden kann. Die Positionen der einzelnen Belagselemente 3 können in der rasterartigen Darstellung 35 in den Knotenpunkten 38 hinterlegt sein. So kann beispielsweise ein Knotenpunkt 38 die Position eines Belagselementes 3 referenzieren.

Darüber hinaus ist nicht dargestellt, dass wenigstens einem Belagselement 3 Geodaten zugewiesen werden, die an die Steuerungsvorrichtung 2 mit dem Belagssignal 6 als Zuordnungssignal 33 und/oder mit einem weiteren Zuordnungssignal 33 übertragen werden. Auf Grundlage der Geodaten des wenigstens einen Belagselementes 3 kann die Zuordnung der weiteren zugeordneten und/oder zuzuordnenden Belagselemente 3 erfolgen, insbesondere wobei die Zuordnungssignale 33 der weiteren zugeordneten und/oder zuzuordnenden Belagselemente 3 relative Ortsangaben zu dem das durch Geodaten bestimmbare Belagselement 3 erhalten. Die Geodaten können in weiteren Ausführungsformen auch von der Funktionseinheit 32 erfasst werden. Es kann auch vorgesehen sein, dass eine externe Einrichtung der Steuerungsvorrichtung 2 und/oder dem Belagselement 3 die Geodaten übermittelt, so dass diese in der Steuerungsvorrichtung 2 bei Bestimmung der Positionen der Belagselemente 3 berücksichtigt werden können.

Zudem ist nicht dargestellt, dass die Steuerungsvorrichtung 2 bei der Ermittlung der Positionen des Belagselementes 3 weitere Parameter, wie die Abmaße des Belagselementes 3, die Größe des Belages 4 und/oder die Raumgröße oder dergleichen, berücksichtigt.

Das in Fig. 28 dargestellte Zuordnungssignal 33 des Belagselementes 3 kann beispielsweise mittels Bluetooth-, VLC-, WLAN-, Z-Wave-, Ultraschall-, Infrarot-und/oder Laser-Übertragung an die Steuerungsvorrichtung 2 übermittelt werden. Eine derartige drahtlose Übermittlung kann demzufolge in dem Steuerungssystem 1 durchgeführt werden. Das Zuordnungssignal 33 wird in dem dargestellten Ausführungsbeispiel von dem Belagselement 3 übermittelt.

Fig. 29 zeigt die Übermittlung des Zuordnungssignals 33 von einer Zuordnungseinrichtung 34, was auch mit den vorgenannten drahtlosen Übertragungstechnologien möglich ist.

Weiter ist nicht dargestellt, dass die Übertragung des Belagssignals und/oder des Zuordnungssignals 33 mittels optischer und/oder elektromagnetischer Informationsübertragung erfolgt. Beispielsweise kann die Zuordnungseinrichtung 34 zum Auslesen eines optischen Markierungshinweises des Belagselementes 3, wie einen Barcode und/oder einen QR-Code und/oder einer Dielenbeschriftung, ausgebildet sein. Auch kann der Nutzer eine derartige Information auslesen und insbesondere in der Zuordnungseinrichtung 34 eingeben, die dies wiederum der Steuerungsvorrichtung 2 übermitteln kann. In diesem Zusammenhang kann auch vorgesehen sein, dass das Zuordnungssignal 33 mittels der RFID-Technologie übermittelt wird.

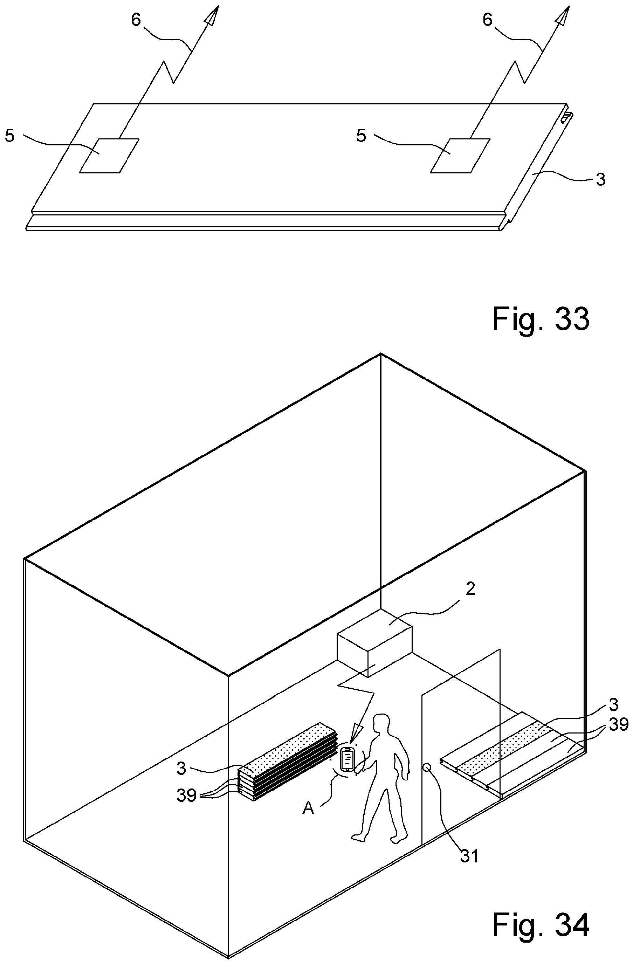

Das in Fig. 32 dargestellte Belagselement 3 weist eine Funktionseinheit 32 auf, die wiederum einen Sensor 5 zur Ermittlung einer physikalischen und/oder chemischen Eigenschaft aufweist. In Fig. 33 ist dargestellt, dass das Belagselement 3 eine Mehrzahl von Sensoren 5 aufweist. Nach erfolgter Zuordnung der Belagselemente 3 zu den jeweiligen Positionen können der Steuerungsvorrichtung 2 von dem Sensor 5 erfasste Messdaten gemeinsam mit einem Belagssignal 6 übertragen werden.

Bevorzugt ist vorgesehen, dass dem wenigstens einen Sensor 5 des Belagselementes 3 von der Steuerungsvorrichtung 2 eine Sensor-Bezugsposition zugeordnet wird. Demzufolge kann die Steuerungsvorrichtung 2 neben der Zuordnung der Positionen zu den einzelnen Belagselementen 3 auch eine Zuordnung der einzelnen Sensoren 5 auf den Belagselementen 3 vornehmen. Beispielsweise kann die Steuerungsvorrichtung 2 bei dem in Fig. 33 dargestellten Ausführungsbeispiel die jeweiligen Positionen der Sensoren 5 ermitteln. Diese Daten können in der Steuerungsvorrichtung 2 gespeichert sein.

Dabei können die im Belagssignal 6 enthaltenen und an die Steuerungsvorrichtung 2 mit dem Belagssignal 6 übertragenen Messdaten des wenigstens einen Sensors 5 des Belagselementes 3 mit einer Sensor-Identifikationsinformation verknüpft sein, so dass seitens der Steuerungsvorrichtung 2 eine eindeutige Zuordnung der Sensor-Bezugsposition erfolgen kann, insbesondere durch Abgleich und/oder Verarbeitung der Sensor-Identifikationsinformation, die in den von dem Sensor 5 übertragenen Messdaten enthalten sein kann. Demzufolge kann die Steuerungsvorrichtung 2 diese Information zur Identifikation bzw. räumlichen Zuordnung des Sensors 5 auswerten.

Alternativ oder zusätzlich kann die Steuerungsvorrichtung 2 ebenfalls eine Sensor-Steuerungsvorrichtungs-Identifikationsinformation für eine Sensor-Identifikationsinformation in Verbindung mit einer Positionierung vergeben.

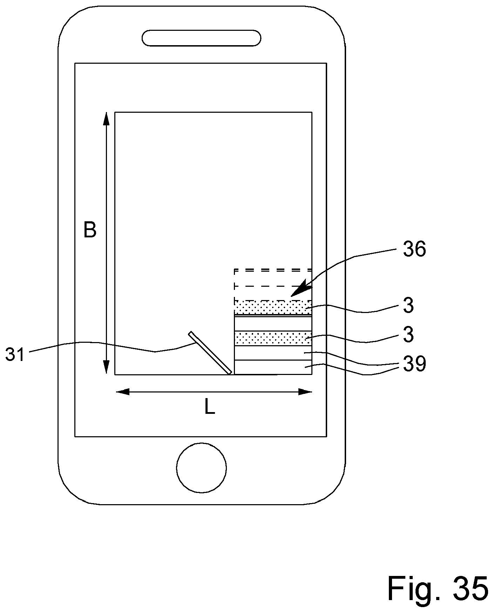

In den Fig. 34 und 35 ist schematisch ein weiteres Verfahren zur Zuordnung einer Position zu einem räumlichen Bezugspunkt 31 von wenigstens einem Belagselement 3 eines Belages 4 zur Einbindung in ein Steuerungssystem 1 dargestellt. Das Belagselement 3 weist eine eine elektrische Funktionalität aufweisende Funktionseinheit 32 auf. Das Belagselement 3 wird entsprechend eines vorgegebenen in der Steuerungsvorrichtung 2 hinterlegten Verlegeplan 36 und entsprechend der dem Belagselement 3 zugeordneten Position zur Bildung des Belages 4 verlegt.

In diesem Zusammenhang kann vorgesehen sein, dass der Verlegeplan 36 von der Steuerungsvorrichtung 2 erstellt wird, insbesondere in Abhängigkeit der Fläche des zu verlegenden Belags 4 und/oder der Anzahl der Belagselemente 3 und/oder der Größe des Raumes. Im dargestellten Ausführungsbeispiel ist in der Fig. 34 dargestellt, dass ein Nutzer über eine entsprechende Einrichtung den Verlegeplan 36 "abrufen" - das heißt beispielsweise über eine visuelle Darstellung - kann und die Belagselemente 3, 39 zu einem Belag 4 verlegt, wobei er die elektrischen bzw. "smarten" Belagselemente 3 an jeweiligen vorgegebenen Positionen verlegt. In Fig. 34 kann beispielsweise eine Tür 31 als Bezugspunkt 31 vorgesehen sein, relativ zu dem der Verleger die Verlegung der Belagselemente 3 vornimmt.

In weiteren Ausführungsformen kann auch vorgesehen sein, dass der Verlegeplan 36 nicht von der Steuerungsvorrichtung 2 erstellt wird, sondern entweder von dem Nutzer oder von weiteren Einrichtungen. Dabei kann dieser Verlegeplan 36 anschließend - das heißt vor oder nach Verlegung des Belags 4 - der Steuerungsvorrichtung 2 übermittelt werden. In dem Verlegeplan 36 können die Positionen der einzelnen Belagselemente 3 hinterlegt sein.

Diese Position kann darüber hinaus auch mit einer Belagselement-Identifikationsinformation verknüpft sein bzw. werden. Demzufolge kann in der Steuerungsvorrichtung 2 ein Steuerungsvorrichtung-Identifikationsinformation hinterlegt sein, die eine nachträgliche Zuordnung zu der Position des Belagselementes 3 ermöglicht, insbesondere durch einen Abgleich der Steuerungsvorrichtung-Identifikationsinformation und der Belagselement-Identifikationsinformation.

Insbesondere darf noch auf die nachstehenden Aspekte verwiesen werden, die mit wenigstens einer der vorgenannten Ausführungsformen kombinierbar sind und/oder unabhängige Erfindungsaspekte darstellen können:

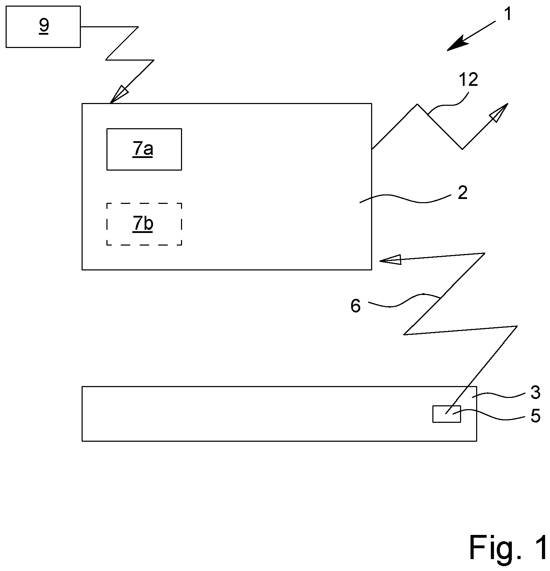

Fig. 1 zeigt ein Steuerungssystem 1. Das Steuerungssystem 1 ist insbesondere für Gebäude vorgesehen, wobei das Steuerungssystem 1 als Smart-Home-System ausgebildet sein kann. Fig. 1 zeigt weiter, dass das Steuerungssystem 1 eine Steuerungsvorrichtung 2 und wenigstens ein Belagselement 3 eines Belages 4 aufweist. Dabei kann vorgesehen sein, dass auch eine Mehrzahl von Belagselementen 3 in dem Steuerungssystem 1 eingebunden ist.

Ferner zeigt Fig. 1 schematisch, dass das Belagselement 3 wenigstens einen mit der Steuerungsvorrichtung 2 gekoppelten Sensor 5 zur Erfassung wenigstens einer chemischen und/oder physikalischen Eigenschaft zur Erzeugung eines Belagssignals 6 aufweist. Dabei kann die chemische und/oder physikalische Eigenschaft von dem Sensor 5 erfasst werden, was wiederum zur Aussendung des Belagssignals 6 an die Steuerungsvorrichtung 2 führen kann. Das Belagssignal 6 kann dabei auf der von dem wenigstens einen Sensor 5 erfassten Information beruhen.

Zudem zeigt Fig. 1, dass die Steuerungsvorrichtung 2 eine Mehrzahl unterschiedlicher Systemmodi 7a, 7b zur Ausführung von unterschiedlichen externen Funktionen aufweist. In dem dargestellten Ausführungsbeispiel ist vorgesehen, dass die Steuerungsvorrichtung 2 zwei Systemmodi 7a und 7b aufweist. In dem dargestellten Ausführungsbeispiel ist der Systemmodus 7a ausgewählt. Nicht dargestellt ist, dass unterschiedliche Funktionen in Abhängigkeit von dem ausgewählten Systemmodus 7a ausgeführt werden können. Fig. 1 zeigt, dass die Steuerungsvorrichtung 2 ein Steuerungssignal 12 aussendet, das in Abhängigkeit von dem Belagssignal 6 und in Abhängigkeit von dem ausgewählten Systemmodus 7a generiert oder ausgewählt werden kann. Dieses Steuerungssignal 12 kann wiederum zur Ausführung von unterschiedlichen Funktionen, insbesondere externer Funktionen, und/oder Aktionen vorgesehen sein. Diese externen Funktionen und/oder Aktionen können von externen Geräten, die im Steuerungssystem 1 eingebunden sind, ausgeführt werden.

Die Funktionen zweier unterschiedlicher Systemmodi können sich voneinander durch eine unterschiedliche Ausprägung unterscheiden. So können sich die Funktionen durch eine unterschiedliche Beleuchtungsstärke voneinander unterscheiden und beide gleichzeitig die Funktion "Licht an" initiieren. Obwohl in beiden Funktionen das Licht angeschaltet werden würde (als externe Funktion), würden sich die Funktionen voneinander durch die unterschiedliche Intensität bzw. Beleuchtungsstärke unterscheiden (unterschiedliche Ausprägung).

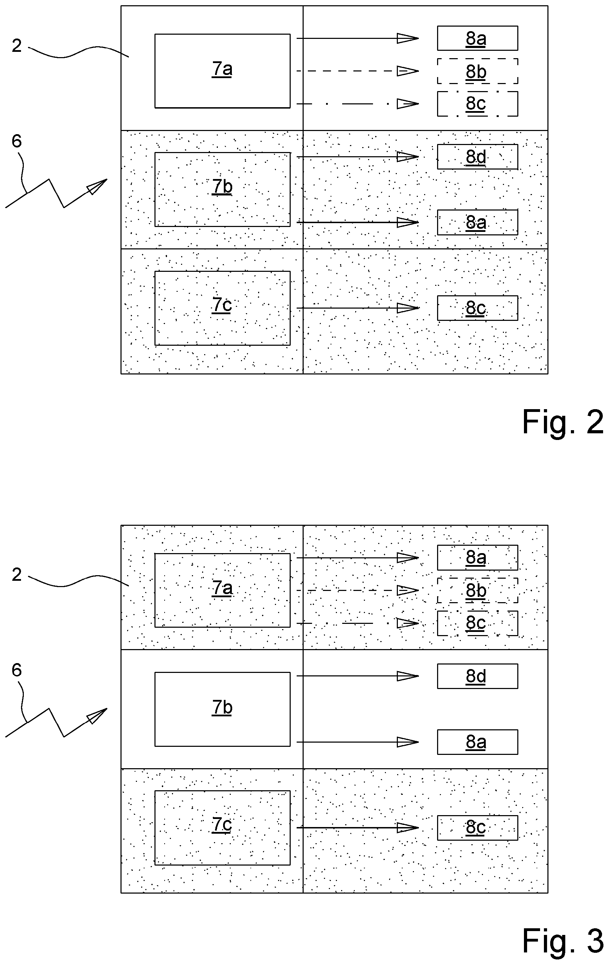

Fig. 2 zeigt, dass in zwei sich voneinander unterscheidenden Systemmodi 7a, 7b - in Abhängigkeit von dem Belagssignal 6 - auch eine Funktionskombination (d.h. mehrere Funktionen) initiiert werden kann. In den Funktionskombinationen können die Systemmodi auch wenigstens eine Funktion, im dargestellten Ausführungsbeispiel die Funktion 8a, gemeinsam haben. Im Systemmodus kann das Belagssignal 6 so zur Initiierung der Funktion 8a führen. Im Systemmodus 7b kann insbesondere das gleiche Belagssignal 6 zur Initiierung der Funktionen 8d und 8a führen.

Fig. 1 zeigt weiter eine Auswahleinrichtung 9, die der Steuerungsvorrichtung 2 zugeordnet ist. Die Auswahleinrichtung 9 ist zur Auswahl von den einzelnen Systemmodi 7a, 7b vorgesehen. Dabei kann über eine Auswahl der Auswahleinrichtung 9 von dem Systemmodus 7a in den Systemmodus 7b gewechselt werden.

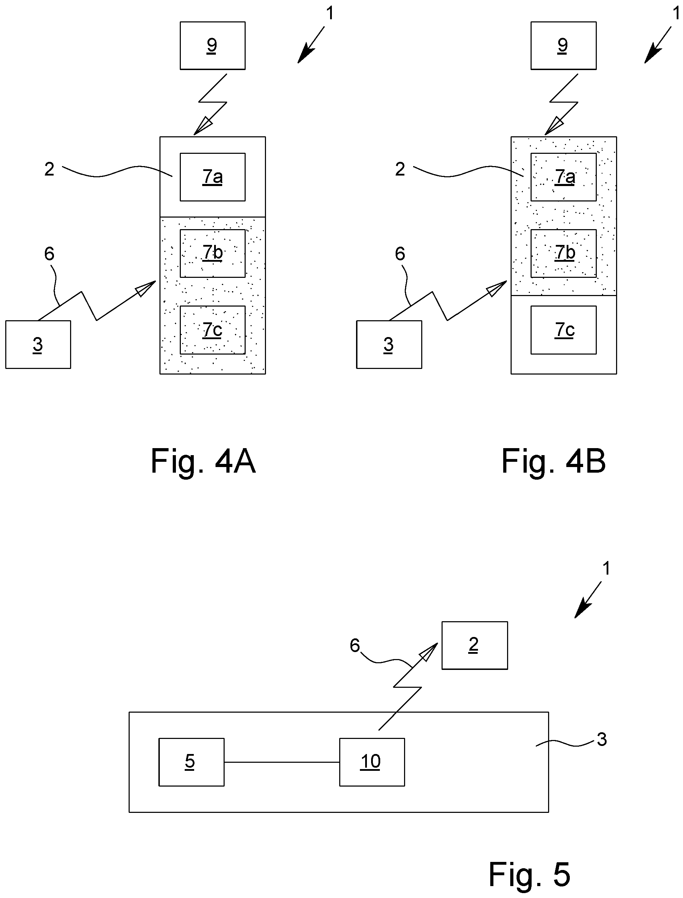

Ein diesbezüglicher Wechsel ist schematisch den Fig. 4a und 4b zu entnehmen. Bei der in Fig. 4a dargestellten Ausführungsform ist vorgesehen, dass sich die Steuerungsvorrichtung 2 in dem ausgewählten Systemmodus 7a befindet. Der Steuerungsvorrichtung 2 ist dabei eine Auswahleinrichtung 9 zugeordnet. Entsprechend der Vorgabe der Auswahleinrichtung 9 kann die Steuerungsvorrichtung 2 von dem Systemmodus 7a in einen weiteren Systemmodus wechseln. In Fig. 4b ist der Wechsel von dem Systemmodus 7a in den Systemmodus 7c dargestellt, der über die Auswahleinrichtung 9 eingeleitet werden kann.

Das Belagssignal 6 kann die Ausführung der dem ausgewählten Systemmodus 7a, 7b, 7c zugeordneten wenigstens einen Funktion oder Aktion initiieren. Schematisch ist dies in Fig. 2 dargestellt. Fig. 2 zeigt, dass sich die Steuerungsvorrichtung 2 in dem Systemmodus 7a befindet. In Abhängigkeit von dem Belagssignal 6 kann dabei eine Funktion und/oder Aktion 8a, 8b, 8c initiiert werden. Nach Verarbeitung von dem Belagssignal 6 bzw. nach diesbezüglicher Analyse in dem ausgewählten Systemmodus 7a in der Steuerungsvorrichtung 2 wird wenigstens eine Funktion bzw. Aktion 8a, 8b, 8c ausgelöst. In dem dargestellten Ausführungsbeispiel ist vorgesehen, dass in Abhängigkeit von dem Belagssignal 6 die Funktion 8a ausgeführt wird, wobei die Funktionen 8b, 8c - zumindest zur Zeit - nicht ausgeführt werden. Dies wird vorliegend durch die Pfeile mit unterbrochenen Linien impliziert.

In Fig. 3 ist dargestellt, dass sich die Steuerungsvorrichtung 2 in einem weiteren Systemmodus befindet, nämlich in dem Systemmodus 7b. Dabei kann vorgesehen sein, dass das gleiche Belagssignal 6, wie dies auch in Fig. 2 von der Steuerungsvorrichtung 2 empfangen wird, dazu führt, dass beispielsweise zwei Aktionen 8d und 8a ausgelöst werden können. Diese Funktionen in dem zweiten Systemmodus 7b können den in dem ersten Systemmodus 7a ausgeführten Funktionen entsprechen bzw. identisch mit diesen sein oder sich von diesen unterscheiden. Letztlich kann auch eine Mehrzahl von Aktionen ausgeführt werden. So wird in der Fig. 2 lediglich die Funktion 8a ausgeführt, wobei in dem Systemmodus 7b zusätzlich noch die Funktion 8d, insbesondere zeitgleich oder zeitverzögert, durchgeführt werden kann bzw. wird.

Beispielsweise kann vorgesehen sein, dass in Fig. 2 der Systemmodus 7a einen "Morgenmodus" darstellt. Dabei kann vorgesehen sein, dass in Abhängigkeit von dem Belagssignal 6 die Funktion 8a ausgeführt wird, nämlich dass das Licht angeschaltet wird. Licht anzuschalten kann die Funktion 8a sein. Die Funktionen 8b und 8c werden vorliegend nicht ausgeführt. Diese könnten beispielsweise bei einem anderen Belagssignal 6 ausgeführt werden. Beispielsweise kann das Belagssignal 6 das Betreten in einen Raum signalisieren. Ein anderes Belgassignal 6, beispielsweise das Betreten eines anderen Raumes oder das Verlassen eines anderen Raumes, wie z. B. des Schlafzimmers, oder aber auch das Betreten eines vorgegebenen Bereichs im selben Raum, kann dazu führen, dass die Jalousien geschlossen werden (Funktion 8b).

Bei einer weiteren Ausführungsform der in Fig. 2 dargestellten Arbeitsweise kann vorgesehen sein, dass ein anderes Belagssignal 6, das beispielsweise durch das Betreten eines anderen Belagselementes 3 im Raum hervorgerufen wird, in Verbindung mit dem ausgewählten Systemmodus dazu führt, dass nachdem das Licht (Funktion 8a) durch das Betreten des ersten Belagselementes 3 angeschaltet wurde, nun die zusätzliche Funktion 8b, nämlich das Einschalten des Radios, initiiert wird. Die Funktion 8c kann beispielsweise bedingen, die Lautstärke des Radios einzustellen oder dieses wieder auszuschalten - abhängig von dem ausgewählten Systemmodus 7a. Die Funktion 8c kann durch ein weiteres Belagssignal 6 initiiert werden, das durch eine vorgegebene Verweildauer auf einem Belagselement 3 oder durch das Betreten eines weiteren Belagselementes 3 erzeugt werden kann.

Fig. 3 kann demgegenüber mit dem ausgewählten Systemmodus 7b den "Abendmodus" darstellen, wobei das Belagssignal 6, das beispielsweise das Betreten eines Raums anzeigt, dazu führt, dass das Licht angeschaltet (Funktion 8a) und dass die Waschmaschine ebenfalls eingeschaltet wird (Funktion 8d).

Es kann in Abhängigkeit von einem Belagssignal 6 und/oder mehreren Belagssignalen 6 und in Abhängigkeit von dem ausgewählten Systemmodus eine unterschiedliche Anzahl von Funktionen oder es können unterschiedlich ausgebildete Funktionen oder Aktionen 8a, 8b, 8c initiiert werden.

Als Systemmodus 7a, 7b, 7c kann eine in der Steuerungsvorrichtung 2 hinterlegte Software bzw. ein diesbezügliches Steuerungsprotokoll 19 angesehen werden. Der Systemmodus 7a, 7b, 7c kann derart ausgebildet sein, dass das Belagssignal 6 zur Initiierung der Funktion und/oder Aktion - in Abhängigkeit vom erfassten Belagssignal 6 - führen kann.

So kann ein erster Systemmodus 7a wenigstens eine erste Funktion 8a initiieren, wobei ein zweiter Systemmodus 7b eine sich von der ersten Funktion 8a unterscheidende zweite Funktion 8b initiieren kann.

Die Funktionen 8a, 8b, 8c können durch die Übertragung von einem Steuerungssignal 12 ausgelöst werden. Dabei kann sich das Steuerungssignal 12, das zur Initiierung der Funktion 8a führt, von dem Steuerungssignal 12, das zur Initiierung der Funktion 8b führt, unterscheiden. Zudem können sich die Steuerungssignale 12 der unterschiedlichen ausgewählten Systemmodi 7a, 7b, 7c voneinander unterscheiden.

Die Aktivierung der Funktionen 8a, 8b, 8c kann zumindest im Wesentlichen unmittelbar oder zeitverzögert nach dem Empfangen des Belagssignals erfolgen, insbesondere in Abhängigkeit von dem ausgewählten Systemmodus.

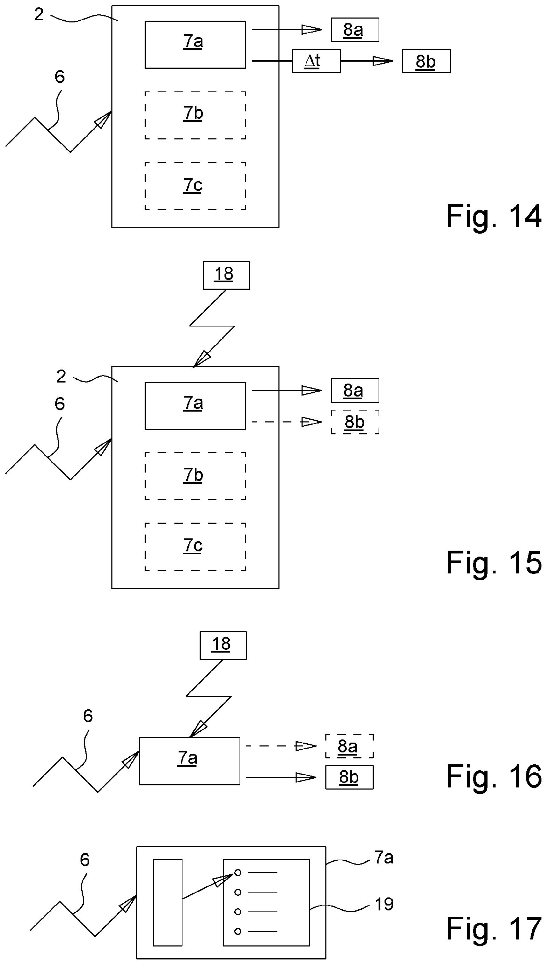

Fig. 14 zeigt, dass die Funktion 8a im ausgewählten Systemmodus 7a zumindest im Wesentlichen unmittelbar nach dem Empfangen des Belagssignals 6 initiiert wird, wobei die Funktion 8b zeitverzögert (Zeitverzögerung (Δt)) initiiert wird.

Nicht dargestellt ist, dass die Steuerungsvorrichtung 2 derart ausgebildet ist, dass die Verarbeitungsvorgaben des Belagssignals 6 zur Initiierung der wenigstens einen Funktion 8a, 8b, 8c in dem auszuwählenden und/oder ausgewählten Systemmodus 7a, 7b, 7c über eine Auswahl durch die Auswahleinrichtung 9 verändert werden. Eine derartige Adaptierung des Systemmodus 7a, 7b, 7c kann von einem Nutzer vorgenommen werden, so dass der Systemmodus 7a, 7b, 7c konfiguriert wird und/oder die zu initiierenden Funktion(en) 8a, 8b, 8c in dem Systemmodus 7a, 7b, 7c verändert wird/werden.

Fig. 5 zeigt, dass das Belagselement 3 eine mit dem Sensor 5 gekoppelte Sendeeinrichtung 10, insbesondere eine Antenne, zur, vorzugsweise drahtlosen, Übertragung des Belagssignals 6 aufweist. Die Sendeeinrichtung 10 überträgt das Belagssignal 6 an die Steuerungsvorrichtung 2. Das Belagssignal 6 kann auf der von dem Sensor 5 erfassten Information, nämlich der chemischen und/oder physikalischen Eigenschaft, beruhen und/oder die von dem Sensor 5 erfasste Information enthalten.

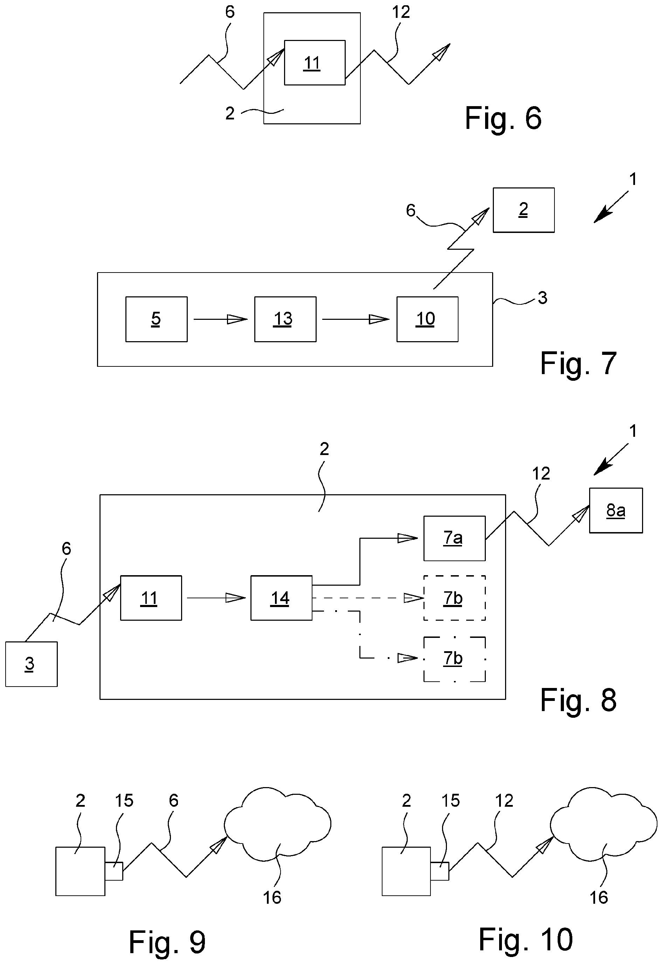

Fig. 6 zeigt, dass die Steuerungsvorrichtung 2 eine Kommunikationseinrichtung 11 zum, vorzugsweise drahtlosen, Empfangen des Belagssignals 6 aufweist. Fig. 6 zeigt weiter, dass die Kommunikationseinrichtung 11 ebenfalls zur Übertragung wenigstens eines Steuerungssignals 12 zur Ausführung der wenigstens einen Funktion 8a, 8b, 8c des ausgewählten jeweiligen Systemmodus 7a, 7b, 7c ausgebildet ist. Insbesondere ist die in Fig. 6 dargestellte Kommunikationseinrichtung 11 zum vorzugsweise drahtlosen Empfangen und Übertragen von Signalen ausgebildet.

Fig. 7 zeigt, dass das Belagselement 3 eine Verarbeitungseinrichtung 13 zur Verarbeitung, insbesondere zur vorzugsweise digitalen Konvertierung und/oder Codierung und/oder Komprimierung der durch den wenigstens einen Sensor 5 erfassten Information aufweist. Dabei kann die Verarbeitungseinrichtung 13 zur Erzeugung des Belagssignals 6 ausgebildet sein. Fig. 7 zeigt, dass die Verarbeitungseinrichtung 13 die verarbeitete Information, insbesondere das Belagssignal 6, an die Sendeeinrichtung 10 überträgt. Die Sendeeinrichtung 10 kann dabei wiederum das Belagssignal 6 an die Steuerungsvorrichtung 2 übertragen. Die Verarbeitungseinrichtung 13 und die Sendeeinrichtung 10 können in dem Belagselement 3 angeordnet und/oder dem Belagselement 3 zugeordnet sein.

Fig. 8 zeigt, dass die Steuerungsvorrichtung 2 vorliegend eine weitere Verarbeitungseinrichtung 14 zur Verarbeitung des Belagssignals 6 aufweist. Die weitere Verarbeitungseinrichtung 14 kann zur Decodierung des Belagssignals 6 ausgebildet sein. Dabei kann vorgesehen sein, dass der weiteren Verarbeitungseinrichtung 14 das Belagssignal 6 von der Kommunikationseinrichtung 11 übertragen wird. Die Steuerungsvorrichtung 2 kann in dem in Fig. 8 dargestellten Ausführungsbeispiel derart ausgebildet sein, dass die Ausführung der Funktion 8a, 8b, 8c in Abhängigkeit von dem ausgewählten Systemmodus - bei dem in Fig. 8 dargestellten Ausführungsbeispiel ist es der Systemmodus 7a - initiiert wird. Fig. 8 zeigt, dass die Funktion 8a durch die Übertragung des Steuerungssignals 12 initiiert wird.

In Fig. 8 ist schematisch dargestellt, dass das Steuerungssignal 12 durch den Systemmodus 7a "ausgelöst" wird. Dabei versteht es sich, dass das Steuerungssignal 12 von der Kommunikationseinrichtung 11 der Steuerungsvorrichtung 2 ausgesendet werden kann. Der in Fig. 8 dargestellte Pfeil des Steuerungssignals 12 deutet insbesondere an, dass das Steuerungssignal 12 von dem Systemmodus 7a abhängt.

Die Fig. 9 und 10 zeigen, dass die Steuerungsvorrichtung 2 eine Schnittstelle 15 mit bzw. zu einem Cloud-System 16 aufweist. In Fig. 9 ist dargestellt, dass die Schnittstelle 15 zur Weiterleitung des Belagssignals 6 an das Cloud-System 16 ausgebildet ist. Fig. 10 zeigt, dass die Schnittstelle 15 zur Weiterleitung des verarbeiteten Belagssignals 6 bzw. des wenigstens einen Steuerungssignals 12, das auf dem verarbeiteten Belagssignal 6 beruhen kann, ausgebildet ist. Dabei kann vorgesehen sein, dass in dem Cloud-System 16 eine weitere Verarbeitung des Belagssignals 6 und/oder des Steuerungssignals 12 erfolgt. Somit kann "Rechnerleistung" und/oder zur Verarbeitung notwendige Hardware und/oder Energie in das Cloud-System 16 ausgelagert werden. Insbesondere kann das Cloud-System 16 auch derart ausgebildet sein, dass es die durchzuführende Funktion bzw. Aktion 8a, 8b, 8c in Abhängigkeit von dem ausgewählten Systemmodus vorgibt - und somit die Verarbeitungsaufgabe der Steuerungsvorrichtung 2 übernimmt - und diese entsprechend durch weitere Steuerungssignale initiiert. Letztlich kann eine Kommunikation zwischen der Steuerungsvorrichtung 2 und dem Cloud-System 16 vorgesehen sein, so dass diese funktional miteinander zusammenwirken können.

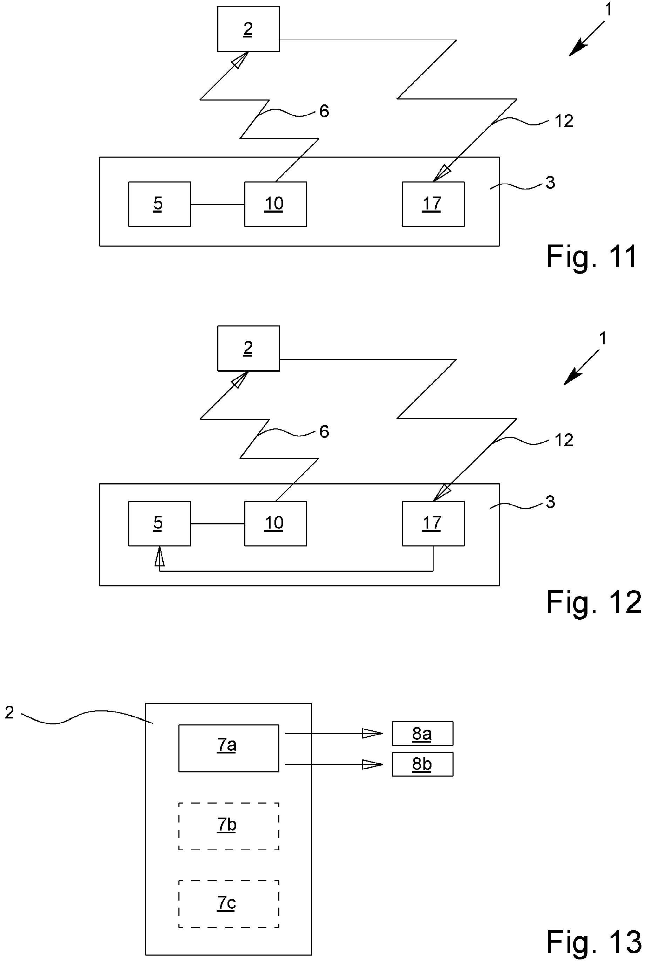

Fig. 11 zeigt, dass das Belagselement 3 eine Empfangseinrichtung 17 zum vorzugsweise drahtlosen Empfangen von wenigstens einem Steuerungssignal 12 der Steuerungsvorrichtung 2 aufweist. Dieses von der Steuerungsvorrichtung 2 gesendete Steuerungssignal 12 kann zur Steuerung des Belagselementes 3 oder von Funktionen des Belagselementes 3, insbesondere des wenigstens einen Sensors 5, vorgesehen sein. Fig. 12 zeigt, dass das Steuerungssignal 12 an die Empfangseinrichtung 17 des Belagselementes 3 übertragen bzw. gesendet wird, wobei die Empfangseinrichtung 17 zur Steuerung des wenigstens einen Sensors 5 ausgebildet ist. Nicht dargestellt ist, dass nach dem Empfangen des Steuerungssignals 12 in dem Belagselement 3 eine Funktion 8a, 8b, 8c initiiert werden kann und/oder dass das Belagselement 3 durch das Steuerungssignal 12 angesteuert werden kann.

Fig. 13 zeigt, dass die Steuerungsvorrichtung 2 derart ausgebildet ist, dass sie in Abhängigkeit von dem ausgewählten Systemmodus, im dargestellten Ausführungsbeispiel ist es der Systemmodus 7a, die Ausführung von wenigstens zwei Funktionen 8a und 8b initiieren kann. In dem dargestellten Ausführungsbeispiel werden die Funktionen 8a und 8b gleichzeitig initiiert. Fig. 14 zeigt, dass die Funktionen 8a und 8b sukzessiv initiiert werden, wobei die Aktion 8b bzw. die Funktion 8b zeitverzögert zu der Funktion 8a initiiert wird.

Es kann auch vorgesehen sein, dass eine Funktion, beispielsweise 8a oder 8b, intern in der Steuerungsvorrichtung 2 oder intern in dem Steuerungssystem 1 realisiert wird, insbesondere ohne dass dies für einen äußeren Nutzer wahrnehmbar ist. Beispielsweise kann die Funktionalität des Belagselementes 3, wie schematisch in Fig. 12 dargestellt, geändert werden. Externe Funktionen 8a, 8b, 8c können durch externe Geräte, wie Aktoren und/oder externe Systeme und/oder Anwendungen, wie cloudbasierte Funktion und/oder beispielsweise die Aktivierung eines Saugroboters, durchgeführt werden.

Nicht dargestellt ist, dass die Ausführung der Aktion bzw. Funktion 8a, 8b, 8c des Systemmodus 7a, 7b, 7c, insbesondere die Aussendung des Steuerungssignals 12, in Abhängigkeit von einem weiteren Parameter von der Steuerungsvorrichtung 2 initiierbar ist. Als weiterer Parameter kann dabei eine Variable, wie die Jahreszeit, Uhrzeit, die Anzahl der anwesenden Personen, das Wetter, die Temperatur, die Fortbewegungsgeschwindigkeit, eine mögliche Gefahrensituation etc., dienen. Der weitere Parameter kann bei Verarbeitung des Belagssignals 6 zur Auswahl der wenigstens einen Aktion bzw. Funktion 8a, 8b, 8c berücksichtigt werden. Der weitere Parameter kann ebenfalls von dem empfangenen Belagssignal 6 abhängen. Beispielsweise kann mit dem Belagssignal 6 auch der weitere Parameter - abhängig oder unabhängig von der vom Sensor 5 erfassten Information - an die Steuerungsvorrichtung 2 übertragen werden.

Fig. 15 zeigt, dass eine externe Überwachungseinrichtung 18 zur Übertragung einer Überwachungsinformation an die Steuerungsvorrichtung 2 ausgebildet ist. Die von der Überwachungseinrichtung 18 übertragene Überwachungsinformation kann ebenfalls bei der Auswahl der durchzuführenden Funktion - im dargestellten Ausführungsbeispiel die Funktion 8a - berücksichtigt werden. Beispielsweise kann die Überwachungseinrichtung 18 ebenfalls einen Sensor 5, wie einen Temperatursensor, einen Luftfeuchte-Sensor, einen Helligkeitssensor oder dergleichen, umfassen. Letztlich ermöglicht die Überwachungseinrichtung 18, dass neben der Information vom Belagselement 3 weitere Daten bei der Auswahl der zu initiierenden Funktion 8a, 8b, 8c von der Steuerungsvorrichtung 2 in dem ausgewählten Systemmodus - in dem in Fig. 15 dargestellten Ausführungsbeispiel in dem Systemmodus 7a - berücksichtigt werden. Insbesondere kann die Überwachungsinformation von der Überwachungseinrichtung 18 drahtlos an die Steuerungsvorrichtung 2, insbesondere an die Kommunikationseinrichtung 11 der Steuerungsvorrichtung 2, übertragbar sein.

Fig. 16 zeigt, dass anstelle der Funktion 8a -wie im in Fig. 15 dargestellten Ausführungsbeispiel - die Funktion 8b von dem ausgewählten Systemmodus 7a initiiert wird, wobei das Belagssignal 6 in den Ausführungsbeispielen gemäß den Fig. 15 und 16 identisch entsprechen kann. So kann in Abhängigkeit von der von der Überwachungseinrichtung 18 übertragenen Überwachungsinformation an die Steuerungsvorrichtung 2 ein Einfluss auf die auszuführende Funktion erfolgen.

Fig. 17 zeigt, dass die Steuerungsvorrichtung 2 derart ausgebildet ist, dass die Vorgabe eines Steuerungssignals 12 und/oder einer durchzuführenden bzw. zu initiierenden Funktion 8a, 8b, 8c im jeweils ausgewählten Systemmodus - im dargestellten Ausführungsbeispiel im Systemmodus 7a - entsprechend eines Steuerungsprotokolls 19 nach festlegbaren und/oder festgelegten Regeln in Abhängigkeit von dem Belagssignal 6 erfolgt. Dabei kann die Steuerungsvorrichtung 2 weiter derart ausgebildet sein, dass das Steuerungsprotokoll 19 und/oder die Regeln (im in Fig. 17 dargestellten Ausführungsbeispiel schematisch durch die Punkte visualisiert) in Abhängigkeit von einem weiteren Parameter, beispielsweise einer von der Überwachungseinrichtung 18 übertragenen Überwachungsinformation, die Vorgabe für das Steuerungssignal 12 bzw. die Vorgabe für die zu initiierende Funktion 8a, 8b, 8c festlegen kann.

In dem Steuerungsprotokoll 19 oder in dem ausgewählten Systemmodus 7a, 7b, 7c kann ebenfalls die Intensität und/oder die Größenordnung des Belagssignals 6 analysiert und in Abhängigkeit davon kann eine Funktion ausgelöst werden. So können beispielsweise Schwellenwerte und/oder dergleichen für das Belagssignal 6 vorgegeben werden, wobei bei Unterschreitung und/oder Überschreitung eine bestimmte Funktion 8a, 8b, 8c von der Steuerungsvorrichtung 2 ausgelöst werden kann. Auch kann sich der Schwellenwert und/oder die in dem Steuerungsprotokoll 19 festgelegte Größenordnung und/oder der in dem Steuerungsprotokoll 19 festgelegte Größenbereich und/oder die diesbezügliche Intensität des Belagssignals 6 für eine bestimmte durchzuführende Funktion 8a, 8b, 8c im jeweils ausgewählten Systemmodus 7a, 7b, 7c unterscheiden. Als Beispiel sei in diesem Zusammenhang erwähnt, dass der insbesondere als Drucksensor ausgebildete wenigstens eine Sensor 5 des Belagselementes 3 im Systemmodus 7a (beispielsweise "Nachtmodus") sensibler eingestellt ist als im Systemmodus 7b (beispielsweise "Tagmodus").

Demzufolge kann vorgesehen sein, dass das Steuerungsprotokoll 19 unterschiedliche Regeln und/oder unterschiedliche Vorgaben für unterschiedliche Größenbereiche bzw. Intensitäten des Belagssignals 6 vorsieht.

Nicht dargestellt ist, dass die Steuerungsvorrichtung 2 derart ausgebildet ist, dass die Ausführung der Funktion bzw. Aktion 8a, 8b, 8c erst initiiert wird, wenn die weitere Verarbeitungseinrichtung 14 eine vorgebbare Abfolge von Belagssignalen 6 und/oder eine festgelegte Anzahl einer Mehrzahl von Belagssignalen 6 feststellt. Alternativ oder zusätzlich kann das Belagselement 3 derart ausgebildet sein, dass das Belagselement 3 erst das Belagssignal 6 an die Steuerungsvorrichtung 2 überträgt, wenn die Verarbeitungseinrichtung 13 eine vorgebbare Abfolge und/oder eine festgelegte Anzahl einer Mehrzahl von durch den Sensor 5 erfassten Messdaten feststellt. Als Beispiel sei in diesem Zusammenhang erwähnt, dass die Funktion 8a ("Licht an") dann von der Steuerungsvorrichtung 2 aktiviert bzw. initiiert wird, wenn zwei Belagssignale 6 von der Steuerungsvorrichtung 2 empfangen werden (das heißt durch zweimal Tippen auf dem Belagselement 3). Auch eine zeitverzögerte Belastung kann vorgegeben werden, so kann beispielsweise eine Aktion 8a erst durchgeführt werden, wenn beispielsweise 1000 Belagssignale 6 empfangen worden sind.

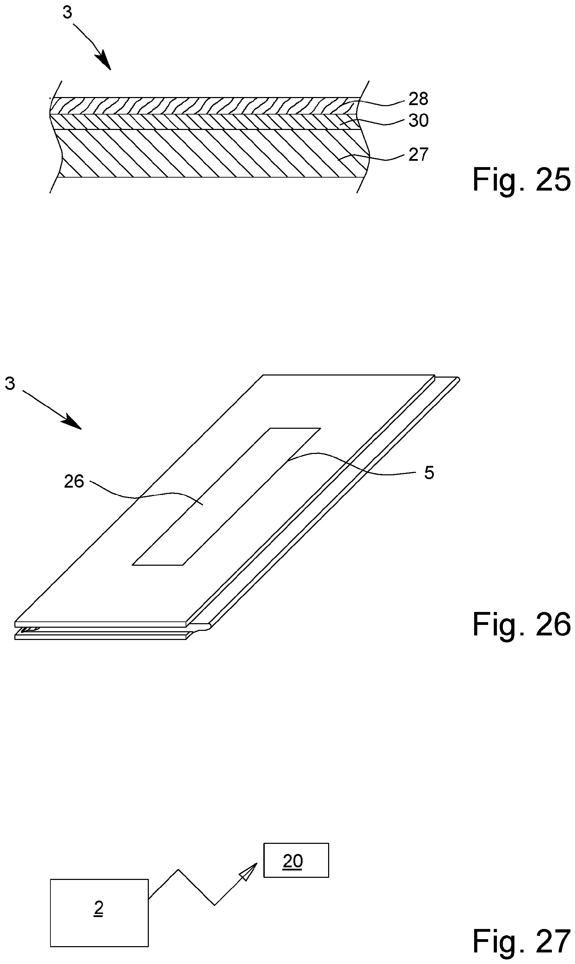

Fig. 27 zeigt, dass der Steuerungsvorrichtung 2 eine, vorzugsweise externe, Speichereinrichtung 20 zugeordnet ist. Die Speichereinrichtung 20 kann zum Empfangen des Belagssignals 6 und/oder zum Speichern des Belagssignals 6 ausgebildet sein. In der Speichereinrichtung 20 können demzufolge die Aktivitäten innerhalb des Gebäudes gespeichert werden. Die Speichereinrichtung 20 kann auch in einem Cloud-Laufwerk angeordnet sein bzw. als Cloud-Laufwerk ausgebildet sein.

Nicht dargestellt ist, dass die Steuerungsvorrichtung 2 derart ausgebildet ist, dass sie sowohl in Abhängigkeit von der von der Speichereinrichtung 20 gespeicherten Information als auch in Abhängigkeit von dem Belagssignal 6 die Ausführung der Funktion(en) 8a, 8b, 8c initiiert. Insbesondere ist nicht dargestellt, dass die Steuerungsvorrichtung 2 selbstlernend ausgebildet ist. Die Steuerungsvorrichtung 2 kann eine künstliche Intelligenz aufweisen und gespeicherte Daten und von dem Belagselement 3 erfasste Daten miteinander verknüpfen und diese zueinander korrelieren. So können Fehler, Fehlalarme oder dergleichen erkannt, dokumentiert und insbesondere behoben werden. Diese Intelligenz kann in ein Cloud-System 16 ausgelagert werden. Dabei können die Belagselemente 3 in einem Steuerungssystem 1 (Smart-Home-System) in ein Gebäudemanagementsystem eingebunden werden, wobei sie als Gateway zwischen den Systemen fungieren können.

Insbesondere kann die Verarbeitung des Belagssignals 6 in der weiteren Verarbeitungseinrichtung 14 und/oder in der Verarbeitungseinrichtung 13 in Echtzeit erfolgen.

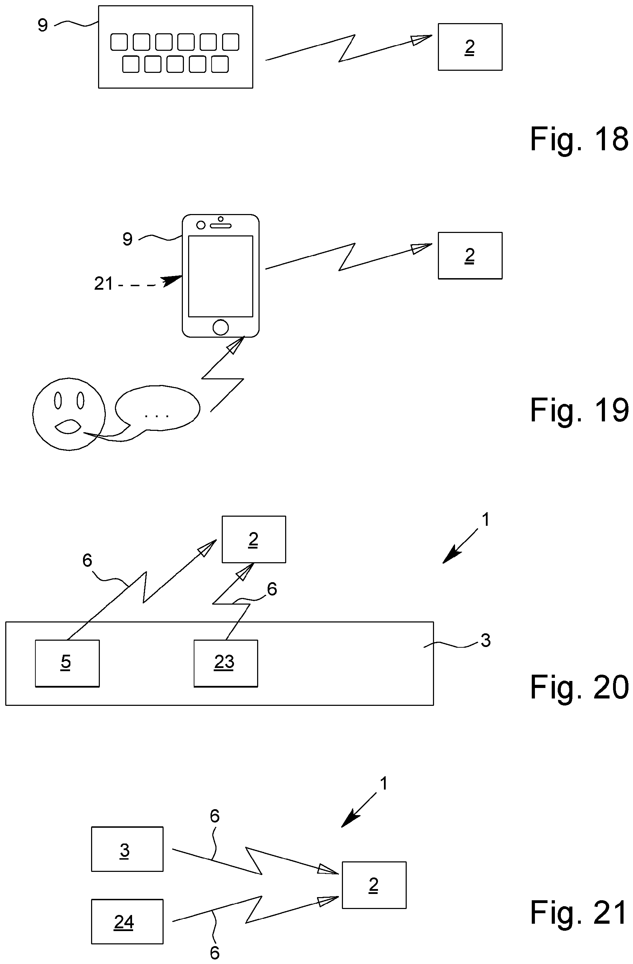

Die Fig. 18 zeigt, dass vorliegend als Auswahleinrichtung 9 eine stationäre Eingabe vorgesehen ist. Über die stationäre Eingabe kann durch Auswahl entsprechender Tasten oder dergleichen der auszuwählende Systemmodus 7a, 7b, 7c der Steuerungsvorrichtung 2 vorgegeben werden.

Fig. 19 zeigt, dass die Auswahleinrichtung 9 als mobiles Endgerät, insbesondere als Smartphone, ausgebildet sein kann.

In dem in Fig. 19 dargestellten Ausführungsbeispiel weist die Auswahleinrichtung 9 eine Messeinrichtung 21 zur Bestimmung des auszuwählenden Systemmodus 7a, 7b, 7c auf. Insbesondere kann die Messeinrichtung 21 zur Erfassung und Verarbeitung einer verbalen und/oder nonverbalen Kommunikation ausgebildet sein. Im dargestellten Ausführungsbeispiel kann vorgegeben sein, dass durch die Sprache eines Nutzers die Auswahleinrichtung 9 angesteuert werden kann. Gleichzeitig kann die Auswahleinrichtung 9 auch derart ausgebildet sein, dass die Gestik, Mimik, Körperhaltung und/oder dergleichen des Nutzers analysiert wird und zur Vorgabe des Systemmodus 7a, 7b, 7c dienen kann.

Nicht dargestellt ist, dass die Auswahleinrichtung 9 auch in dem Belagselement 3 integriert sein kann, insbesondere mit dem wenigstens einen Sensor 5 interagieren kann. So können beispielsweise auch Trittmuster oder dergleichen zur Aktivierung bzw. zur Auswahl des jeweiligen Systemmodus 7a, 7b, 7c vorgesehen sein.

Fig. 20 zeigt, dass wenigstens zwei sich voneinander unterscheidende Sensoren 5, 23 des Belagselementes 3 vorgesehen sind. Die zwei Sensoren 5, 23 können - müssen jedoch nicht - miteinander gekoppelt sein. Die Sensoren 5, 23 können jeweils ein Belagssignal 6 an die Steuerungsvorrichtung 2 übertragen. Dabei können die zwei Sensoren 5, 23 derart ausgebildet sein, dass sie unterschiedliche chemische und/oder physikalische Eigenschaften erfassen.

In Fig. 21 ist dargestellt, dass wenigstens zwei Belagselemente 3, 24 in dem System 1 eingebunden sind. Jedes Belagselement 3, 24 kann jeweils wenigstens einen Sensor 5, 23 aufweisen. Die Sensoren 5, 23 können unterschiedlich ausgebildet sein, insbesondere zur Erfassung von unterschiedlichen chemischen und/oder physikalischen Eigenschaften.

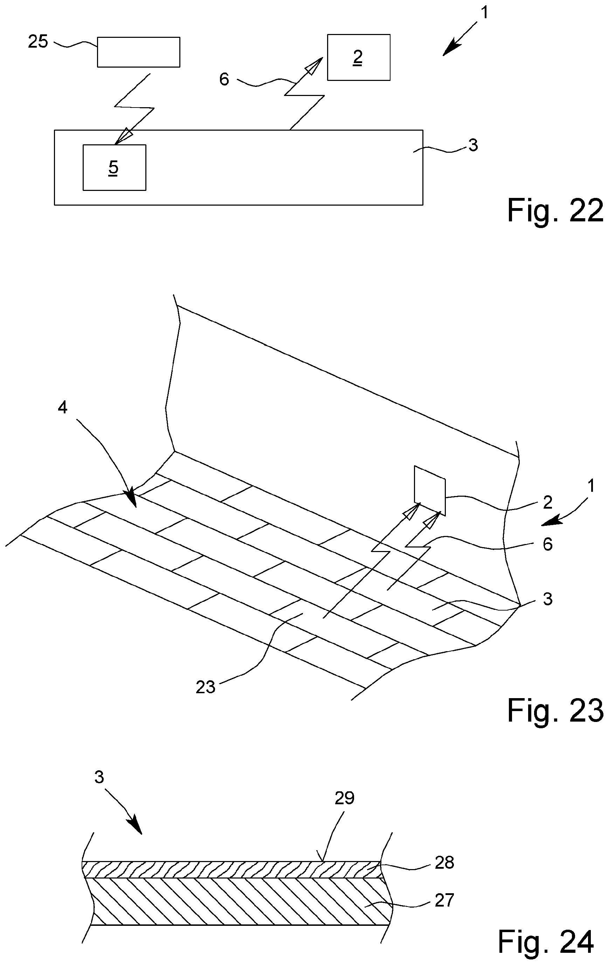

In Fig. 23 ist dargestellt, dass die zwei Belagselemente 3, 23 auch an unterschiedlichen Positionen in einem Raum angeordnet und miteinander in einem Belag 4 verbunden sein können. Die Belagselemente 3, 23 können die Belagssignale 6 an eine Steuerungsvorrichtung 2 übertragen. Insbesondere erfolgt eine drahtlose Übertragung der Belagssignale 6.

Nicht dargestellt ist, dass der wenigstens eine Sensor 5 zur Ermittlung der Temperatur, der Beleuchtungsstärke, von auf dem Belagselement 3 wirkender Feuchtigkeit und/oder des auf dem Belagselementes 3 wirkenden Druckes ausgebildet sein kann. Weiter ist nicht dargestellt, dass der Sensor 5 als piezoelektrischer Sensor ausgebildet sein kann.

Fig. 22 zeigt, dass der wenigstens eine Sensor 5 zum Auslesen eines Zugangskontrollmittels 25 ausgebildet ist. Das Zugangskontrollmittel 25 kann insbesondere ein RFID-Transponder sein. In Abhängigkeit von der von dem Zugangskontrollmittel 25 erfassten Information kann eine Übertragung des Belagssignals 6 an eine Steuerungsvorrichtung 2 von dem Belagselement 3 erfolgen.

Fig. 26 zeigt, dass der Sensor 5 als planare wirksame Sensorfläche 26 ausgebildet ist. Insbesondere kann eine kapazitive Sensorfläche 26 vorgesehen sein. Nicht dargestellt ist, dass die Sensorfläche 26 zwei planar zueinander angeordnete Elektroden auf einem, insbesondere an dem Belagselement 3 angeordneten, Substrat die Sensorfläche 26 bilden. Der in Fig. 26 dargestellte Sensor 5, der als kapazitiver Sensor ausgebildet sein kann, kann zur Erfassung des auf dem Belagselement 3 wirkenden Druckes und/oder der sich im Bereich der Sensorfläche 26 ergebenden Kapazitätsänderungen ausgebildet sein.

Nicht dargestellt ist, dass der Sensor 5 und/oder die planare wirksame Sensorfläche 26 unterhalb der Trägerplatte 27 bzw. an der Unterseite des Belagselementes 3 angeordnet ist.

Die Fig. 24 zeigt, dass das Belagselement 3 als Plattenkörper für einen Bodenbelag 4 ausgebildet ist. Ein diesbezüglicher Belag 4 ist schematisch in der Fig. 23 dargestellt. Fig. 24 zeigt, dass das Belagselement 3 wenigstens eine Trägerplatte 27 und wenigstens eine oberseitige Deckschicht 28 bzw. einen oberseitigen Schichtaufbau 28 oberhalb der Trägerplatte 27 aufweist. Das Belagselement 3 kann auch für ein Möbel oder eine Fassade vorgesehen sein.

Fig. 25 zeigt, dass zwischen der Trägerplatte 27 und der Deckschicht 28 wenigstens eine eine gedruckte Schaltung aufweisende Funktionsschicht 30 vorgesehen ist. Der wenigstens eine Sensor 5 kann der Funktionsschicht 30 zugeordnet und/oder in der Funktionsschicht 30 angeordnet sein.

Nicht dargestellt ist, dass die Funktionsschicht 30 auch unterhalb der Trägerplatte 27 - das heißt dem oberseitigen Schichtaufbau 28 bzw. der Oberseite 29 abgewandt - angeordnet sein kann. Auch kann der wenigstens eine Sensor 5 unterhalb oder oberhalb der Trägerplatte 27 angeordnet sein. Als Trägerplatte 27 kann eine MDFoder HDF-Platte vorgesehen sein. Letztlich sind aber auch unterschiedliche Plattenkörper oder Materialien für die Trägerplatte 27 möglich. So kann auch eine Kunststoff aufweisende Trägerplatte 27, eine mineralische Trägerplatte 27 und/oder ein Gemisch aus Holz, Kunststoff und/oder Mineralien aufweisende Trägerplatte 27 oder eine einen Holzwerkstoff aufweisende Trägerplatte 27 vorgesehen sein.

Nicht dargestellt ist, dass die Funktionsschicht 30 wenigstens einen Aktor, insbesondere ausgebildet in Form einer Leuchtschicht und/oder als mechanischer Aktor, und/oder wenigstens eine Leiterbahn zur Übertragung von elektrischem Strom und/oder Energie aufweisen kann.

Weiter ist nicht dargestellt und bevorzugt, dass der Funktionsschicht 30 und/oder dem wenigstens einen Sensor 5 und/oder dem Belagselement 3 ein Energieversorgungsmittel zugeordnet bzw. in dem Belagselement 3 angeordnet ist. Das Energieversorgungsmittel kann zur Energieversorgung des wenigstens einen Sensors 5 und/oder der Funktionsschicht 30 und/oder des Belagselementes 3 ausgebildet sein.

Weiter ist nicht dargestellt, dass die weitere Verarbeitungseinrichtung 14 zur Positionserkennung des Belagselementes 3, insbesondere in Abhängigkeit des empfangenen Belagssignals 6, ausgebildet sein kann.

Zudem ist nicht dargestellt, dass die von der Steuerungsvorrichtung 2 verarbeiteten Daten und insbesondere deren Ergebnisse auf externen Geräten oder der Auswahleinrichtung 9 dargestellt und/oder visualisiert werden können.

Insbesondere darf zudem zusätzlich noch auf die nachstehenden Aspekte verwiesen werden, die mit wenigstens einer der vorgenannten Ausführungsformen kombinierbar sind und/oder unabhängige Erfindungsaspekte darstellen können:

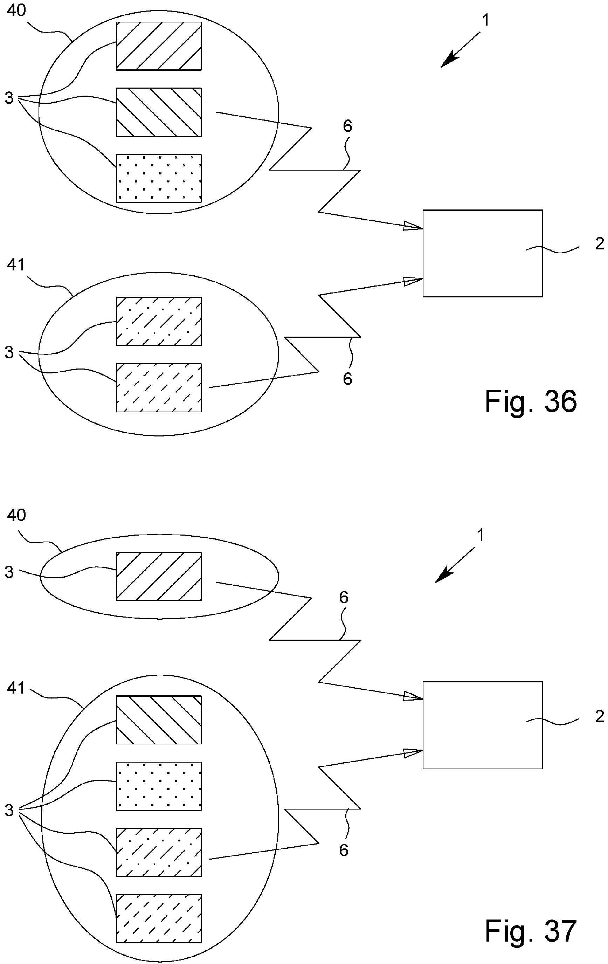

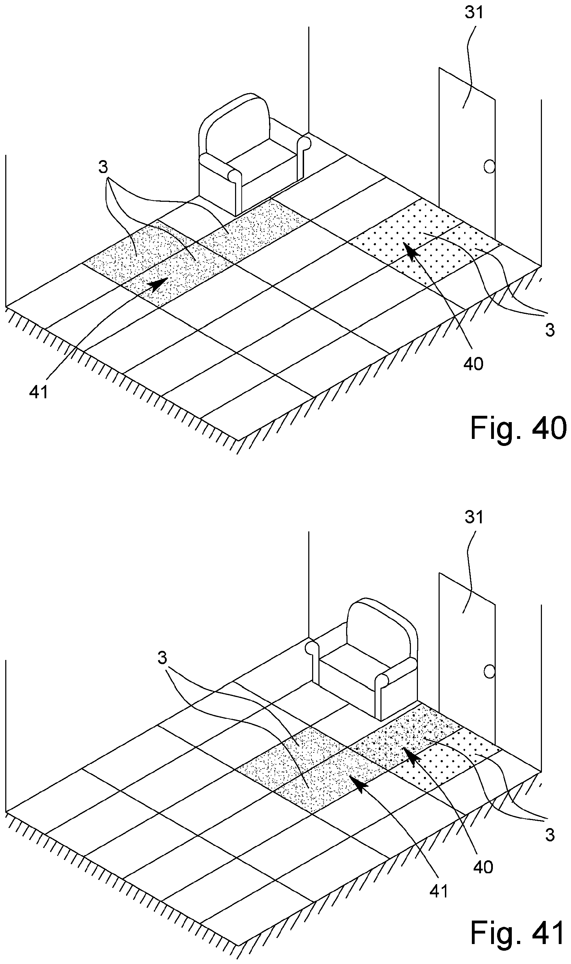

Fig. 36 zeigt ein Steuerungssystem 1 mit einer Steuerungsvorrichtung 2 und wenigstens zwei Belagselementen 3. Dass die Belagselemente 3 Teil eines Belages 4 sind, ist in den Fig. 40 und 41 schematisch dargestellt. Das Steuerungssystem 1 kann für Gebäude verwendet werden und insbesondere in einem Smart-Home-System integriert werden. Das Belagselement 3 weist in dem in Fig. 36 dargestellten Ausführungsbeispiel wenigstens einen mit der Steuerungsvorrichtung 2 gekoppelten Sensor 5 auf, der in dem Belagselement 3 integriert ist. Der in dem Belagselement 3 integrierte Sensor 5 ist schematisch in der Fig. 26 dargestellt. Dabei kann der Sensor 5 sowohl auf der Oberseite und/oder im oberen Teil des Belagselementes 3 als auch auf der Unterseite und/oder im unteren Teil des Belagselementes 3 angeordnet sein. Insbesondere kann der im oberen Bereich des Belagselementes 3 angeordnete Sensor 5 noch von wenigstens einer Schutzschicht bedeckt werden.

Der Sensor 5 kann zur Erfassung wenigstens einer chemischen und/oder physikalischen Eigenschaft und zur Erzeugung eines Belagssignals 6 ausgebildet sein.

Die in Fig. 36 dargestellten Belagselemente 3 sind zur Übermittlung der Belagssignalen 6 an die Steuerungsvorrichtung 2 ausgebildet. Fig. 36 zeigt, dass das Steuerungssystem 1 in einem ersten Betriebszustand betrieben wird. Ein zweiter Betriebszustand ist schematisch in der Fig. 37 dargestellt. Die unterschiedliche Ausbildung der einzelnen Belagselemente 3 ist durch entsprechende Schraffuren zeichnerisch dargestellt worden. Somit ist die Steuerungsvorrichtung 2 und das gesamte Steuerungssystem 1 in einer Mehrzahl unterschiedlicher Betriebszustände betreibbar. In den Betriebszuständen ist die Steuerungsvorrichtung 2 zur Verarbeitung der Belagssignale 6 ausgebildet. Weiter ist die Steuerungsvorrichtung 2 zur Initiierung von Funktionen 8a, 8b, 8c ausgebildet, wie dies schematisch in der Fig. 2 dargestellt ist.

In Fig. 36 ist dargestellt, dass in der Steuerungsvorrichtung 2 für einen Betriebszustand wenigstens ein jeweils wenigstens ein Belagselement 3 oder wenigstens zwei Belagselemente 3 zur gemeinsamen und/oder gebündelten Verarbeitung der Belagssignale 6 umfassendes Cluster 40, 41 hinterlegt ist. In Fig. 36 ist dargestellt, dass zwei Cluster 40, 41 vorgesehen sind, in denen jeweils eine Mehrzahl von Belagselementen 3 angeordnet ist. Die Belagselemente 3 des jeweiligen Clusters 40, 41 können Belagssignale 6 an die Steuerungsvorrichtung 2 übertragen, wobei in der Steuerungsvorrichtung 2 bei Verarbeitung der Belagssignale 6 das jeweils hinterlegte Cluster 40, 41 berücksichtigt wird. Insbesondere werden die Belagssignale 6 eines Clusters 40, 41 gleichwertig behandelt bzw. derart als ob sie von demselben Belagselement 3 stammen. Somit kann über die Clusterbildung erreicht werden, dass Sensorflächen des Belages 4, insbesondere des Bodenbelages, gebildet werden. Diese Sensorflächen können ununterbrochene oder unterbrochene Bereiche des Belages 4 darstellen und in wenigstens einem Raum oder in mehreren Räumen des Gebäudes angeordnet sein.

In Fig. 37 ist ein weiterer Betriebszustand des in Fig. 36 dargestellten Steuerungssystems 1 gezeigt. Bei Vergleich der Fig. 36 und 37 wird deutlich, dass sich die Betriebszustände voneinander durch wenigstens zwei sich voneinander unterscheidende Cluster 40, 41 unterscheiden. In dem dargestellten Ausführungsbeispiel ist vorgesehen, dass zwei Belagselemente 3 des Clusters 40 in das Cluster 41 in dem in Fig. 37 dargestellten Betriebszustand integriert werden.

Der Betriebszustand kann beispielsweise von einem Nutzer des Steuerungssystems 1 verändert werden, insbesondere über Auswahl durch eine Auswahleinrichtung 9, die auch als mobiles Endgerät ausgebildet sein kann. Darüber hinaus kann der Betriebszustand auch in Abhängigkeit von weiteren Parametern verändert werden. Letztlich wird ermöglicht, dass über den Wechsel des Betriebszustandes auch eine Veränderung der Cluster 40, 41 möglich ist, so dass insbesondere eine kontinuierliche Adaptierbarkeit bzw. Konfiguration der Clusterbildung des Belages 4 ermöglicht wird. Daher können die Sensorflächen des Belages 4 in Abhängigkeit von unterschiedlichen Anwendungssituationen angepasst werden.

In den Fig. 40 und 41 ist schematisch dargestellt, dass beispielsweise der Betriebszustand aufgrund einer unterschiedlichen Möblierung (im dargestellten Ausführungsbeispiel die Verschiebung eines Sofas) verändert wird. So kann beispielsweise dem Bereich vor dem Sofa ein Cluster 41 zugeordnet werden, das letztlich durch eine Veränderung des Betriebszustandes (das heißt beispielsweise bei einer Veränderung des Möbelstückes Sofa) verschoben oder neugebildet werden kann, wie dies die Fig. 41 schematisch darstellt. Ein weiteres Cluster 40 kann in diesem Zusammenhang auch bei Veränderung des Betriebszustandes unverändert bleiben.

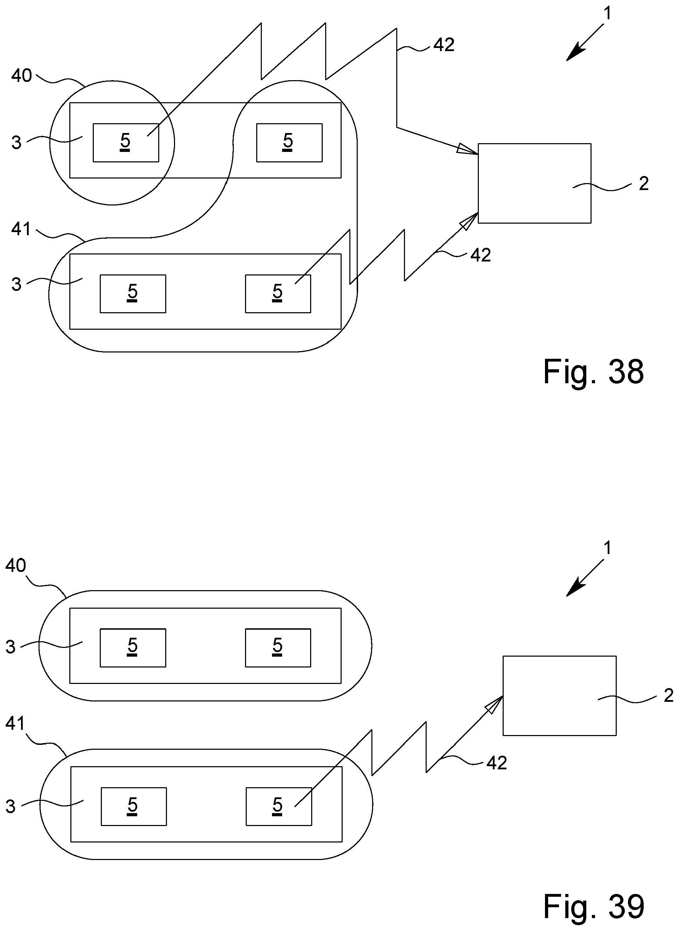

In den Fig. 38 und 39 ist dargestellt, dass auch die Sensoren 5 des Belagselementes 3 unabhängig von dem Belagselement 3 zu Clustern 40, 41 gebildet werden können. Dies kann als zusätzliche oder alternative Ausführungsform des Steuerungssystems 1 angesehen werden.

Fig. 38 zeigt in diesem Zusammenhang ein Steuerungssystem 1, das für Gebäude und insbesondere für eine Smart-Home-Anwendung genutzt werden kann. Das Steuerungssystem 1 weist eine Steuerungsvorrichtung 2 und wenigstens zwei Belagselemente 3 eines Belages 4 auf, wie schematisch in Fig. 40 dargestellt. Das Belagselement 3 weist wenigstens einen mit der Steuerungsvorrichtung 2 gekoppelten Sensor 5 zur Erfassung wenigstens einer chemischen und/oder physikalischen Eigenschaft zur Erzeugung eines Sensorsignals 42 auf. Das Sensorsignal 42 kann von dem Belagselement 3 oder von dem Sensor 5 bzw. von einer mit dem Sensor 5 gekoppelten Sensor-Sendeeinrichtung an die Steuerungsvorrichtung 2 übertragen werden.

In dem in Fig. 38 dargestellten Ausführungsbeispiel ist vorgesehen, dass die Sensoren 5 zur Übermittlung von Sensorsignalen 42 an die Steuerungsvorrichtung 2 ausgebildet sind.

Die Fig. 39 zeigt einen weiteren Betriebszustand des in Fig. 38 dargestellten Steuerungssystems 1. Die Steuerungsvorrichtung 2 ist letztlich in einer Mehrzahl unterschiedlicher Betriebszustände betreibbar. Die Betriebszustände können als unterschiedliche Konfigurationen der Cluster 40, 41 und somit unterschiedliche "Momentaufnahmen" des Steuerungssystems 1 angesehen werden. Ein Betriebszustand kann beispielsweise durch einen Nutzer durch eine veränderte Clusterbildung verändert werden. In den Betriebszuständen ist die Steuerungsvorrichtung 2 zur Verarbeitung der Sensorsignale 42 und zur Initiierung von Funktionen ausgebildet. Die initiierten Funktionen sind nicht in der Fig. 38 dargestellt, diese können letztlich von der Steuerungsvorrichtung 2 initiiert werden.

In Fig. 38 ist dargestellt, dass in der Steuerungsvorrichtung 2 für einen Betriebszustand wenigstens ein jeweils wenigstens ein Sensor 5 oder wenigstens zwei Sensoren 5 zur gemeinsamen und/oder gebündelten Verarbeitung der Sensorsignale 42 umfassendes Cluster 40, 41 hinterlegt ist. In dem in Fig. 38 schematisch dargestellten Ausführungsbeispiel ist vorgesehen, dass zwei Cluster 40, 41 durch die Sensoren 5 gebildet werden, wobei ein Cluster 40 einen Sensor 5 umfasst und ein weiteres Cluster 41 sich beispielsweise aus drei Sensoren 5 zusammensetzt. Dabei können auch die Sensoren 5 eines Belagselementes 3 unterschiedlichen Clustern 40, 41 angehören, wie dies schematisch aus der Fig. 38 hervorgeht.

In Fig. 39 ist ein weiterer Betriebszustand dargestellt, bei dem die Cluster 40, 41 verändert werden. Nunmehr wird der Cluster 40 durch beide Sensoren 5 des Belagselementes 3 gebildet. Jeder Sensor 5 kann letztlich bei Beanspruchung ein Sensorsignal 42 an die Steuerungsvorrichtung 2 übertragen, wobei in der Steuerungsvorrichtung 2 bei Verarbeitung des Sensorsignals 42 das jeweils für das Sensorsignal 42 hinterlegte Cluster 40, 41 berücksichtigt wird. Somit kann einer Mehrzahl von Sensoren 5 eine Sensorfläche als Cluster 40, 41 zugeordnet werden, die bzw. deren Verarbeitungsvorgaben bei der Verarbeitung der Signale 42 berücksichtigt wird.

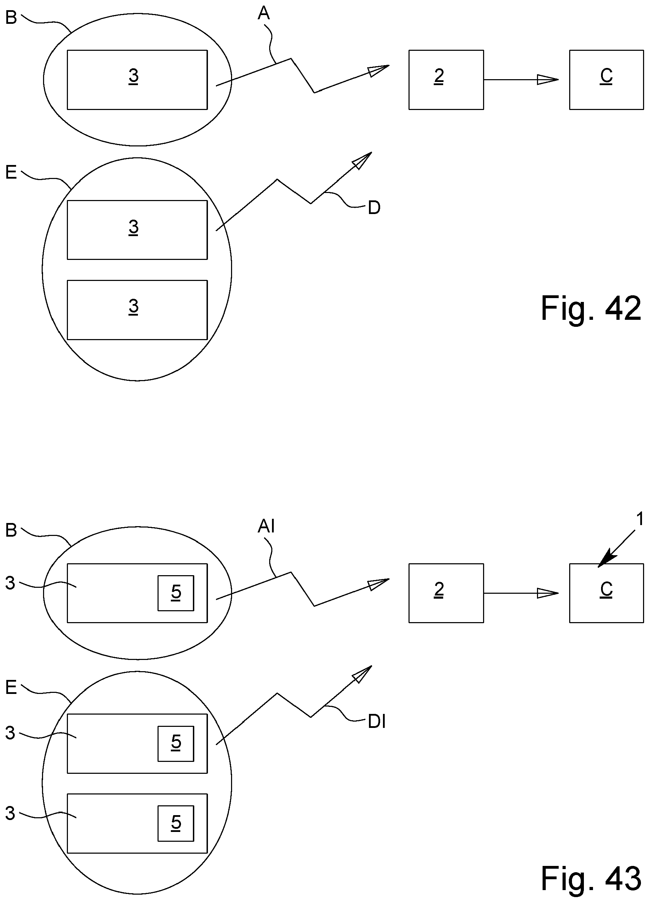

Fig. 42 zeigt, dass die Steuerungsvorrichtung 2 derart ausgebildet ist, dass ein erstes Belagssignal A eines ersten Clusters B zur Initiierung einer ersten Funktion C führt. Die erste Funktion C kann beispielsweise darin bestehen, das Licht anzuschalten. Darüber hinaus kann auch vorgesehen sein, dass eine Funktionskombination C bestehend aus einer Mehrzahl von Funktionen durch die Steuerungsvorrichtung 2 nach Verarbeiten des Belagssignals A initiiert wird. Weiter zeigt Fig. 42, dass ein Belagssignal D - das beispielsweise gleich zu dem Belagssignal A ausgebildet sein kann - eines Clusters E ebenfalls zur Initiierung der ersten Funktion C führt. Die Signale A und D können beispielsweise zu unterschiedlichen Zeitpunkten ausgesendet werden. Grundsätzlich kann auch vorgesehen sein, dass sich das Signal D von dem Signal A unterscheidet. In dem dargestellten Ausführungsbeispiel sind beide Cluster B und E im selben Betriebszustand Z' angeordnet. In einem nicht dargestellten Ausführungsbeispiel ist vorgesehen, dass die Cluster B und E in zwei unterschiedlichen Betriebszuständen angeordnet sind.

In Fig. 43 ist die in bereits zu Fig. 42 beschriebene Funktionsweise dargestellt, jedoch anstelle der Belagssignale 6 werden Sensorsignale 42 übertragen. So führt ein erstes Sensorsignal A' eines ersten Clusters B zur Initiierung der ersten Funktion C von der Steuerungsvorrichtung 2, wobei ein weiteres Sensorsignal D' eines weiteren Sensors 5 eines weiteren Clusters E ebenfalls zur Initiierung der Funktion C führen kann. Die Signale A' und D' können einander entsprechen oder unterschiedlich zueinander ausgebildet sein. In dem in Fig. 43 dargestellten Ausführungsbeispiel sind die Cluster B und E im selben Betriebszustand angeordnet. Grundsätzlich könnten die Cluster B, E auch in verschiedenen Betriebszuständen angeordnet sein.

Nicht dargestellt ist, dass die Steuerungsvorrichtung 2 derart ausgebildet ist, dass ein erstes Belagssignal F und/oder ein erstes Sensorsignal F' eines ersten Clusters G zur Initiierung einer ersten Funktion H führt und dass ein, insbesondere zu dem ersten Belagssignal F zumindest im Wesentlichen gleiches, zweites Belagssignal I und/oder ein, insbesondere zu dem ersten Sensorsignal F' zumindest im Wesentlichen gleiches, zweites Sensorsignal I' eines zweiten Clusters J zur Initiierung einer sich von der ersten Funktion H unterscheidenden zweiten Funktion K führt. Der erste Cluster G kann in dem ersten Betriebszustand L und der zweite Cluster J in dem zweiten Betriebszustand M hinterlegt sein. Alternativ oder zusätzlich ist es auch möglich, dass die Cluster G und J im gleichen Betriebszustand hinterlegt sind.

Weiter nicht dargestellt ist, dass die Steuerungsvorrichtung 2 derart ausgebildet ist, dass die gemeinsame Verarbeitung der Belagssignale 6 bzw. der Sensorsignale 42 der in einem Cluster 40, 41 angeordneten Belagselemente 3 bzw. Sensoren 5 derart erfolgt, dass die Belagssignale 6 bzw. Sensorsignale 42 gleichwertig verarbeitet werden. Eine gleichwertige Verarbeitung ist insbesondere derart zu verstehen, dass die Belagssignale 6 bzw. Sensorsignale 42 in der Steuerungsvorrichtung 2 so verarbeitet werden, als ob sie von demselben Belagselement 3 stammen würden.

Die Fig. 1 zeigt, dass die Steuerungsvorrichtung 2 eine Mehrzahl unterschiedlicher Systemmodi 7a, 7b, 7c als Betriebszustände zur Verarbeitung der Belagssignale 6 und zur Initiierung von Funktionen 8a, 8b, 8c, wie schematisch in Fig. 2 dargestellt, aufweist.

Nicht dargestellt ist, dass die Systemmodi 7a, 7b, 7c auch zur Verarbeitung von Sensorsignalen 42 ausgebildet sind.

Weiter nicht dargestellt ist, dass in der Steuerungsvorrichtung 2 für jeden Systemmodus 7a, 7b, 7c wenigstens ein jeweils wenigstens ein Belagselement 3 oder wenigstens zwei Belagselemente 3 zur gemeinsamen und/oder gebündelten Verarbeitung der Belagssignale 6 umfassendes Cluster 40, 41 hinterlegt ist. Alternativ oder zusätzlich kann auch vorgesehen sein, dass in der Steuerungsvorrichtung 2 für jeden Systemmodus 7a, 7b, 7c wenigstens ein jeweils wenigstens ein Sensor 5 oder wenigstens zwei Sensoren 5 zur gemeinsamen und/oder gebündelten Verarbeitung der Sensorsignale 42 umfassendes Cluster 40, 41 hinterlegt ist. Die Systemmodi 7a, 7b, 7c können sich voneinander durch zwei sich voneinander unterscheidende Cluster 40, 41 unterscheiden.

In Fig. 19 ist schematisch dargestellt, dass der Steuerungsvorrichtung 2 wenigstens eine Auswahleinrichtung 9 zur Auswahl von einzelnen Systemmodi 7a, 7b, 7c und/oder der einzelnen Betriebszustände zugeordnet ist. So kann über die Auswahleinrichtung 9 ein Wechsel der Betriebszustände - beispielsweise durch eine veränderte Clusterbildung - zur späteren Verarbeitung der Signale veranlasst werden.

Nicht dargestellt ist, dass die Steuerungsvorrichtung 2 derart ausgebildet ist, dass die Auswahl des Systemmodus 7a, 7b, 7c und/oder des Betriebszustands in Abhängigkeit von einem weiteren Parameter von der Steuerungsvorrichtung 2 erfolgt. Insbesondere kann der weitere Parameter von dem Belagssignal 6 und/oder von dem Sensorsignal 42 und/oder von einer externen Überwachungseinrichtung 18 erfassten Überwachungsinformation abhängen.

In den Fig. 40 und 41 ist dargestellt, dass in zwei unterschiedlichen Betriebszuständen wenigstens ein Cluster 40 dasselbe Belagselement 3 umfasst. Letztlich wird der Cluster 40 von dem Wechsel des Betriebszustandes in dem in Fig. 40 und 41 dargestellten Ausführungsbeispiel nicht beeinflusst und beinhaltet in beiden Betriebszuständen die gleichen Belagselemente 3.

Weiter kann in weiteren Ausführungsformen vorgesehen sein, dass wenigstens zwei in unterschiedlichen Systemmodi und/oder Betriebszuständen ausgewählte Cluster 40, 41 dasselbe Belagselement 3 und/oder denselben Sensor 5 umfassen.

In Fig. 41 ist dargestellt, dass ein Belagselement 3 und/oder ein Sensor 5 in einem Betriebszustand in wenigstens zwei (d.h. in mehreren) Cluster 40, 41 angeordnet sein kann.

Nicht dargestellt ist, dass die unterschiedlichen Systemmodi zur Ausführung von unterschiedlichen Funktionen ausgebildet sind, so dass ein erstes Belagssignal N und/oder ein erstes Sensorsignal O eines Clusters P in einem ersten Systemmodus Q zur Initiierung einer ersten Funktion R führt und dass das erste Belagssignal N und/oder das erste Sensorsignal O des ersten Clusters P in dem zweiten Systemmodus S zur Initiierung wenigstens einer sich von der ersten Funktion R unterscheidenden zweiten Funktion T führt.

Die Auswahl der Cluster 40, 41 für den jeweiligen Systemmodus 7a, 7b, 7c und/oder dem jeweiligen Betriebszustand kann entsprechend durch ein in der Steuerungsvorrichtung 2 hinterlegtes Steuerungsprotokoll 19, wie dies schematisch in der Fig. 17 gezeigt ist, erfolgen. Fig. 17 zeigt nicht, dass das Steuerungsprotokoll 19 die Clusterbildung verändert.

Weiter ist nicht dargestellt, dass die Vorgabe des Steuerungsprotokolls 19 für die Auswahl der Cluster 40, 41 für den jeweiligen Systemmodus 7a, 7b, 7c und/oder den Betriebszustand entsprechend einer über die Auswahleinrichtung 9 durchgeführten Auswahl veränderbar ist. Letztlich kann der Systemmodus und/oder der Betriebszustand auch über die Auswahleinrichtung 9, vorzugsweise kontinuierlich, konfigurierbar bzw. adaptierbar sein.

In dem in Fig. 41 dargestellten Ausführungsbeispiel ist vorgesehen, dass eine Mehrzahl von Belagselementen 3 in einem Cluster 40, 41 angeordnet ist. In weiteren Ausführungsformen können in einem Cluster 40, 41 zwischen 1 bis 1000 Belagselemente 3 oder Sensoren 5 zusammengefasst werden. Ein Cluster 40, 41 kann sich jedoch auch aus einem einzigen Belagselement 3 oder Sensor 5 zusammensetzen.

Nicht dargestellt ist, dass die in einem Cluster 40, 41 zusammengefassten Belagselemente 3 oder Sensoren 5 räumlich voneinander beabstandet sind und nicht unmittelbar aneinander angrenzen. Bei dem in Fig. 40 dargestellten Ausführungsbeispiel ist vorgesehen, dass die Belagselemente 3 miteinander verbunden sind und einen durchgehenden Bereich des Belags 4 bilden. In weiteren Ausführungsformen kann vorgesehen sein, dass der durch die Belagselemente 3 oder Sensoren 5 eines Clusters 40, 41 gebildete Bereich unterbrochen ist. Dieser unterbrochene Bereich kann sich beispielsweise auch über unterschiedliche Räume erstrecken, so dass letztliche eine Sensorfläche gebildet wird.

Weiter ist nicht dargestellt, dass bei der Verarbeitung des Belagssignals 6 und/oder des Sensorsignals 42 in der Steuerungsvorrichtung 2 die Position des Belagselementes 3 und/oder des Sensors 5 berücksichtigt wird, insbesondere wobei in der Steuerungsvorrichtung 2 die Position der einzelnen Belagselemente 3 und/oder Sensoren 5 hinterlegt ist.

Bei dem in Fig. 38 dargestellten Ausführungsbeispiel ist nicht dargestellt, dass dem Sensor 5 des Belagselementes 3 eine Sensor-Sendeeinrichtung zur, vorzugsweise drahtlosen, Übertragung des Sensorsignals 42 zugeordnet ist.

Fig. 7 zeigt, dass das Belagselement 3 eine mit dem Sensor 5 gekoppelte Sendeeinrichtung 10 zur, vorzugsweise drahtlosen, Übertragung des Belagssignals 6 aufweist.

In Fig. 6 ist dargestellt, dass die Steuerungsvorrichtung 2 eine Kommunikationseinrichtung 11 zum, vorzugsweise drahtlosen, Empfangen des Belagssignals 6 aufweist. Nicht dargestellt ist, dass die Kommunikationseinrichtung 11 auch alternativ oder zusätzlich zum Empfangen des Sensorsignals 42 ausgebildet sein kann. Weiter zeigt Fig. 6, dass die Kommunikationseinrichtung 11 zur Übertragung wenigstens eines Steuerungssignals 12 zur Ausführung von der wenigstens einen Funktion 8a, 8b, 8c des ausgewählten Systemmodus 7a, 7b, 7c aufweist.

### Bezugszeichenliste:

- 1: Steuerungssystem
- 2: Steuerungsvorrichtung
- 3: Belagselement
- 4: Belag
- 5: Sensor
- 6: Belagssignal
- 7a: Systemmodus
- 7b: Systemmodus
- 7c: Systemmodus
- 8a: Funktion
- 8b: Funktion
- 8c: Funktion
- 9: Auswahleinrichtung
- 10: Sendeeinrichtung
- 11: Kommunikationseinrichtung
- 12: Steuerungssignal
- 13: Verarbeitungseinrichtung
- 14: weitere Verarbeitungseinrichtung
- 15: Schnittstelle
- 16: Cloud-System
- 17: Empfangseinrichtung
- 18: Überwachungseinrichtung
- 19: Steuerungsprotokoll
- 20: Speichereinrichtung
- 21: Messeinrichtung
- 22: Nutzer
- 23: Sensor
- 24: Belagselement
- 25: Zugangskontrollmittel
- 26: Sensorfläche
- 27: Trägerplatte
- 28: Deckschicht
- 29: Oberseite von 3
- 30: Funktionsschicht
- 31: Bezugspunkt
- 32: Funktionseinheit
- 33: Zuordnungssignal
- 34: Zuordnungseinrichtung
- 35: rasterartige Darstellung
- 36: Verlegeplan
- 37: Energieversorgungseinrichtung
- 38: Knotenpunkt
- 39: weiteres Belagselement
- 40: Cluster
- 41: Cluster
- 42: Sensorsignal

- A: erstes Belagssignal
- A': erstes Sensorsignal
- B: erster Cluster
- C: erste Funktion
- D: zweites Belagssignal
- D': zweites Sensorsignal
- E: zweiter Cluster
- F: erstes Belagssignal
- F': ersten Sensorsignal
- G: erster Cluster
- H: erste Funktion
- I: zweites Belagssignal
- I': zweites Sensorsignal
- J: zweiter Cluster
- K: zweite Funktion
- L: erster Betriebszustand
- M: zweiter Betriebszustand
- N: erstes Belagssignal
- O: erstes Sensorsignal
- P: Cluster
- Q: erster Systemmodus
- R: erste Funktion
- S: zweiter Systemmodus
- T: zweite Funktion
- Z': erster Betriebszustand
- Z": zweiter Betriebszustand
- Z': erster Betriebszustand
- Z": zweiter Betriebszustand

## Patentansprüche

1. Verfahren zur Zuordnung einer Position in Bezug zu einem räumlichen Bezugspunkt (31) von wenigstens einem als Plattenkörper ausgebildeten Belagselement (3) eines Bodenbelags (4) zur Einbindung in ein Steuerungssystem (1), wobei das Belagselement (3) eine eine elektrische Funktionalität aufweisende Funktionseinheit (32) aufweist,
wobei das Belagselement (3) eine Trägerplatte (27) und eine oberseitige Deckschicht (28) oberhalb von der Trägerplatte (27) aufweist,
wobei eine Steuerungsvorrichtung (2) des Steuerungssystems (1) nach Empfangen eines, vorzugsweise drahtlos übermittelten, das wenigstens eine Belagselement (3) charakterisierende Zuordnungssignals (33) die Position des Belagselements (3) bestimmt und speichert,
**dadurch gekennzeichnet, dass** die Belagselemente (3) nacheinander mit Energie, insbesondere Strom, versorgt werden und unmittelbar nach der Übermittlung von Energie an die Steuerungsvorrichtung (2) das Belagssignal (6) als Zuordnungssignal (33) übermitteln, so dass die Zuordnung der Positionen der Belagselemente (3) entsprechend des Empfangszeitpunktes des jeweiligen Belagssignals (6) von der Steuerungsvorrichtung (2) festgelegt wird.

2. Verfahren nach Anspruch 1, **dadurch gekennzeichnet, dass** das Belagselement (3) ein Belagssignal (6) als Zuordnungssignal (33) an die Steuerungsvorrichtung (2) des Steuerungssystems (1), vorzugsweise drahtlos, übertragt, wobei die Steuerungsvorrichtung (2) nach Empfangen des Belagssignals (6) die Position des Belagselementes (3) bestimmt und speichert.

3. Verfahren nach Anspruch 1 oder 2, **dadurch gekennzeichnet, dass** das Belagssignal (6) eine das jeweilige Belagselement (3) identifizierende Belagselement-Identifikationsinformation enthält und/oder
dass die Steuerungsvorrichtung (2) zusätzlich zur Position des jeweiligen Belagselementes (3) eine Steuerungsvorrichtung-Identifikationsinformation speichert und die Steuerungsvorrichtung-Identifikationsinformation dem jeweiligen Belagselement (3) zuweist, insbesondere wobei
die Steuerungsvorrichtung (2) die Position des Belagselements (3) nach der Zuordnung durch Abgleich der Belagselement-Identifikationsinformation und der Steuerungsvorrichtung-Identifikationsinformation bestimmt.

4. Verfahren nach einem der vorhergehenden Ansprüche, **dadurch gekennzeichnet, dass** einer Mehrzahl von Belagselementen (3) jeweils eine Position von der Steuerungsvorrichtung (2) zugeordnet wird.

5. Verfahren nach einem der vorhergehenden Ansprüche, **dadurch gekennzeichnet, dass** die Zuordnung der Position des Belagselementes (3) nach der Verlegung der Belagselemente (3) zur Bildung des Belags (4) erfolgt.

6. Verfahren nach einem der vorhergehenden Ansprüche, **dadurch gekennzeichnet, dass** eine Zuordnungseinrichtung (34), insbesondere ein mobiles Endgerät, das Zuordnungssignal (33) für das eine Belagselement (3) an die Steuerungsvorrichtung (2) übermittelt.

7. Verfahren nach einem der vorhergehenden Ansprüche, **dadurch gekennzeichnet, dass** bei der Zuordnung der Position eines Belagselementes (3) die bereits bestimmte Position wenigstens eines zugeordneten Belagselementes (3) und/oder das bereits empfangene Zuordnungssignal (33), insbesondere das Belagssignal (6), von wenigstens einem zugeordneten Belagselement (3) berücksichtigt wird.

8. Verfahren nach einem der vorhergehenden Ansprüche, **dadurch gekennzeichnet, dass** die Steuerungsvorrichtung (2) aus den Position(en) des/der Belagselemente(s) (3) eine räumliche Abbildung, insbesondere eine Flächenabbildung, ermittelt und/oder dass die Steuerungsvorrichtung (2) den Position(en) einen Vergleichspunkt in einer in der Steuerungsvorrichtung (2) hinterlegten räumlichen Abbildung, insbesondere einer Flächenabbildung, zuordnet, und/oder
dass die Positionen für eine rasterartige Darstellung (35) in der Steuerungsvorrichtung (2) gespeichert werden.

9. Verfahren nach einem der vorhergehenden Ansprüche, **dadurch gekennzeichnet, dass** wenigstens einem Belagselement (3) Geodaten zugewiesen werden, die an die Steuerungsvorrichtung (2) mit dem Belagssignal (6) als Zuordnungssignal (33) übertragen werden, insbesondere wobei auf Grundlage der Geodaten des wenigstens einen Belagselementes (3) die Zuordnung der Positionen der zugeordneten und/oder zuzuordnenden Belagselemente (3) erfolgt, und/oder dass die Steuerungsvorrichtung (2) bei der Ermittlung der Position des Belagselementes (3) weitere Parameter, insbesondere die Abmaße des Belagselementes (3) und/oder die Größe des Belages (4), berücksichtigt.

10. Verfahren nach einem der vorhergehenden Ansprüche, **dadurch gekennzeichnet, dass** das Zuordnungssignal (33) des Belagselementes (3) mittels, vorzugsweise drahtloser, Übertragungsverfahren, insbesondere mittels Bluetooth-, VLC-, WLAN-, Z-Wave-, Ultraschall-, Infrarot- und/oder Laser-Übertragung, an die Steuerungsvorrichtung (2), insbesondere von dem Belagselement (3) und/oder der Zuordnungseinrichtung (34), übermittelt wird und/oder
dass die Übertragung des Belagssignals (6) und/oder des Zuordnungssignals (33) mittels optischer und/oder elektromagnetischer Informationsübertragung erfolgt.

11. Verfahren nach einem der vorhergehenden Ansprüche, **dadurch gekennzeichnet, dass** das Belagselement (3), insbesondere die Funktionseinheit, wenigstens einen Sensor (5) zur Ermittlung einer physikalischen und/oder chemischen Eigenschaft aufweist, insbesondere wobei die vom Sensor (5) erfassten Messdaten mit dem Belagssignal (6) an die Steuerungsvorrichtung (2) übertragen werden, insbesondere
wobei dem wenigstens einen Sensor (5) des Belagselementes (3) von der Steuerungsvorrichtung (2) eine Sensor-Bezugsposition zugeordnet wird und/oder insbesondere
wobei die im Belagssignal (6) enthaltenen und an die Steuerungsvorrichtung (2) mit dem Belagssignal (6) übertragenen Messdaten des wenigstens einen Sensors (5) des Belagselementes (3) mit einer Sensor-Identifikationsinformation verknüpft sind, die von der Steuerungsvorrichtung (2) zur Identifikation des Sensors (5) ausgewertet wird.

## Claims

1. Method for assigning a position in relation to a spatial reference point (31) of at least one covering element (3) of a floor covering (4) in the form of a plate body for integration into a control system (1), wherein the covering element (3) has a functional unit (32) having an electrical functionality,
wherein the covering element (3) comprises a carrier plate (27) and a top cover layer (28) above the carrier plate (27),
wherein a control device (2) of the control system (1) determines and stores the position of the covering element (3) after receiving an assignment signal (33) characterizing the at least one covering element (3), which signal is preferably transmitted wirelessly,
wherein the covering elements (3) are successively supplied with energy, in particular current, and transmit immediately after the transmission of energy the covering signal (6) as an assignment signal (33) to the control device (2), so that the assignment of the positions of the covering elements (3) is determined by the control device (2) in accordance with the time of receipt of the respective covering signal (6).

2. Method according to claim 1, **characterized in that** the covering element (3) transmits a covering signal (6) as an assignment signal (33) to the control device (2) of the control system (1), preferably wirelessly, wherein the control device (2) determines and stores the position of the covering element (3) after receiving the covering signal (6).

3. Method according to claim 1 or 2, **characterized in that** the covering signal (6) contains covering element identification information identifying the respective covering element (3), and/or
**in that** the control device (2) stores control device identification information in addition to the position of the respective covering element (3) and assigns the control device identification information to the respective covering element (3), in particular wherein
the control device (2) determines the position of the covering element (3) after the assignment by matching the covering element identification information and the control device identification information.

4. Method according to one of the preceding claims, **characterized in that** a plurality of covering elements (3) are each assigned a position by the control device (2).

5. Method according to one of the preceding claims, **characterized in that** the assignment of the position of the covering element (3) takes place after the laying of the covering elements (3) to form the covering (4).

6. Method according to one of the preceding claims, **characterized in that** an assignment device (34), in particular a mobile terminal, transmits the assignment signal (33) for the one covering element (3) to the control device (2).

7. Method according to one of the preceding claims, **characterized in that**, when assigning the position of a covering element (3), the already determined position of at least one assigned covering element (3) and/or the already received assignment signal (33), in particular the covering signal (6), of at least one assigned covering element (3) is taken into account.

8. Method according to one of the preceding claims, **characterized in that** the control device (2) determines a spatial image, in particular an area image, from the position(s) of the covering element(s) (3), and/or **in that** the control device (2) assigns to the position(s) a comparison point in a spatial image, in particular an area image, stored in the control device (2), and/or
**in that** the positions for a grid-like representation (35) are stored in the control device (2).

9. Method according to one of the preceding claims, **characterized in that** geodata are assigned to at least one covering element (3), which geodata are transmitted to the control device (2) with the covering signal (6) as assignment signal (33), in particular wherein the assignment of the positions of the assigned and/or to-be-assigned covering elements (3) takes place on the basis of the geodata of the at least one covering element (3), and/or
**in that** the control device (2) takes into account further parameters, in particular the dimensions of the covering element (3) and/or the size of the covering (4), when determining the position of the covering element (3).

10. Method according to one of the preceding claims, **characterized in that** the assignment signal (33) of the covering element (3) is transmitted to the control device (2), in particular from the covering element (3) and/or the assignment device (34), by means of, preferably wireless, transmission methods, in particular by means of Bluetooth, VLC, WLAN, Z-Wave, ultrasound, infrared and/or laser transmission, and/or in that the transmission of the covering signal (6) and/or of the assignment signal (33) takes place by means of optical and/or electromagnetic information transmission.

11. Method according to one of the preceding claims, **characterized in that** the covering element (3), in particular the functional unit, has at least one sensor (5) for determining a physical and/or chemical value, in particular the measurement data detected by the sensor (5) being transmitted with the covering signal (6) to the control device (2), in particular
wherein a sensor reference position is assigned to the at least one sensor (5) of the covering element (3) by the control device (2) and/or in particular
wherein the measurement data of the at least one sensor (5) of the covering element (3) contained in the covering signal (6) and transmitted to the control device (2) with the covering signal (6) are linked with sensor identification information which is evaluated by the control device (2) for identifying the sensor (5).

## Revendications

1. Procédé d'attribution d'une position par rapport à un point de référence spatial (31) d'au moins un élément de revêtement (3), réalisé sous forme de corps de plaque, d'un revêtement de sol (4) pour l'intégration dans un système de commande (1), dans lequel l'élément de revêtement (3) comprend une unité fonctionnelle (32) comprenant une fonctionnalité électrique,
dans lequel l'élément de revêtement (3) comprend une plaque de support (27) et une couche de couverture supérieure (28) au-dessus de la plaque de support (27),
dans lequel un dispositif de commande (2) du système de commande (1) détermine et mémorise la position de l'élément de revêtement (3) après réception d'un signal d'attribution (33), transmis de préférence sans fil, caractérisant l'au moins un élément de revêtement (3),
dans lequel les éléments de revêtement (3) sont alimentés successivement en énergie, en particulier en courant, et transmettent le signal de revêtement (6) en tant que signal d'attribution (33) immédiatement après la transmission d'énergie au dispositif de commande (2), de sorte que l'attribution des positions des éléments de revêtement (3) est déterminée par le dispositif de commande (2) en fonction de l'instant de réception du signal de revêtement (6) respectif.

2. Procédé selon la revendication 1, **caractérisé en ce que** l'élément de revêtement (3) transmet un signal de revêtement (6) en tant que signal d'attribution (33) au dispositif de commande (2) du système de commande (1), de préférence sans fil, le dispositif de commande (2) déterminant et mémorisant la position de l'élément de revêtement (3) après réception du signal de revêtement (6).

3. Procédé selon la revendication 1 ou 2, **caractérisé en ce que** le signal de revêtement (6) contient une information d'identification d'élément de revêtement identifiant l'élément de revêtement (3) respectif et/ou
**en ce que** le dispositif de commande (2) mémorise, en plus de la position de l'élément de revêtement (3) respectif, une information d'identification du dispositif de commande et attribue l'information d'identification du dispositif de commande à l'élément de revêtement (3) respectif, en particulier dans lequel
le dispositif de commande (2) détermine la position de l'élément de revêtement (3) après l'attribution en comparant l'information d'identification d'élément de revêtement et l'information d'identification de dispositif de commande.

4. Procédé selon l'une des revendications précédentes, **caractérisé en ce qu'**une position est respectivement attribuée à une pluralité d'éléments de revêtement (3) par le dispositif de commande (2).

5. Procédé selon l'une des revendications précédentes, **caractérisé en ce que** l'attribution de la position de l'élément de revêtement (3) est effectuée après la pose des éléments de revêtement (3) pour former le revêtement (4).

6. Procédé selon l'une des revendications précédentes, **caractérisé en ce qu'**un dispositif d'attribution (34), en particulier un terminal mobile, transmet le signal d'attribution (33) pour l'un des éléments de revêtement (3) au dispositif de commande (2).

7. Procédé selon l'une des revendications précédentes, **caractérisé en ce que**, lors de l'attribution de la position d'un élément de revêtement (3), la position déjà déterminée d'au moins un élément de revêtement (3) attribué et/ou le signal d'attribution (33) déjà reçu, en particulier le signal de revêtement (6), d'au moins un élément de revêtement (3) attribué est pris en compte.

8. Procédé selon l'une des revendications précédentes, **caractérisé en ce que** le dispositif de commande (2) détermine une représentation spatiale, en particulier une représentation de surface, à partir de la/des position(s) du/des éléments de revêtement (3), et/ou **en ce que** le dispositif de commande (2) associe à la ou aux positions un point de comparaison dans une représentation spatiale, en particulier une représentation de surface, mémorisée dans le dispositif de commande (2), et/ou en ce que les positions pour une représentation en forme de trame (35) sont mémorisées dans le dispositif de commande (2).

9. Procédé selon l'une des revendications précédentes, **caractérisé en ce que** des données géographiques sont attribuées à au moins un élément de revêtement (3), lesquelles sont transmises au dispositif de commande (2) avec le signal de revêtement (6) comme signal d'attribution (33), en particulier l'attribution des positions des éléments de revêtement (3) attribués et/ou à attribuer étant effectuée sur la base des données géographiques du au moins un élément de revêtement (3), et/ou en ce que le dispositif de commande (2) tient compte d'autres paramètres, en particulier des dimensions de l'élément de revêtement (3) et/ou de la taille du revêtement (4), lors de la détermination de la position de l'élément de revêtement (3).

10. Procédé selon l'une des revendications précédentes, **caractérisé en ce que** le signal d'attribution (33) de l'élément de revêtement (3) est transmis au dispositif de commande (2), en particulier par l'élément de revêtement (3) et/ou le dispositif d'attribution (34), au moyen de procédés de transmission, de préférence sans fil, en particulier au moyen d'une transmission Bluetooth, VLC, WLAN, Z-Wave, par ultrasons, infrarouge et/ou laser, et/ou
**en ce que** la transmission du signal de revêtement (6) et/ou du signal d'attribution (33) s'effectue au moyen d'une transmission d'informations optique et/ou électromagnétique.

11. Procédé selon l'une des revendications précédentes, **caractérisé en ce que** l'élément de revêtement (3), en particulier l'unité fonctionnelle, comprend au moins un capteur (5) pour déterminer une propriété physique et/ou chimique, en particulier les données de mesure saisies par le capteur (5) étant transmises avec le signal de revêtement (6) au dispositif de commande (2), en particulier
dans lequel une position de référence de capteur est attribuée à l'au moins un capteur (5) de l'élément de revêtement (3) par le dispositif de commande (2) et/ou en particulier
dans lequel les données de mesure de l'au moins un capteur (5) de l'élément de revêtement (3) contenues dans le signal de revêtement (6) et transmises au dispositif de commande (2) avec le signal de revêtement (6) sont combinées avec une information d'identification de capteur qui est évaluée par le dispositif de commande (2) pour l'identification du capteur (5).
